(19) Europäisches Patentamt
European Patent Office
Office européen des brevets

(11) **EP 1 930 814 A1**

(12) **EUROPEAN PATENT APPLICATION**
published in accordance with Art. 153(4) EPC

(43) Date of publication:
**11.06.2008 Bulletin 2008/24**

(51) Int Cl.:
*G06F 17/21* (2006.01)     *H04N 1/387* (2006.01)

(21) Application number: **06797230.7**

(22) Date of filing: **31.08.2006**

(86) International application number:
**PCT/JP2006/317270**

(87) International publication number:
**WO 2007/026845 (08.03.2007 Gazette 2007/10)**

(84) Designated Contracting States:
**DE FR GB**

(30) Priority: **31.08.2005 JP 2005252770**

(71) Applicant: **Sharp Kabushiki Kaisha**
**Osaka-shi, Osaka 545-8522 (JP)**

(72) Inventors:
• **YAGI, Ryouta**
**Nara 632-0033 (JP)**

• **MATSUBARA, Takanobu**
**Osaka 536-008 (JP)**
• **TERADA, Satoshi**
**Nara 630-8317 (JP)**

(74) Representative: **Müller - Hoffmann & Partner**
**Patentanwälte,**
**Innere Wiener Strasse 17**
**81667 München (DE)**

(54) **DATA GENERATION DEVICE, DATA GENERATION METHOD, AND SYSTEM**

(57) A generation rule acquiring/accumulating section (202), a target form acquiring/accumulating section (203), and a list data acquiring/ accumulating section (204) acquires input data, template data, and a generation rule, respectively, Then, a generation rule interpreting/UI description generating section (205) reads contents of the files thereof, interprets the read generation rule, and, according to the interpreted generation rule, generates a UI description from the read list data and target form. Because the target form can be flexibly edited by changing the list data, a UI description can be flexibly generated.

FIG. 2

**Description**

TECHNICAL FIELD

The present invention relates to a technique of generating data for allowing a user to use functions of devices and services offered via the Internet. Particularly, the present invention relates to a technique of generating data from a template.

BACKGROUND ART

Conventionally, by means of software dedicated for an information presentation scheme and a data input scheme (both of which are hereinafter referred to as "user interface" and abbreviated as "UI") to be used when the user utilizes functions of devices, the UI has been realized in home information appliances such as a mobile phone, a digital television receiver, and a hard disk recorder.

With the diversification of functions of home information appliances, there has been recently known a method of generating UI by using a standard data format of XML (extensible Markup Language) such as XHTML (extensible HyperText Markup Language), SVG (Scalable Vector Graphics), and SMIL (Synchronized Multimedia Integration Language), and operating the UI by means of browser software adaptable to the format, for reducing the number of man-hours for software development. Hereinafter, the UI described in XML is abbreviated as "UI description".

As this kind of technique, techniques of generating UI descriptions by using UI description templates are disclosed in Patent Documents 1 and 2.

The technique disclosed in Patent Document 1 is such that a digital camera performs addition of a title to an acquired image, slide show generation, layout task, and other operations. In this technique, a mode is switched to an album generation mode through a mode change switch to arrange the acquired image into a desired layout and output it. The user selects a desired template from templates stored beforehand in a storage medium, and selects images to be inserted into the selected template from images stored in a storage section. The selected template is described in SVG and contains <image> elements whose number corresponds to the number of images to be inserted into the template. File names of image data selected by a control section are inserted into the <image> elements and then inserted into a storage medium. In this manner, the layout task is performed. In the case of slide show generation and title addition, a camera itself can also do the tasks by preparing an SVG template and embedding image data file names into the SVG template.

The technique disclosed in Patent Document 1 is similar to the technique of the present invention in that a part of a template is replaced by input data to generate UI.

However, a device disclosed in Patent Document 1 has the following problem. That is, a process for generating UI description by using a template for UI description is limited only to the operation of embedding a still image stored in a digital camera, and cannot be changed to another operation.

Also, the device disclosed in Patent Document 1 has the limitation that the number of still images embedded into the template corresponds to the number of <image> elements contained beforehand in the template. For example, if the number of still images to be embedded in an album is larger than the maximum number of still images that can be embedded into the template, it is impossible to use the template.

Besides, the device disclosed in Patent Document 1 can capture still image data to be embedded into the template only from a digital camera capable of executing UI description. For example, still image data acquired externally via a network or the like cannot be embedded.

The technique disclosed in Patent Document 2 is a technique of generating and offering a UI content (corresponding to a UI description of the present invention) that is a description to indicate a series of operational procedure performed by a terminal device and define a user interface. In this technique, upon receipt of a request for generation of UI content from a terminal device, a UI content generating device interprets UI content generating data (corresponding to template data of the present invention) indicative of a position where data is to be replaced and a data source of data used for the replacement, and replaces data at the data replacement position by data acquired from the designated data source, thereby generating the UI content.

The technique disclosed in Patent Document 2 is similar to the technique of the present invention in that the UI content is generated by replacing a part of the UI content generating data and in that the data source of the data used for the replacement can be changed.

However, the technique disclosed in Patent Document 2 has the following problem. That is, since the number of sets of data to be used for the replacement with respect to one UI content generating data is predetermined, variation in number of data to be used for the replacement cannot be handled by, for example, the operation of copying part of one UI content generating data according to the number of data to be used for the replacement. Further, since the UI content generating data including the description of the replacement position is integrated with the generation rule including the description of the data source, only one of the UI content generating data and the generation rule cannot be changed. Still further, the technique disclosed in Patent Document 2 requires a UI content generation server on the network, and the UI content cannot be generated by the terminal device alone.
[Patent Document 1]
Japanese Unexamined Patent Publication No. 176216/2005 (*Tokukai* 2005-176216; published on June 30, 2005)
[Patent Document 2]
Japanese Unexamined Patent Publication No. 24137/2006 (*Tokukai* 2006-24137; published on January 26, 2006)

DISCLOSURE OF INVENTION

The present invention is attained in view of the problems mentioned above. The object of the present invention is to provide a method of flexibly generating data that utilizes a template, and a data generating device that can execute a method capable of flexibly changing editing operation with respect to a template, a method capable of flexibly handling a case in which the number of input data to be embedded in the template varies, and a method capable of flexibly changing a source of input data to be embedded into the template.

(1) Generation Based on Generation Rule, Input Data, and Template Data

A data generating device of the present invention which generates generation data by processing template data serving as a template used for generating the generation data, the data generating device includes: data acquisition means to acquire input data, the template data, and a generation rule; and template data rewriting means to edit the template data, according to the generation rule with the use of the input data, and generate the generation data from edited template data.
In this arrangement, the data acquisition means acquires input data, template data, and a generation rule. Then, the template data rewriting means reads contents of the input data, template data, and the generation rule, and interprets the read generation rule. The template data rewriting means generates generation data from the read input data and template data read, according to the interpreted generation rule.
According to the aforesaid arrangement, different from a method of using fixed template data according to a conventional technique, the template data is edited according to information from the input data and generation data is generated from the edited template data, when the generation data is generated. Moreover, by providing the generation rule explicitly, a generation rule that is conventionally fixed and included in a data generating device can also be flexibly changed. Accordingly, it becomes possible to flexibly change generation data to be generated, only by changing the input data.

(2) General Generation Rule

In the data generating device of the present invention: the generation rule includes a generation rule specifying a position to be edited in the template data; and the template data rewriting means edits the position to be edited in the template data, according to the generation rule specifying a position to be edited.
In the arrangement, the template data rewriting means edits the template data by editing the position to be edited in the template data according to the generation rule, and generates generation data. The position to be edited is explicitly specified in the template data and edited in the same template data.
According to the arrangement, the position to be edited in the template data can be specified. This makes it possible to flexibly edit the template data and to flexibly change the generation data.

(3) Copy Generation Rule

In the data generating device of the present invention: the generation rule includes a copy generation rule specifying a position to be copied in the template data; and the template data rewriting means edits the template data by copying the position to be copied, according to the copy generation rule.
In the arrangement, the template data rewriting means edits the template data by copying a position to be copied in the template data, according to the copy generation rule, and generates the generation data. The position to be copied is explicitly specified in the template data and the position to be copied is copied in the same template data.
According to the arrangement, the position to be copied in the template data can be specified. This makes it possible to flexibly edit the template data and to flexibly change the generation data.

(4) Calculation of Number of Times to Copy from Input Data

In the data generating device of the present invention: the copy generation rule further includes a rule for calculating a number of times to copy the position to be copied, from a number of information that is described in the input data and used to replace a part of the template data and a number of the information to be described in each resulting copy of the position to be copied; and the template data rewriting means edits the template data by copying the position to be copied in the template for the number of times to copy.

In the arrangement, the template data rewriting means calculates the number of times to copy the position to be copied according to the copy generation rule, from a number of information that is described in the input data and used to replace a part of the template data and a number of the information to be described in each resulting copy of the position to be copied.In the template data, when copying is carried out, the position to be copied is treated as a unit. In this copying, the number of the information that can be described in the one unit is limited. Accordingly, for allowing all the information in the input data to be described in the generation data, the total number of the positions in which the information is described, which total number is obtained by multiplying the number of the information that can be described in the one unit by the number of copies of the one unit, needs to be greater than a total number of the information in the input data. Therefore, by copying the position to be copied in the template data for the aforesaid number of times, the template data is edited so that all the information included in the input data is described in the template data, thereby generating the generation data.

According to the arrangement, it becomes possible to specify the position to be copied in the template data. Moreover, the number of times to copy can be changed in accordance with a change in the number of information described in the input data. This makes it possible to more flexibly edit the template data and to more flexibly change the generation data.

For example, the following specifically explains an album application executed according to the generation data. As one example, it is assumed that the number of still images that a user desires to taken in (the number of information used to replace a part of the template data) and the number of still images that can be embedded in the template data (the number of the information described in each resulting copy of the position to be copied) are described in the input data. In a case where the number of still images that the user desires to take in is greater than the number of still images that can be embedded in the template data, a position in which the still image is to be embedded in the template data can be increased by making a copy for one album window that corresponds to a position to be copied in the template data in accordance with the number of the still images. This generates the generation data that flexibly realizes a user interface of the album application. Therefore, even when the number of still images that a user desires to take in, the user can execute the album application without any trouble.

(5) Replacement Generation Rule

In the data generating device of the present invention: the generation rule includes a replacement generation rule specifying a position to be replaced in the template data and information in the input data which information is to be used in replacement; and the template data rewriting means edits the template data by replacing, according to the replacement generation rule, the position to be replaced with the information to be used in replacement.

In this arrangement, the template data rewriting means edits the template data by replacing, according to the replacement generation rule, a position to be replaced in the template data and generates the generation data. The position to be replaced is explicitly described in the template data.

According to the arrangement, the position to be described in the template data can be specified. This makes it possible to flexibly edit the template data and to flexibly change the generation data.

(6) Index Number Embedding Generation Rule

In the data generating device of the present invention: the generation rule includes an index number embedding generation rule specifying an index number that increases or decreases regularly and differentiates a redundant description in the template data and a position to be replaced with the index number in the template data; and the template data rewriting means edits the template data by sequentially replacing the position to be replaced with the index number, according to the index number embedding generation rule.

In the arrangement, the template data rewriting means edits the template data by replacing the position to be replaced in the template data with an index number that regularly increases or decreases, according to the index number embedding generation rule, and generates the generation data.

According to the arrangement, the position to be replaced in the template data can be replaced with an index number that regularly increases or decreases. Therefore, a redundant description in the template data can be easily differentiated. Accordingly, the template data can be flexibly edited and the generation data can be flexibly changed.

(7) Change in Source of Copy According to Number of Times to Copy

In the data generating device of the present invention: the template data includes separate positions to be copied as a position to be copied in a first copy, a position to be copied in a last copy, and a position to be copied in a copy other than the first copy and the last copy; and the template data rewriting means copies the position to be copied in the first copy when the first copy is carried out, the position to be copied in the last copy when last copy is carried out, and the position to be copied in the copy other than the first copy and the last copy when the copy other than the first copy and the last copy is carried out.

In the arrangement, the template data rewriting means copies the position to be copied in the first copy when the first copy is carried out, the position to be copied in the last copy when the last copy is carried out, and the position to be copied in the copy other than the first copy and the last copy when the copy other than the first copy and the last copy is carried out. Note that the template data rewriting means determines whether the copy to be carried out is the first copy, the last copy, or the copy other than the first and last copies according to the number of times to copy calculated.

According to the arrangement, it becomes possible to change the source of copy for each of the first copy, the last copy, and the copy other than the first and last copies in the template data. Therefore, the template data can be more flexibly edited data and the generation data can be more flexibly changed.

For example, UI descriptions of UIs having difference only in a top page and a last page can be easily generated by specifying a description for a top page as the source of the first copy and a description for a last page as the source of the last copy in the template data.

(8) Copy for Each Page Unit

In the data generating device of the present invention: each of the positions to be copied is data arranged for each page unit that is an information presentation unit.

According to the arrangement, the position to be copied in the template data is arranged for each page unit that is an information presentation unit. Therefore, it becomes possible to easily edit the template data for each page unit.

(9) Template Including Plurality of Files

In the data generating device of the present invention: the template data includes a plurality of files that store the positions to be copied, respectively; the generation rule includes an identifier of each of the plurality of files to be edited; and the template data rewriting means edits the template data by copying the plurality of files specified by the identifier based on the number of times to copy, according to the copy generation rule, and generates generation data.

In the arrangement, the template data rewriting means edits the template data by copying the plurality of files specified by the identifier based on the number of times to copy, according to the copy generation rule, and generates generation data. As a result, various generation data can be generated by changing the number of times to copy the plurality of files.

According to the arrangement, the template data can be divided into a plurality of files. Therefore, the template data can be edited more flexibly and the generation data can be changed more flexibly.

(10) Generation of UI Description

In the data generating device of the present invention: the generation data is user interface data as data in which a user interface is described, the user interface defining an information presentation method or a user operation inputting method in a terminal device with which a user utilizes a function provided to the user.

In the arrangement, the data acquisition means acquires the input data, the template data, and the generation rule. Then, the template data rewriting means reads contents of the input data, the template data, and the generation rule, and interprets the read generation rule. According to the interpreted generation rule, the template data rewriting means generates a user interface data from the read input data and template data.

According to the arrangement, one template rewriting means can generate user interface data of various functions by changing the input data and the generation rule that are explicitly provided for generating the user interface data. Accordingly, it becomes unnecessary to individually develop a program of the user interface. This reduces man-hours for software development. In addition, it becomes possible to realize various user interfaces with respect to functions that the terminal device provides to a user, by changing the generation rule and the template data for generating the user interface data.

(11) Execution of UI Description

The data generating device of the present invention further includes: output means; input means; and user interface execution means that interprets the user interface data, presents information to the user via the output means, accepts a user operation input via the input means, and realizes the user interface.

In the arrangement, the user interface execution means interprets the UI description generated, presents a content to the user according to the interpreted UI description via the output means, accepts a user operation input via the input means, and realizes the user interface.

According to the arrangement, one user interface execution means can realize user interfaces of various functions by changing the generation rule for generating the user interface data. Accordingly, it becomes unnecessary to individually develop a program of each user interface. This reduces man-hours for software development.

(12) External Data Acquisition

The data generating device of the present invention further includes: communication means to carry out data communication via a network, the data acquisition means acquiring at least one of the template data, the input data, and the generation rules via the communication means.

In the arrangement, the data generating device acquires template data, input data, and a generation rule on a network in addition to the template data, the input data, and the generation rule that the data generating device holds in advance.

According to the arrangement, it becomes possible to change a source of the input data to be handled by the data generating device. Therefore, it becomes possible to generate generation data for both of a function to be realized by the data generating device by itself and a function provided via the network. This makes it possible to generate the generation data corresponding to functions in a wider range.

Moreover, according to the arrangement, the data generating device does not need to hold in advance the input data, the template data, and the generation rule that are necessary for generating the generation data. Moreover, any of the input data, the template data, and the generation rule that are provided outside the data generating device can be updated until the input data, the template data, and the generation rule are actually acquired for generating the generation data. Therefore, it becomes possible to flexibly generating the generation data.

(13) Server to Generate UI Description

The data generating device of the present invention further comprising: communication means to carry out data communication via a network; and user interface data transmitting means that receives a request for generation of the user interface data from a requester and transmits to the requester the user interface data that the template data rewriting means generates, via the communication means.

In the arrangement, the data generating device of the present invention receives a request for generation of the user interface data from a requester and transmits to the requester the user interface data that the template data rewriting means generates, via the communication means.

According to the arrangement, the data generating device of the present invention can generate a UI description in response to a request for generation of a UI description from a requester such as other computer or a mobile terminal and transmits the UI description generated to the requester, via the network. Therefore, the data generating device of the present invention can function as a server on the network which server has a function of generating a UI description.

(14) Generation Based on Generation Rule, Input Data, and Meta-Template Data

A data generating device of the present invention that generates template data by processing meta-template data serving as a template used for generating the template data, the data generating device includes: data acquisition means to acquire input data, the meta-template data, and a generation rule; and meta-template data rewriting means to edit the meta-template data with the use of the input data, according to the generation rule, and generate the template data from edited meta-template data.

In the arrangement, the data acquisition means acquires input data, meta-template data, and a generation rule for generating template data. Then, the meta-data rewriting means reads contents of the input data, the meta-template data, and the generation rule for generating template data and interprets the read generation rule for generating template data. According to the interpreted generation rule for generating the template data, the meta-template data rewriting means generates template data from the read input data and meta-template data.

According to the arrangement, the template data is generated with the use of the input data, the meta-template data, and the generation rule for generating template data. Therefore, it becomes possible to flexibly change the generated template data only by changing the input data.

(15) Generation of Template of UI Description

In the data generating device of the present invention: the generation data is template data of user interface data as data in which a user interface is described, the user interface defining an information presentation method or a user operation inputting method in a terminal device with which a user utilizes a function provided to the user.

In the arrangement, the data acquisition means acquires a file storing the input data, a file storing the meta-template data, and a file storing the generation rule. Then, the meta-template data rewriting means reads contents of the files and interprets the read generation rule. According to the interpreted generation rule, the meta-template data rewriting means generates template data of user interface data from the read input data and meta-template data.

According to the arrangement, the data generating device can provide various template data with respect to functions that a terminal device provides to a user, by changing the generation rule for generating template data and the meta-template data.

(16) Serer Generating Template of UI Description

The data generating device of the present invention further includes: communication means to carry out data communication via a network; and template data transmitting means that receives a request for generation of the template data from a requester and transmits to the requester the template data that the meta-template data rewriting means generates, via the communication means.

In the arrangement, the data generating device of the present invention receives a request for generation of template data from a requester and transmits to the requester the template data that the meta-template data rewriting means generates, via the communication means.

According to the arrangement, the data generating device of the present invention can generate the template data in response to a request for generation of template data from a requester such as other computer or a mobile terminal and transmits template data generated to the requester, via the network. Therefore, the data generating device can function as a server on the network which server has a function to generate template data.

(17) Generation Based on Generation Rule, Pre-conversion List Data, and Template Data

A data generating device of the present invention generating list data by processing template data serving as a template used for generating the list data, the data generating device includes: data acquisition means to acquire pre-conversion list data, the template data, and a generation rule; and template data rewriting means to edit the template data, according to the generation rule with the use of the pre-conversion list data, and generate the list data from edited template data.

In the arrangement, data acquisition means acquires pre-conversion list data, template data used for generating list data, and a generation rule for generating list data. Then, the template data rewriting means reads contents of the pre-conversion list data, the template data used for generating list data, and the generation rule for generating list data, and interprets the read generation rule for generating list data. According to the interpreted generation rule for generating list data, the template data rewriting means generates list data from the pre-conversion list data and the template data used for generating list data. An example of the pre-conversion list data is data that lists up contents, which a content server may provide but cannot be directly used to generate a user interface for using the contents in a terminal device. Moreover, an example of the list data is data that is obtained by converting the pre-conversion list data so that the data is used in generation of an interface.

According to the arrangement, the list data can be generated from the pre-conversion list data, the template data for generating list data, and a generation rule for generating list data. Therefore, the list data to be generated can be flexibly changed only by changing the pre-conversion list data.

(18) Generation of Data Used For Generation of UI Description

In the data generating device of the present invention: the list data is data used for generating user interface data as data in which a user interface is described, the user interface defining an information presentation method or a user operation inputting method in a terminal device with which a user utilizes a function provided to the user.

In the arrangement, the data acquisition means acquires pre-conversion list data, template data for generating list data, and a generation rule for generating list data. Then, the template data rewriting means interprets the read generation rule for generating list data. According to the interpreted generation rule for generating list data, the template data rewriting means generates list data for generating user interface data from the read pre-conversion list data and template data for generating list data.

According to the arrangement, the data generating device can provide various list data at generation of a user interface that realizes a function that a terminal device provides to a user, by changing the pre-conversion list data for producing list data.

(19) Server Generating List Data Used in Generation of UI Description

The data generating device of the present invention further includes: communication means to carry out data communication via a network; and list data transmitting means that receives a request for generation of the list data from a requester and transmits to the requester the list data that the template data rewriting means generates, via the communication means.

In the arrangement, the data generating device of the present invention receives a request for generation of the list data from a requester and transmits to the requester the list data that the template data rewriting means generates, via the communication means.

According to the arrangement, the data generating device of the present invention can generate list data in response to a request for generation of the list data from a requester such as other computer or a mobile terminal and transmits to the requester the list data generated, via the network. Therefore, the data generating device can function as a server on the network which server has a function of generating list data.

(20) Method of Generation Based on Generation Rule, Input Data, and Template Data

A data generation method according to the present invention in which generation data is generated by processing template data serving as a template used for generating the generation data includes: a data acquiring process for acquiring input data used for generating the generation data, the template data, and a generation rule for generating the generation data from the input data and the template data; and a template data rewriting process for editing the template data according to the generation rule with the use of the input data acquired by the data acquisition means, and generating generation data.

In this method, input data, template data, and a generation rule are acquired in the data acquiring process. Then, in the template data rewriting process, the contents of the input data, the template data, and the generation rule are read. Thus read generation rule is interpreted, and generation data is generated according to the interpreted generation rule from the read input data and the template data.

According to the method, different from a method of using fixed template data according to a conventional technique, template data is edited in accordance with information from the input data and generation data is generated based on the edited template data, when the generation data is generated. Moreover, the generation rule is explicitly provided. This makes it possible to flexibly change the generation rule that has conventionally been embedded in the data generating device and fixed. Therefore, it becomes possible to flexibly change the generation data to be generated.

(21) Method of Generation Based on Generation Rule, Input Data, and Meta-Template Data

A data generation method according to the present invention in which template data is generated by processing meta-template data serving as a template used for generating template data includes: a data acquiring process for acquiring input data used for generating the template data, the meta-template data, and a generation rule for generating template data from the input data and the meta-template data; and a meta-template data rewriting process for editing the meta-template data according to the generation rule for generating template data with the use of the input data acquired by the data acquisition means and generating template data.

In this method, in the input data acquiring process, input data, meta-template data, and a generation rule for generating template data are acquired. Then, in the meta-template data rewriting process, contents of the input data, the meta-template data, and the generation rule are read, and the read generation rule for generating template data is interpreted. According to the interpreted generation rule for generating template data, template data is generated from the read input data and meta-template data.

According to the method, the template data is generated with the use of the input data, the meta-template data, and the generation rule for generating template data. Therefore, the template data to be generated can be flexibly changed only by changing the input data.

(22) System Generating User Interface Data on Terminal Side

A system of the present invention includes: a terminal device including the data generating device; and a server on a network which server provides a content and at least one of the input data, the template data, and the generation rule, to the data generating device.

In this system, a server provides at least one of the input data, the template data, and the generation rule to a terminal device via a network. The terminal device generates user interface data that is generation data with the use of the input data, the template data, and the generation rule which are held by the terminal device itself or provided by the server, and executes the user interface data. When the user interface is executed, a content described in the user interface data is downloaded from the server and the user interface is realized.

Note that, the server providing the input data, the template data, the generation rule, and the content may be realized by one server that provides all of the input data, the template data, the generation rule, and the content, separate servers each providing one of the input data, the template data, the generation rule, and the content, or a server that provides some of the input data, the template data, the generation rule, and the content.

(23) System Generating Template Data on Server Side

A system of the present invention includes: a terminal device including the data generating device; a server on a network which server includes the data generating device as and provides the template data to the terminal device; and an information server on a network which information server provides the input data and information to the terminal device and provides the input data to the server.

In this system, the terminal device requests the server on the network, which server is a data generating device generating the template data, to provide template data. The server having received a request for provision of the template data generates the template data with the use of the input data acquired from the information server, providing the input data, on the network and meta-template data that the server itself holds, and transmits to the terminal device the template data. The terminal device generates user interface data that is generation data with the use of the input data, the template data, and the generation rule, and executes the user interface data. When the terminal device executes the user interface data, a content is downloaded from the information server on the network and the user interface is realized.

Note that the server providing the input dada, the template data, and the content may be realized by one server providing all of the input data, the template data, and the content, separate servers each providing one of the input data, the template data, and the content, or a server providing some of the input data, the template data, and the content.

(24) System Generating List Data on Server Side

A system of the present invention includes: a terminal device including the data generating device; a server on a network which server includes the data generating device and provides the list data to the terminal device; and an information server on a network which information server provides a content to the terminal device and the pre-conversion data to the server.

In this system, the terminal device requests the server, on the network, that is a data generating device generating list data to provided the list data. The server having received a request for provision of the list data generates the list data with the use of the pre-conversion list data obtained from the information server, providing the pre-conversion list data, on the network and template data for generating list data which template data the terminal device itself holds, and transmits to the terminal device the generated list data. The terminal device generates user interface data that is generation data with the use of the list data, the template data, and the generation rule, and executes the user interface data. When the terminal device executes the user interface data, a content is downloaded from the information server on the network, thereby realizing the user interface.

Note that the server providing the list dada, the pre-conversion list data, and the content may be realized by one server providing all of the list dada, the pre-conversion list data, and the content, separate servers each realizing one of the list dada, the pre-conversion list data, and the content, or a server providing some of the list dada, the pre-conversion list data, and the content.

(25) System Generating User Interface Data on Server Side

A system of the present invention includes: a server on a network which server includes the data generating device; and a terminal device including output means, input means, user interface execution means that interprets the user interface data, presents information to a user via the output means, accepts an user operation input via the input means, and realizes the user interface.

In this system, the server generates user interface data that is generation data with the use of input data provided from other server on the network, and template data and a generation rule which the server itself holds, in response to a request for generation of interface data from the terminal device. Then, the server transmits to the terminal device thus generated user interface data to the terminal device. The terminal device executes the user interface data transmitted from the server and downloads a content from other server on the network, thereby realizing the user interface.

Note that the server providing the input dada, the user interface data, and the content may be realized by one server providing all of the input dada, the user interface data, and the content, separate servers each realizing one of the input dada, the user interface data, and the content, or a server providing some of the input dada, the user interface data, and the content.

(26) Realization by Program

The data generating device may be realized by hardware or by causing a computer to execute a program. Specifically, the program of the present invention is an information processing program causing a computer to function as at least the data acquisition means, the template data rewriting means, the user interface execution means, and the meta-template data rewriting means. Moreover, in a recording medium of the present invention, this information processing program is stored.

When this information processing program is executed by a computer, the computer operates as the data generating device. Accordingly, as in the data generating device as mentioned above, the generation data is generated from input data, template data, and a generation rule. Therefore, generation data to be generated can be flexibly changed only by changing at least one of the input data, the template data, and the generation rule.

Alternatively, the data generating device of the present invention that generates data from template data, generation rule data defining a generation rule for generating data from the template data in accordance with input data, and the input data, the data generating device may include data acquisition means to acquire the input data; and template rewriting means to interpret the generation rule data and, according to the generation rule, obtain the input data by the data acquisition means, and generate data by editing the template data according to the input data.

The data generating device of the present invention may have an arrangement in which: the generation rule data includes a generation rule specifying a position to be copied in a template; and template rewriting means interprets the generation rule data, rewrites the template data by copying a section to be copied in the template data, and generate data.

The data generating device of the present invention may have an arrangement in which: the generation rule data includes input data specifying a position to be copied in a template and a number of times to copy, and a generation rule specifying a number of copies for each input data; and the template rewriting means interprets the generation rule data, obtains, via the data acquisition means, the input data specified in the generation rule data with respect to the position to be copied in the template data, and rewrites the template data by copying for a number obtained by dividing a number of times specified in number-of-times data by a number of copies for each number-of-times data.

The data generating device of the present invention may have an arrangement in which: the generation rule data includes a generation rule specifying a position to be replaced in the template and input data of a replacement data source; and the template rewriting means interprets the generation rule data, rewrites the position to be replaced in the template data with the input data acquired via the data acquisition means from the replacement data source specified in the generation rule data, and generates data.

Moreover, the user interface generating device of the present invention may have an arrangement in which: the generation rule data further includes the generation rule specifying a position to be replaced in the template and an index; and the template rewriting means rewrites the position to be replaced in the template data by adding the index specified in the generation rule data, thereby generating data.

The data generating device of the present invention may further includes: communication means carrying out data communication via a network, wherein the data acquisition means acquires data used for editing the template data via the communication means.

Moreover, the data generating device of the present invention may have an arrangement in which: the template data includes a copy position for first copying, a copy position for second or subsequent copying, and a copy position for last copying; and template rewriting means copies the copy position for first copying when the first copying is carried out, the copy position for second or subsequent copying when the second or subsequent copying is carried out, and the position for last copying when the last copying is carried out.

Moreover, the data generating device of the present invention may have an arrangement in which: the template data is composed of a plurality of files; the generation rule included in the generation rule data includes an identifier of a file to be edited; and the template rewriting means interprets the generation rule data, edits the file specified by the identifier, and generates data.

Moreover, the data generating device of the present invention may have an arrangement in which: data to be generated is user interface data defining an information display format or a data input system.

Moreover, the data generating device of the present invention may include: input means accepting a user input operation; and user interface execution means that interprets the user interface data and presents information, and processes a user input from the input means.

The data generating device of the present invention may include: communication means carrying out data communication via a network; and user interface data transmitting means that receives request data for generation of the user interface data and transmits to a requester the user interface data generated by the template rewriting means, via the communication means.

Moreover, the data generating device of the present invention may have an arrangement in which: the data to be generated is template data of user interface data defining an information display formant or a data input system.

The data generating device of the present invention may include: communication means carrying out data communication via a network; and user interface data template transmitting means that receives request data for generation of a user interface data template and transmits to a requester the user interface data template generated by the template rewriting means, via the communication means.

Moreover, the information processing program of the present invention which information processing program is a program that can be executed by a computer generating data with the use of the template data, generation rule data defining a generation rule for generating data from the template data according to input data, and the input data, the program may include: an input data acquiring function for acquiring the input data; and a template rewriting function for interpreting the generation rule data, acquiring the input data by the input data acquiring function according to the generation rule, and generating data by editing the template data according to the input data.

BRIEF DESCRIPTION OF DRAWINGS

Fig. 1 is a drawing illustrating an example of how a system including a data generating device of Embodiment 1 of the present invention is arranged and how the system operates.

Fig. 2 is a functional block diagram illustrating essential portions of a digital television receiver 120 as an example of Embodiment 1 of the present invention.

Fig. 3 is a drawing illustrating a data flow at the time when a generation rule interpreting/UI description generating section 205 of Embodiment 1 of the present invention generates a UI description.

Fig. 4 is a drawing illustrating an example of a copy generation rule described in a generation rule of Embodiment 1 of the present invention.

Fig. 5 is a drawing illustrating an example of a replacement generation rule described in the generation rule of Embodiment 1 of the present invention.

Fig. 6 is a drawing illustrating an example of an index number embedding generation rule described in the generation rule of Embodiment 1 of the present invention.

Fig. 7 is a flowchart illustrating a procedure in which the digital television receiver 120 of Embodiment 1 of the present invention generates and executes the UI description.

Fig. 8 is a drawing illustrating a system in which a moving image stored in a hard disk recorder 121 is selected via the digital television receiver 120 of Embodiment 1 of the present invention and the thus selected moving image is reproduced in the digital television receiver 120.

Fig. 9 is a drawing illustrating an example of a UI with which a moving image stored in the hard disk recorder is selected via the digital television receiver of Embodiment 1 of the present invention and the thus selected moving image is reproduced in the digital television receiver.

Fig. 10 is a drawing illustrating an example of the generation rule for generating the UI description used in a moving image reproduction application in Embodiment 1 of the present invention.

Fig. 11 is a drawing illustrating an example of a target form for generating the UI description used in the moving image reproduction application in Embodiment 1 of the present invention.

Fig. 12 is a drawing illustrating an example of moving image list data referred to in the generation rule for generating the UI description used in the moving image reproduction application in Embodiment 1 of the present invention.

Fig. 13 is a flowchart schematically illustrating a procedure in which the UI description of the moving image reproduction application is generated and executed in Embodiment 1 of the present invention.

Fig. 14(a) is a drawing illustrating an example of a target form.

Fig. 14(b) is a drawing illustrating a state in which the target form is copied so that the number of resulting copies corresponds to the number of moving image contents.

Fig. 14(c) is a drawing illustrating a state in which a predetermined part of each target form copy is replaced with a thumbnail file name.

Fig. 14(d) is a drawing illustrating a state in which the target form copy whose predetermined part has been replaced with the thumbnail file name has a specific part replaced with an index number.

Fig. 15 is a drawing illustrating an arrangement of a channel call application which causes the digital television receiver 120 to display outline information of each content distributed from a content server 112 on a screen of the digital television receiver 120 in Embodiment 1 of the present invention.

Fig. 16 is a drawing illustrating an example of a UI of the channel call application in Embodiment 1 of the present invention.

Fig. 17 is a flowchart schematically illustrating a procedure in which the UI of the channel call application is generated and executed in Embodiment 1 of the present invention.

Fig. 18(a) is a drawing illustrating an example of a target form.

Fig. 18(b) is a drawing illustrating a state in which the target form is copied so that the number of resulting copies corresponds to the number of channels.

Fig. 18(c) is a drawing illustrating a state in which a predetermined part of each target form copy is replaced with an icon file name and a title.

Fig. 18(d) is a drawing illustrating a state in which the target form copy whose predetermined part has been replaced with the icon file name and the title has a specific part replaced with a channel number.

Fig. 19 is a drawing illustrating an arrangement of a slide show application system which combines a photo provided by a photo server 113 and music stored in a music player 122 so as to reproduce the combination of the photo and the music in Embodiment 1 of the present invention.

Fig. 20 is a drawing illustrating an example of a UI of the slide show application in Embodiment 1 of the present invention.

Fig. 21 is a flowchart schematically illustrating a procedure in which a UI description of the slide show application is generated and executed in Embodiment 1 of the present invention.

Fig. 22(a) is a drawing illustrating an example of a target form.

Fig. 22(b) is a drawing illustrating a state in which the target form is copied so that the number of resulting copies in accordance with (i) a time period taken to reproduce the music and (ii) a predetermined time interval at which still images are switched.

Fig. 22(c) is a drawing illustrating a state in which a predetermined part of each target form copy is replaced with a music file name and a still image file name.

Fig. 23 is a drawing illustrating another arrangement of the copy generation rule in Embodiment 1 of the present invention so as to show an example where the target form has descriptions to be copied which descriptions respectively correspond to the first page, the last page, and intermediate pages other than the first and last pages.

Fig. 24 is a drawing illustrating an example of how a system including a data generating device of Embodiment 2 of the present invention is arranged and an example of how the system operates.

Fig. 25 is a functional block diagram illustrating essential portions of an UI description generation server 101 as an example of Embodiment 2 of the present invention.

Fig. 26 is a flowchart illustrating a procedure in which the UI description generation server 101 generates a UI description so as to transmit the UI description to the digital television receiver 120 in Embodiment 2 of the present invention.

Fig. 27 is a drawing illustrating an example of an arrangement of a system in a case where a UI description with which a moving image distributed from a video distribution server 114 is selected via the digital television receiver 120 and the thus selected moving image is reproduced is generated by the UI description generation server 101 in Embodiment 2 of the present invention.

Fig. 28 is a flowchart schematically illustrating a procedure in which a UI description generation process is carried out by the system in which a moving image distributed from the video distribution server 114 is selected via the digital television receiver 120 and the thus selected moving image is reproduced in the digital television receiver 120 in Embodiment 2 of the present invention.

Fig. 29 is a drawing illustrating an example of how a system including a data generating device of Embodiment 3 of the present invention is arranged and an example of how the system operates.

Fig. 30 is a drawing illustrating a data flow at the time when a generation rule interpreting/UI description generating section 205 generates a UI description set in Embodiment 3 of the present invention.

Fig. 31 is a drawing illustrating an example of a copy generation rule described in a generation rule in Embodiment 3 of the present invention.

Fig. 32 is a drawing illustrating an example of a replacement generation rule described in the generation rule in Embodiment 3 of the present invention.

Fig. 33 is a drawing illustrating an example of an index number embedding generation rule described in the generation rule in Embodiment 3 of the present invention.

Fig. 34 is a drawing illustrating another arrangement of the copy generation rule in Embodiment 3 of the present invention so as to show an example where the target form set has files to be copied which files respectively correspond to the first copy, the last copy, and copies other than the first and last copies.

Fig. 35 is a drawing illustrating an arrangement of an incoming call signaling-song preview/purchase application system of Embodiment 3 of the present invention.

Fig. 36 is a drawing illustrating an example of a UI for the incoming call signaling song preview/purchase application in Embodiment 3 of the present invention.

Fig. 37 is a drawing illustrating an example of an arrangement of a target form set of the incoming call signaling song preview/purchase application of Embodiment 3 of the present invention.

Fig. 38(a) is a drawing illustrating an example of a song preview image used in a case where only one song is included in list data and a file constituting a target form set is not copied.

Fig. 38(b) is a drawing illustrating an example of a song preview image used for the first song in a case where two or more songs are included in the list data.

Fig. 38(c) is a drawing illustrating an example of a song preview image used for a song other than the first song and the last song in a case where three or more songs are included in the list data.

Fig. 38(d) is a drawing illustrating an example of a song preview image used for the last song in case where two or more songs are included in the list data.

Fig. 39 is a flowchart schematically illustrating a procedure in which a UI description of the incoming call signaling song preview/purchase application is generated in Embodiment 3 of the present invention.

Fig. 40(a) is a drawing illustrating an example of a target form set.

Fig. 40(b) is a drawing illustrating a state in which a file constituting the target form set is copied so that the number of resulting copies corresponds to the number of newly-arrived incoming call signaling songs.

Fig. 40(c) is a drawing illustrating a state in which predetermined parts of each target form copy are respectively replaced with a title, a song image file name, a preview sound file name, and seller information, so as to update a linking end.

Fig. 41 is a drawing illustrating an example of how a system including a target form generation server 102 of Embodiment 4 of the present invention is arranged and an example of how the system operates.

Fig. 42 is a functional block diagram illustrating essential portions of the target form generation server 102 in Embodiment 4 of the present invention.

Fig. 43 is a drawing illustrating a data flow at the time when a generation rule interpreting/target form generating section 213 of Embodiment 4 of the present invention generates a target form.

Fig. 44 is a flowchart illustrating a procedure in which the target form generation server 102 generates the target form in Embodiment 4 of the present invention.

Fig. 45 is a drawing illustrating an arrangement of a system in a case of causing the target form generation server 102 to generate a target form for moving-image reproduction which target form is used to cause the digital television receiver 120 to generate a UI description for moving-image reproduction in Embodiment 4 of the present invention.

Fig. 46 is a flowchart schematically illustrating a procedure in which a target form generation process is carried out in Embodiment 4 of the present invention.

Fig. 47(a) is a drawing illustrating an example of a meta target form.

Fig. 47(b) is a drawing illustrating a state in which predetermined parts of the meta target form are replaced with a title name and a background image file name, respectively.

Fig. 48 is a drawing illustrating an example of how a system including a list data conversion server 103 of Embodiment 5 of the present invention is arranged and an example of how the system operates.

Fig. 49 is a functional block diagram illustrating essential portions of the list data conversion server 103 of Embodiment 5 of the present invention.

Fig. 50 is a drawing illustrating a data flow at the time when a generation rule interpreting/list data generating section 218 of Embodiment 5 of the present invention generates list data.

Fig. 51 is a flowchart illustrating a procedure in which the list data conversion server 103 generates the list data in Embodiment 5 of the present invention.

Fig. 52 is a drawing illustrating an arrangement of a system for causing the list data conversion server 103 to generate channel list data for a channel application which channel list data is used to cause the digital television receiver 120 to generate a UI description for the channel call application.

Fig. 53 is a flowchart schematically illustrating a procedure in which a list data generation process is carried out in Embodiment 5 of the present invention.

BEST MODE FOR CARRYING OUT THE INVENTION

<As to Generation Rule>

A generation rule is a UI description generation rule for generating a UI description from template data serving as a source from which the UI description is generated.

<As to List Data>

List data is data indicative of a list of contents to be displayed in a user interface window. Note that the contents described in the list data are displayed in plural windows in a case where the number of entire contents is so large that the contents cannot be displayed in a single user interface window.

<As to Target Form>

A target form is a source template from which the UI description is generated. That is, the target form is the template data.

[Embodiment 1]

The present embodiment gives exemplary explanations of an AV device, which generates a UI description for realizing a UI, as an embodiment of a data generating device. Note that examples of the data generating device include a mobile phone terminal.

<As to Outline of How System Is Arranged and How The System Operates in Embodiment 1>

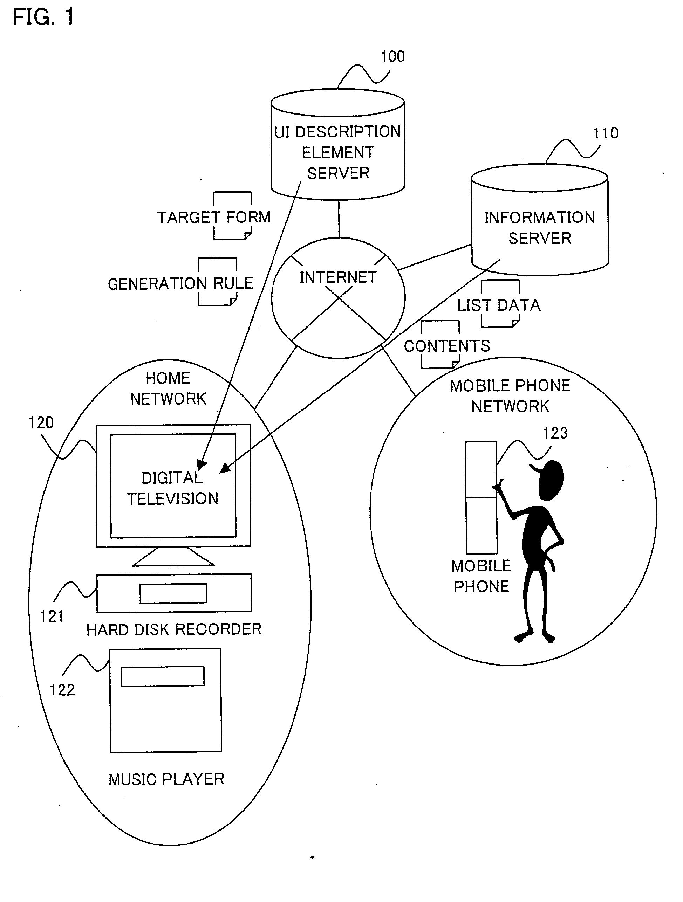

Fig. 1 illustrates an example of how a system including the data generating device of an embodiment of the present invention is arranged and an example of how the system operates.
The system according to the present embodiment includes: (1) a UI description element server 100 for providing, via the Internet, a generation rule for generating a UI description serving as data to be generated and a target form (template data) serving as a template of the UI description; (2) an information server 110 for providing, via a network such as the Internet, list data (input data) which is indicative of a list of various services and location information of contents used to generate the UI description and which also contains information indicative of the number of contents; and (3) an AV device such as a digital television receiver 120, a hard disk recorder 121, and a music player 122, or a mobile phone 123.
The following schematically explains how the system including the AV device according to the present embodiment operates. Note that the explanation is based upon such assumption that the UI description element server 100 and the information server 110 have been already activated and have become ready to provide information.
First, the digital television receiver 120 downloads the generation rule and the target form from the UI description element server 100 via the Internet and also downloads the list data from the information server 110. Next, the digital television receiver 120 interprets the downloaded generation rule and generates the UI description from the downloaded target form and list data in accordance with the description of the generation rule. The UI description is executed, thereby realizing a user interface which allows the user to use various functions of the digital television receiver 120.

<As to Functional Block Diagram of Embodiment 1 >

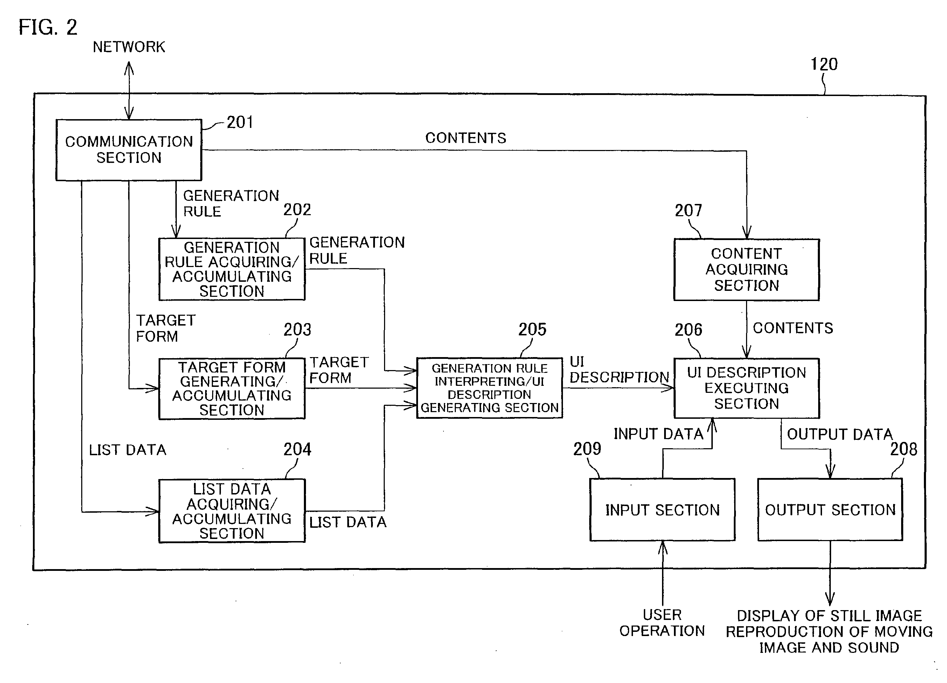

Fig. 2 is a functional block diagram illustrating essential portions of the digital television receiver 120 as an example of Embodiment 1 of the present invention. Note that, only main data flows are illustrated.
A communication section (communication means) 201 communicates with the UI description element server 100 and the information server 110 via a network so as to receive data such as the generation rule, the target form, the list data, and the contents.
A generation rule acquiring/ accumulating section (data acquisition means) 202 acquires the generation rule from the UI description element server 100 via the communication section 201 and accumulates the generation rule so as to transmit the acquired generation rule to a generation rule interpreting/UI description generating section (template data rewriting means) 205. The generation rule acquiring/ accumulating section 202 may hold the generation rule beforehand so as to transmit the generation rule to the generation rule interpreting/UI description generating section 205.
A target form acquiring/accumulating section (data acquisition means) 203 acquires the target form from the UI description element server 100 via the communication section 201 and accumulates the target form so as to transmit the acquired target form to the generation rule interpreting/UI description generating section 205. The target form acquiring/ accumulating section 203 may hold the target form beforehand so as to transmit the target form to the generation rule interpreting/UI description generating section 205.
A list data acquiring/ accumulating section (data acquisition means) 204 acquires the list data from the information server 110 via the communication section 201 and accumulates the list data so as to transmit the acquired list data to the generation rule interpreting/UI description generating section 205. The list data acquiring/accumulating section 204 may hold the list data beforehand so as to transmit the list data to the generation rule interpreting/ UI description generating section 205.

The generation rule interpreting/UI description generating section 205 interprets the generation rule received from the generation rule acquiring/accumulating section 202 and applies a generation rule resulting from the interpretation so as to embed information, extracted from the list data received from the list data acquiring/accumulating section 204, into the target form received from the target form acquiring/ accumulating section 203 as a template, thereby generating the UI description. The generation rule interpreting/UI description generating section 205 transmits the generated UI description to a UI description executing section (user interface execution means) 206.

In order to realize the user interface based on the UI description received from the generation rule interpreting/UI description generating section 205, the UI description executing section 206 acquires specified still image, moving image, sound, and the like from the information server 110 via a content acquiring section 207 and the communication section 201 so as to present the still image, moving image, sound, and the like to the user via an output section (output means) 208 and allow the user to respond via an input section (input means) 209.

As described above, the content acquiring section 207 acquires contents from the information server 110 via the communication section 201 in response to an instruction from the UI description executing section 206 so as to transmit the contents to the UI description executing section 206.

The output section 208 presents the user interface, which has been received from the UI description executing section 206 and includes the contents, to the user. The input section 209 transmits to the UI description executing section 206 a user operation as input data.

<As to Outline of Main Data Flows in Embodiment 1>

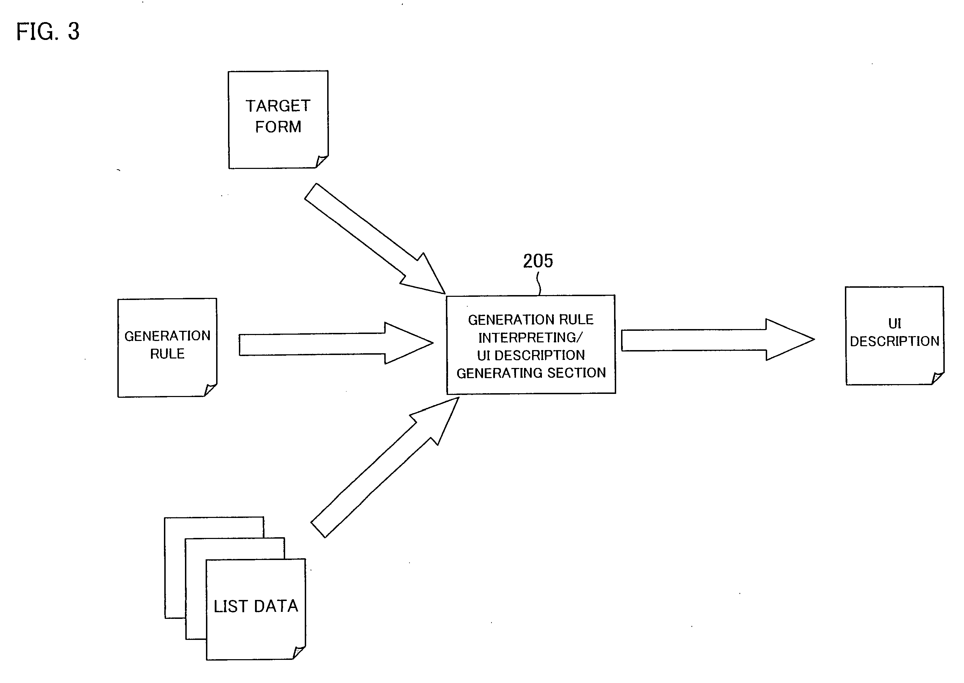

Fig. 3 illustrates data flows at the time when the generation rule interpreting/UI description generating section 205 generates the UI description. The generation rule interpreting/UI description generating section 205 obtains the generation rule, the target form, and the list data as an input and outputs the UI description.

The generation rule contains at least a copy generation rule, a replacement generation rule, and an index number embedding generation rule, all of which are used to generate the UI description from the target form. The generation rule interpreting/UI description generating section 205 interprets the generation rule and reads the list data in accordance with the interpreted generation rule so as to edit the target form by using information extracted from the read list data, thereby generating the UI description.

<As to Copy Generation Rule>

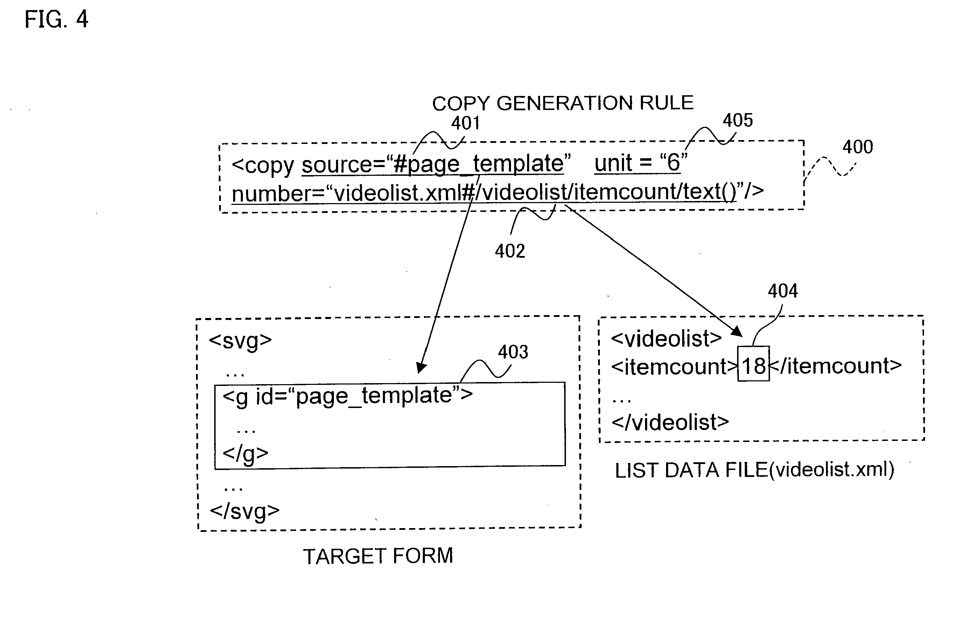

Fig. 4 illustrates an example of a copy generation rule described in the generation rule. Based on the copy generation rule, the generation rule interpreting/UI description generating section 205 copies a predetermined part of the target form and adds a resulting copy into the same target form.

This results in the following advantage. For example, in the case of a target form used for a user interface for displaying a plural sets of thumbnail image data indicative of moving images in a window showing a list of available moving images, it is possible to increase the number of thumbnail images, which can be pasted, by copying a predetermined part of the target form which part is indicative of pasting of the thumbnail image data.

A description 400 surrounded by a dotted line is an example of the copy generation rule in the generation rule. An underlined description 401 (source="#page_template") shows that a description 403 having a page_template identifier (a part from <g id="page_template"> to </g>) in the target form is to be copied.

Further, an underlined description 402 (number="videolist.xm 1 # /videolist/itemcount/ text()" shows that "18" which is a character string 404 positioned in /video/itemcount of the list data file (videolist.xml) is used in an operation for calculating the number of times to copy. Note that a value indicated by the character string shows the number of contents included in the list data.

Further, an underlined description 405 (unit="6") shows that there are six contents (units) to be embedded into each description 403 having the page_template identifier.

The number of times the description 403 having the page_template identifier is to be copied is calculated in accordance with the following operational expression.

$$\text{The number of times to copy} = (\text{the number of contents} - 1)/(\text{units})$$

For example, in the case of the description 400 surrounded by the dotted line, (18-1) is divided by 6, thereby finding out that the number of times to copy is 2. Then, the description 403 having the page_template identifier is copied twice and the UI description being generated is edited.

Note that the present embodiment explains the arrangement in which a predetermined part of the target form is copied so as to add the copied part in accordance with the copy generation rule, but the operation for editing the target form is not limited to the copy and the replacement.

For example, it may be so arranged that: a plurality of list display window candidates are disposed in a predetermined part of the target form so that a list display window is selected from the list display window candidates in accordance with a category of each moving image described in the list data file and the rest of the list display window candidates are deleted.

<As to Replacement Generation Rule>

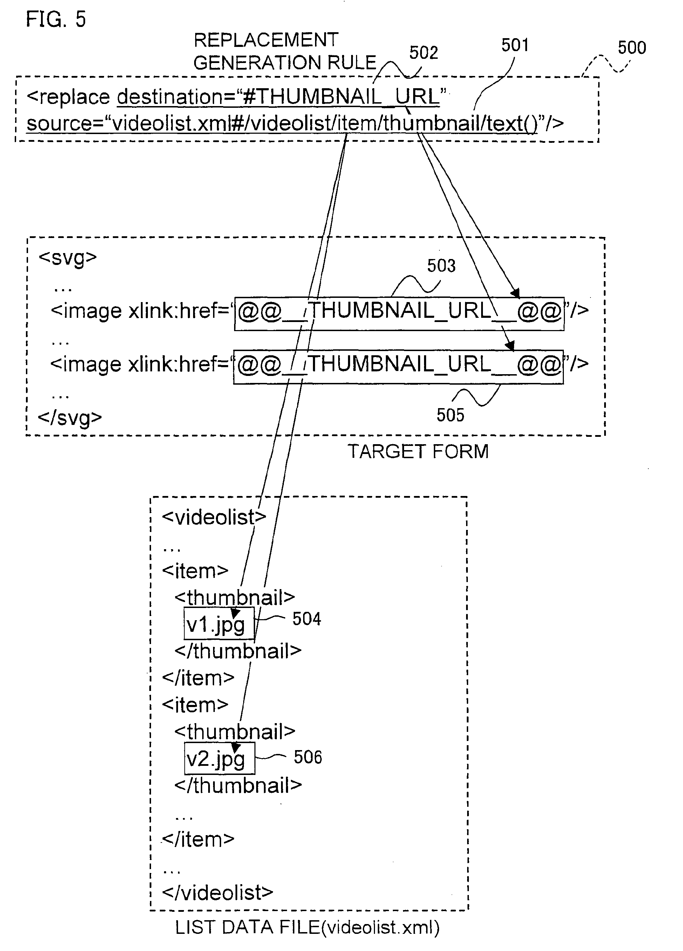

Fig. 5 illustrates an example of a replacement generation rule described in the generation rule. Based on the replacement generation rule, the generation rule interpreting/UI description generating section 205 replaces a predetermined part of the target form.

A description 500 surrounded by a dotted line is an example of the replacement generation rule in the generation rule.

An underlined description 501 (source="videolist.xm 1 # / videolist/ item/ thumbnail/text()") shows replacement carried out by a character string 504 (vl.jpg) and a character string 506 (v2.jpg) which are positioned in /videolist/ item/ thumbnail of the list data file (videolist.xml).

Further, an underlined description 502 (destination="#THUMBNAIL_URL") shows that specific character strings 503 and 505 (@@_THUMBNAIL_URL_@@) of the target form are to be sequentially replaced by the character strings 504 and 506.

In accordance with the replacement generation rule of the description 500 surrounded by a dotted line, the character string 503 is replaced with "vl.jpg" and the character string 505 is replaced with "v2.jpg", and the UI description being generated is edited.

This results in the following advantage. For example, in the case of a target form used for a user interface for displaying a plural sets of thumbnail image data indicative of moving images in a window showing a list of available moving images, it is possible to describe an actual location of a moving image file, reproduced when a corresponding thumbnail image is selected, into a predetermined part of the target form indicative of pasting of the thumbnail image data.

<As to Index Number Embedding Generation Rule>

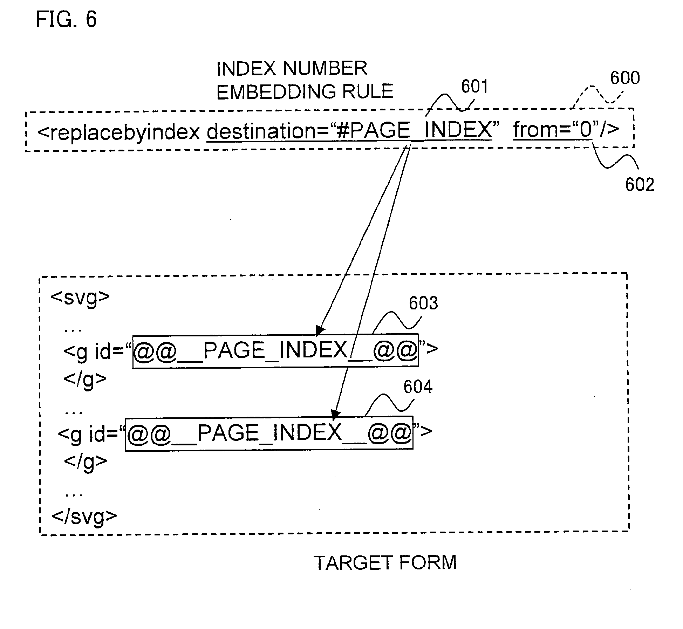

Fig. 6 illustrates an example of an index number embedding generation rule described in the generation rule. Based on the index number embedding generation rule, the generation rule interpreting/UI description generating section 205 embeds an index number into a predetermined part of the target form.

A description 600 surrounded by a dotted line is an example of the index embedding generation rule in the generation rule.

An underlined description 601 (destination="#PAGE_INDEX") shows that index numbers are to be embedded into parts respectively indicated by character strings 603 and 604 (@@_PAGE_INDEX_@@) of the target form. Further, "0" of an underlined description 602 (from="0") shows that each embedded index number begins with 0.

Based on an index number embedding generation rule described in a description 600 surrounded by a dotted line, the character string 603 is replaced with the index number "0" and the character string 604 is replaced with the index number "1", and the UI description being generated is edited.

This results in the following advantage. For example, in the case of a target form used for a user interface for displaying a plural sets of thumbnail image data indicative of moving images in a window showing a list of available moving images, it is possible to display a page number and the like at a predetermined part of the target form which part is indicative of pasting of the thumbnail image data when the UI description generated from the target form is executed.

<As to Flow in Generation and Execution of UI Description>

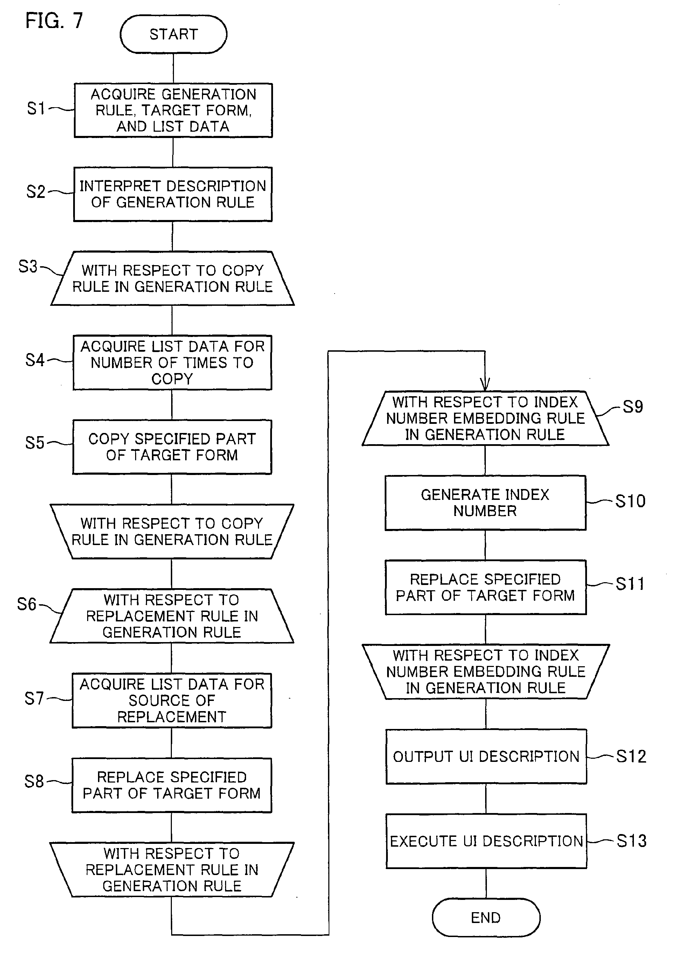

Fig. 7 is a flowchart illustrating a procedure in which the digital television receiver 120 generates and executes the UI description. Note that the flowchart explains processes carried out after the input section 209 receives an input from the user and the generation rule interpreting/UI description generating section 205 interprets a UI corresponding to a function which is to be used by the user.

First, the generation rule interpreting/UI description generating section 205 acquires a generation rule from the generation rule acquiring/accumulating section 202 and a target form from the target form acquiring/ accumulating section 203 (step 1, hereinafter, referred to as "S1"). The generation rule acquiring/ accumulating section 202 and the target form acquiring/accumulating section 203 may respectively transmit the generation rule and the target form, each of which has been held beforehand, to the generation rule interpreting/UI description generating section 205. Alternatively, the generation rule acquiring/ accumulating section 202 and the target form acquiring/accumulating section 203 may respectively acquire the generation rule and the target form from the UI description element server 100 in the network via the communication section 201 so as to respectively transmit the generation rule and the target form to the generation rule interpreting/UI description generating section 205. Alternatively, the generation rule acquiring/ accumulating section 202 and the target form acquiring/ accumulating section 203 may respectively transmit the generation rule and the target form, which have been acquired from the UI description element server 100 and accumulated in the generation rule acquiring/accumulating section 202 and the target form acquiring/accumulating section 203 beforehand, to the generation rule interpreting/UI description generating section 205.

Next, the generation rule interpreting/UI description generating section 205 interprets the generation rule transmitted from the generation rule acquiring/ accumulating section 202 and finds out which UI description generation rule is included in the generation rule (S2).

Next, the generation rule interpreting/UI description generating section 205 repeats the following processes S4 and S5 with respect to each copy generation rule in a case where the copy generation rule of character string is included in the generation rule (S3).

The generation rule interpreting/UI description generating section 205 extracts, from the list data, information concerning the number of times the character string is to be copied, and carries out the aforementioned operation, so as to calculate the number of windows required in displaying thumbnail images and the like of moving images, i.e., the number of times to copy (S4).

The generation rule interpreting/UI description generating section 205 copies the predetermined part of the target form which part has an identifier specified by the copy rule of the character string so that the number of resulting copies corresponds to the number of times to copy (S5).

Next, the generation rule interpreting/UI description generating section 205 repeats the following processes S7 and S8 with respect to each replacement generation rule in the case where the replacement generation rule of character string is included in the generation rule (S6).

The generation rule interpreting/UI description generating section 205 extracts, from the list data, information used to replace the character string (S7).

The generation rule interpreting/UI description generating section 205 replaces, with the information extracted in S7, the character string of the target form which character string is to be replaced (S8).

Next, the generation rule interpreting/UI description generating section 205 repeats processes S10 and S11 with respect to each index number embedding generation rule included in the generation rule (S9).

The generation rule interpreting/UI description generating section 205 calculates a number to be embedded (S10) so as to embed the calculated number into an appropriate part of the target form (S11). For example, page numbers such as 1, 2, and 3 are embedded into respective pages.

Next, the UI description whose edition based on each generation rule has been completed is outputted to the UI description executing section 206 (S12).

Lastly, the UI description executing section 206 interprets and executes the received UI description so as to realize a desired user interface (S13).

<Supplemental Explanation>

Note that, the present embodiment explains the procedure in which the UI description is generated and executed at the time when the user uses a function of the terminal device, but it may be so arranged that, for example, the UI description is generated beforehand in turning on the digital television receiver and the generated UI description is executed at the time when the user uses the function of the terminal device. Further, it may be so arranged that, only at the time when the UI description has to be updated due to update of the input data or a similar reason, another UI description is generated so as to update the UI description.

Further, in the present embodiment, the list data (input data) is location information of a content to be acquired via a network such as the Internet, but it may be so arranged otherwise that electronic program guide (EPG) data of programs broadcast by digital broadcasting is to be acquired as the list data.

<As to Update Carried Out by Periodically Acquiring Target Form>

In the present embodiment, the template data (target form) is acquired from the UI description element server 100 at the time of generation of the UI description or is accumulated beforehand, but it may be so arranged that the template data is acquired from the UI description element server 100 and is updated at a constant time interval. This arrangement results in the following advantage. For example, the UI description element server 100 updates the template data every month so as to provide template data whose design varies every month, thereby allowing the terminal device to use a UI whose design varies every month.

[Application Example 1 of Embodiment 1]

The following describes an example where Embodiment 1 is applied to a moving image reproduction application.

<As to Arrangement in Application Example 1>

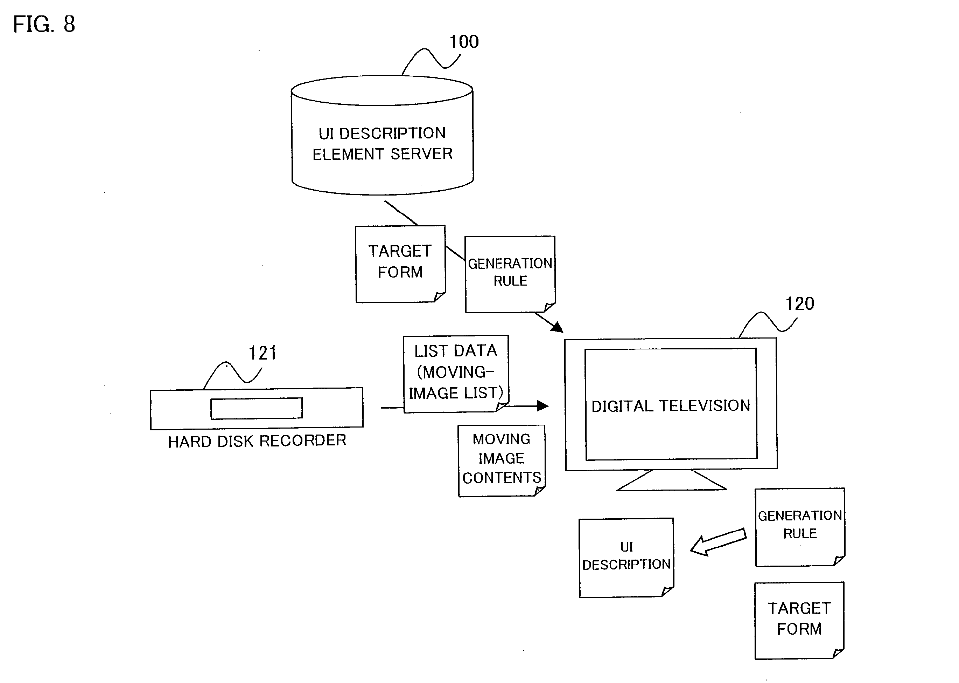

Fig. 8 illustrates an arrangement of a system which selects a moving image accumulated in the hard disk recorder 121 and reproduces the selected moving image. The digital television receiver 120 acquires a generation rule for moving-image reproduction and a target form for moving-image reproduction in order to generate a UI description for selecting a moving image accumulated in the hard disk recorder 121 and reproducing the selected moving image. The generation rule and the target form may be accumulated in the digital television receiver 120 beforehand or may be downloaded from the UI description element server 100. The digital television receiver 120 acquires the list data from the hard disk recorder 121 and generates the UI description. By executing the generated UI description, the digital television receiver 120 acquires the selected moving image content so as to realize the UI presented to the user.

<As to UI for Moving-Image Reproduction in Application Example 1 >

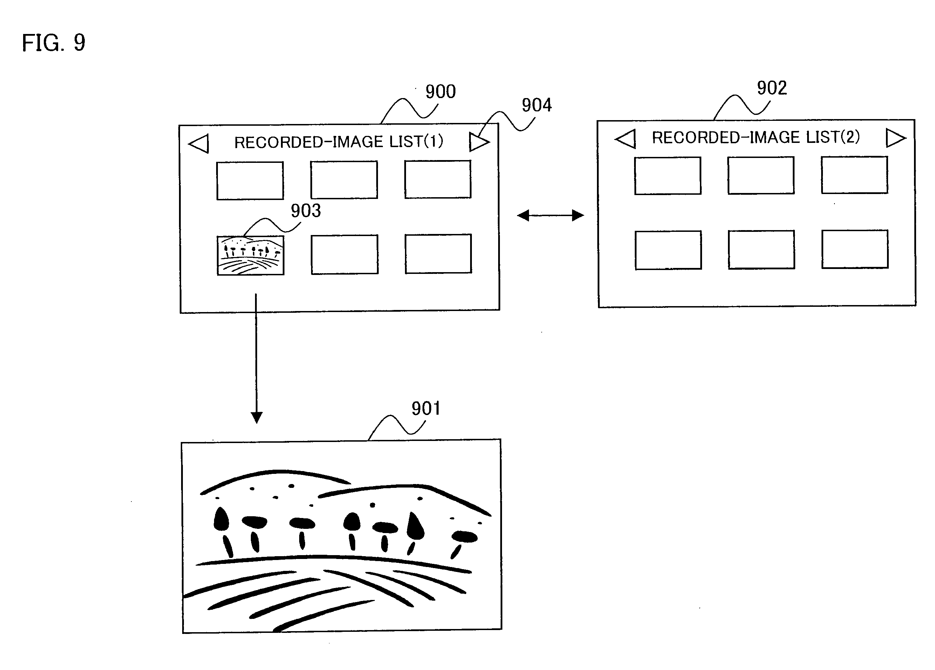

Fig. 9 illustrates an example of a UI for causing a moving image accumulated in the hard disk recorder 121 to be selected and reproduced via the digital television receiver 120.
First, in a recorded-image list window 900, a still image (thumbnail image) indicative of an outline of a moving image is displayed in each of six boxes of the window. If information indicating that a thumbnail image 903 has been selected by the user is inputted to the UI description executing section 206 through the input section 209 such as a mouse or the like, the UI description executing section 206 causes the window to transit into a moving image reproduction window 901 so as to begin reproduction of a moving image corresponding to the selected still image.
Further, if a button 904 is selected in the recorded-image list window 900, the UI description executing section 206 causes the window to transit into a recorded-image list window 902 and switches moving images displayed as a list in the window so as to display another recorded-image list window 902 of a next page.

<As to Generation Rule of Application Example 1 >

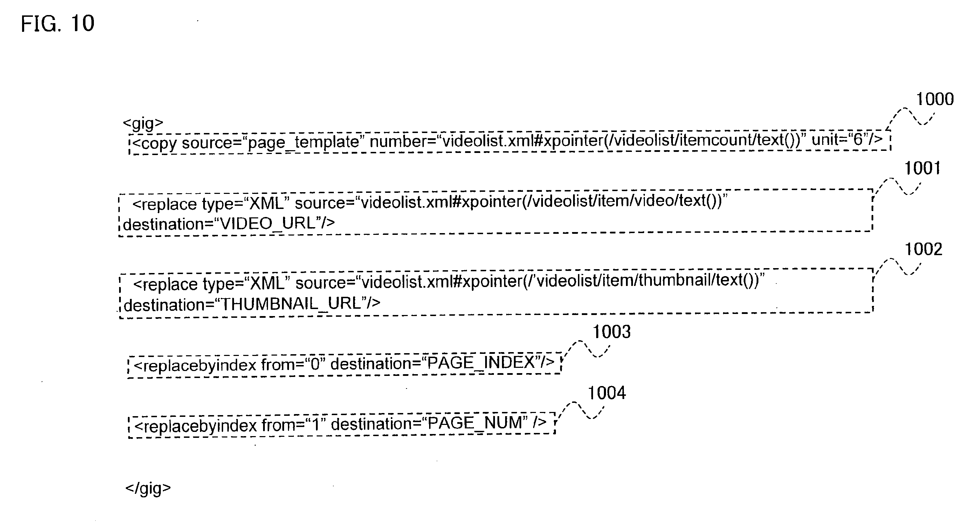

Fig. 10 illustrates an example of a generation rule for generating a UI description used in the moving image reproduction application. Note that detailed explanations of the respective generation rules described in the generation rule have been given above, and the explanations thereof are omitted.
A description 1000 surrounded by a dotted line indicates a copy generation rule and shows that a predetermined part of the target form is copied so that the number of resulting copies corresponds to the number of recorded-image list windows required in displaying the entire thumbnail images corresponding to moving images in accordance with the number of moving images included in the list data.
A description 1001 surrounded by a dotted line indicates a replacement generation rule and shows that a character string of the target form which character string is indicative of a reference of a moving image file is replaced with an actual moving image file name described in the list data.
Also a description 1002 surrounded by a dotted line indicates a replacement generation rule and shows that a character string of the target form which character string is indicative of a reference of a thumbnail file is replaced with an actual thumbnail file name described in the list data.
Each of descriptions 1003 and 1004 indicates an index number embedding generation rule and shows that an index number is embedded into a part of the target form which part indicates a page number.

<As to Target Form of Application Example 1>

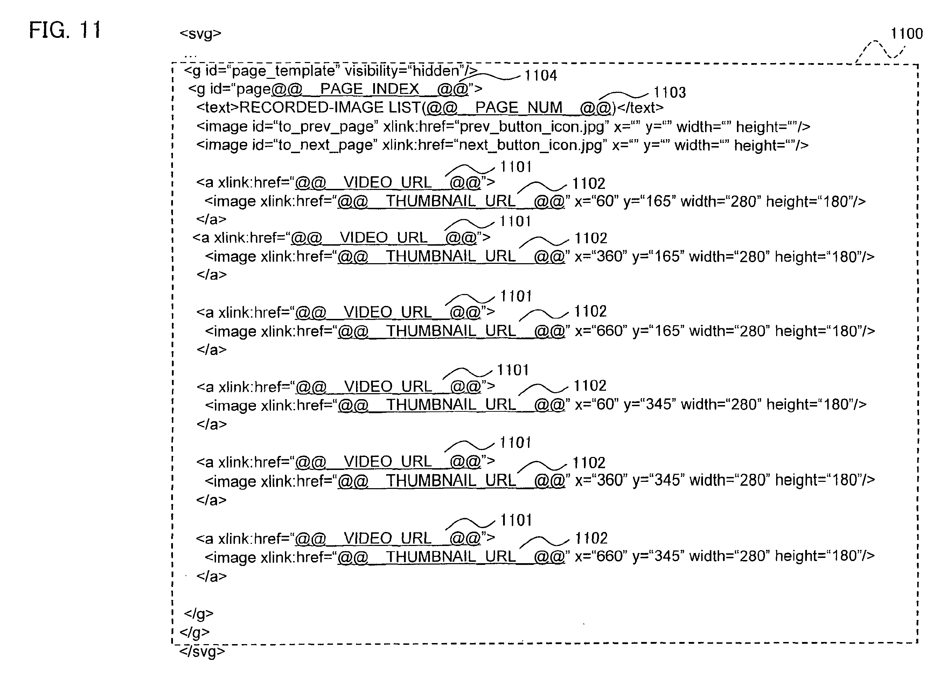

Fig. 11 illustrates an example of a target form for generating a UI description used in a moving image reproduction application.
A description 1100 surrounded by a dotted line describes a single recorded-image list window to be copied in accordance with the copy generation rule. Underlined character strings 1101 respectively indicate parts to be sequentially replaced with actual moving image file names included in the list data in accordance with the replacement generation rule. Underlined character strings 1102 respectively indicate parts to be sequentially replaced with actual thumbnail image file names included in the list data in accordance with the replacement generation rule. Each of character strings 1103 and 1104 indicates a part into which a page number of the recorded-image list window is to be embedded in accordance with the index number embedding generation rule.

<As to List Data of Application Example 1>

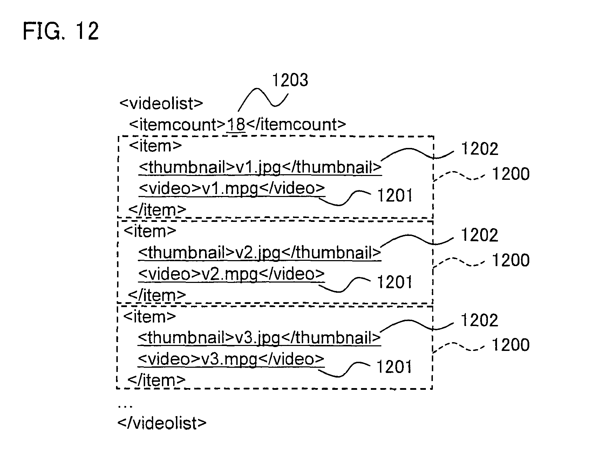

Fig. 12 illustrates an example of moving image list data (videolist.xml) referred to in the generation rule.
Each of descriptions 1200 surrounded by dotted lines describes information of each moving image. Each of underlined character strings 1201 describes a moving image file name. Each of underlined character strings 1202 describes a moving image thumbnail file name. An underlined character string 1203 indicates the number of moving images included in the list data.

<As to Flow in Generation and Execution of UI Description in Application Example 1 >

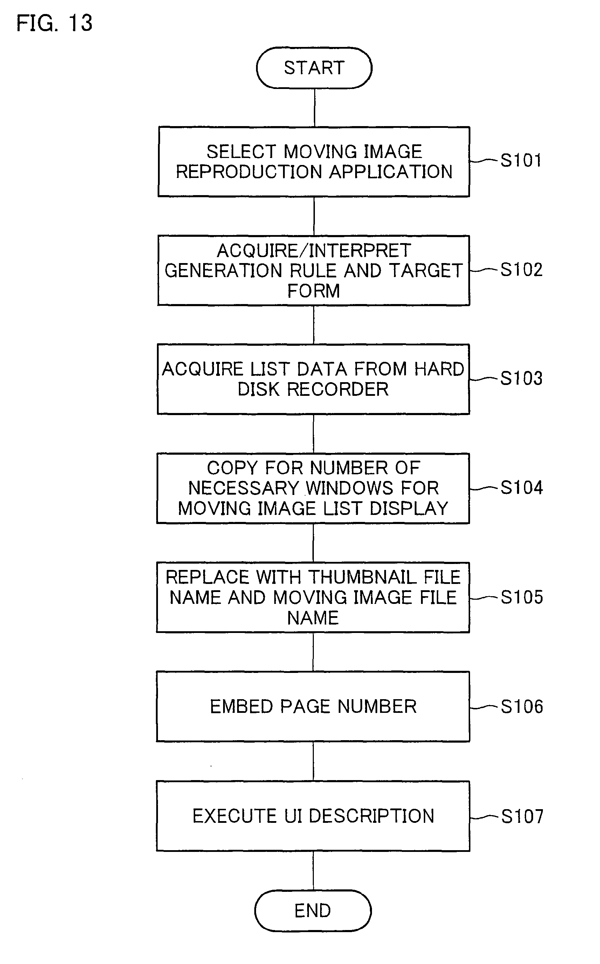

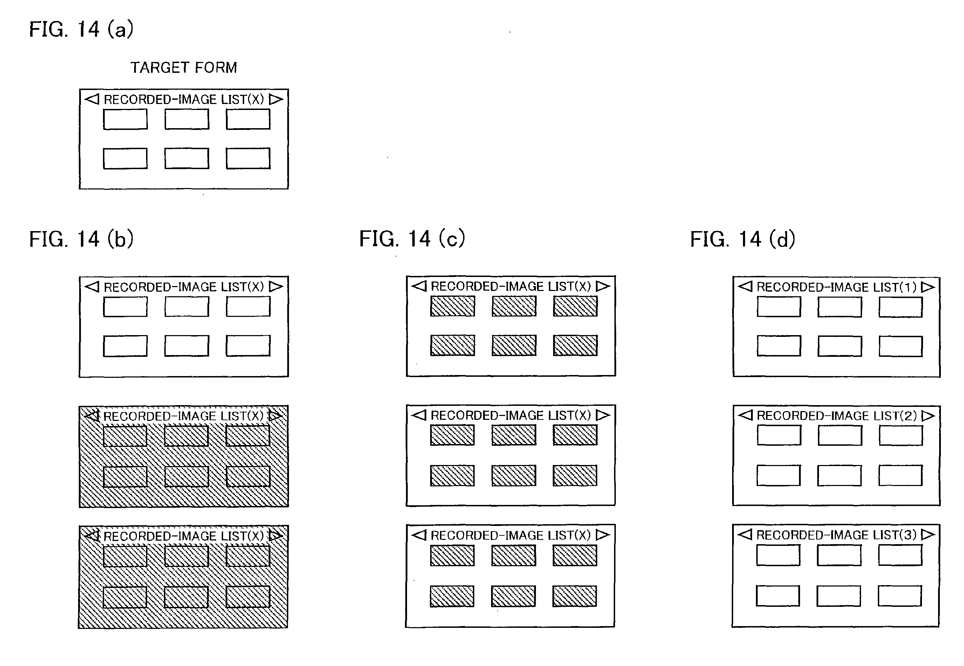

First, Fig. 13 that is a flowchart schematically illustrates a procedure in which a UI description is generated and executed in Application Example 1. Thereafter, Fig. 14 that is a schematic diagram illustrates how the UI description is generated.
First, the UI description executing section 206 receives, from the input section 209, information indicating that a moving image reproduction application has been selected by a user (S101).
Next, the generation rule interpreting/UI description generating section 205 acquires, from the generation rule acquiring/ accumulating section 202 and the target form acquiring/accumulating section 203 respectively, a generation rule and a target form that are used to generate a UI description used in the moving image reproduction application (S102).
Next, the generation rule interpreting/UI description generating section 205 acquires, from the hard disk recorder 121 via the list data acquiring/accumulating section 204 and the communication section 201, list data for generating the UI description used in the moving image reproduction application (S103).
Next, the generation rule interpreting/UI description generating section 205 calculates the number of necessary recorded-image list windows, i.e., the number of times to copy, from (i) the number of moving image contents indicated by the acquired list data and (ii) the number of thumbnail images indicative of moving image contents which thumbnail images can be displayed in a single window, and the generation rule interpreting/UI description generating section 205 copies a predetermined part so that the copying operation is carried out the predetermined number of times (S104).
Next, the generation rule interpreting/UI description generating section 205 replaces a moving image file reference character string and a thumbnail file reference character string of the target form respectively with the thumbnail file name and the moving image file name which have been acquired from the list data (S105).
Next, the generation rule interpreting/UI description generating section 205 replaces each page number of the recorded-image window of the target form with an index number (S106).
Lastly, the generation rule interpreting/UI description generating section 205 outputs the generated UI description to the UI description executing section 206, and the UI description executing section 206 executes the inputted UI description, thereby realizing the UI of the moving image reproduction application (S107). The user selects a thumbnail image from the recorded-image list window presented to the user, so that a moving image corresponding to the selected thumbnail image is reproduced by the hard disk recorder 121 and is displayed in the digital television receiver 120. Alternatively, it may be so arranged that a moving image file is downloaded from the hard disk recorder 121 to the digital television receiver 120 and then the moving image is reproduced in the digital television receiver.
Next, with reference to Fig. 14(a) to Fig. 14(d), processes S 104 to S 106 are schematically explained as follows.
As illustrated in Fig. 14(a), the target form has descriptions corresponding to a single recorded-image list window.
Fig. 14(b) schematically illustrates a state in which the target form is copied so that a necessary number of copies are made. At this time, the number of recorded-image list windows is merely increased to three, but descriptions of the windows have not been changed yet.
Fig. 14(c) schematically illustrates the process carried out in the aforementioned S105. In six boxes of each recorded-image list window, a predetermined replacement character string in a part of the descriptions of each box is replaced with an actual moving image file name and a file name of a thumbnail image representing the moving image which file names are extracted from list data.
Fig. 14(d) schematically illustrates the process carried out in the aforementioned S106. A page number of each recorded-image list window is replaced with an index number. That is, the page number shown as "X" in each window in Fig. 14(c) is replaced with an integer which begins with 1.
A state of the UI description as illustrated in Fig. 14(d) is a state in which generation of the UI description has been completed.

[Application Example 2 of Embodiment 1]

The following is an example where Embodiment 1 is applied to a channel call application. In the aforementioned Application Example 1, the list data is acquired from the hard disk recorder 121, but Application Example 2 is characterized in that the list data is acquired from a channel server 111 in a network.

<As to Arrangement in Application Example 2>

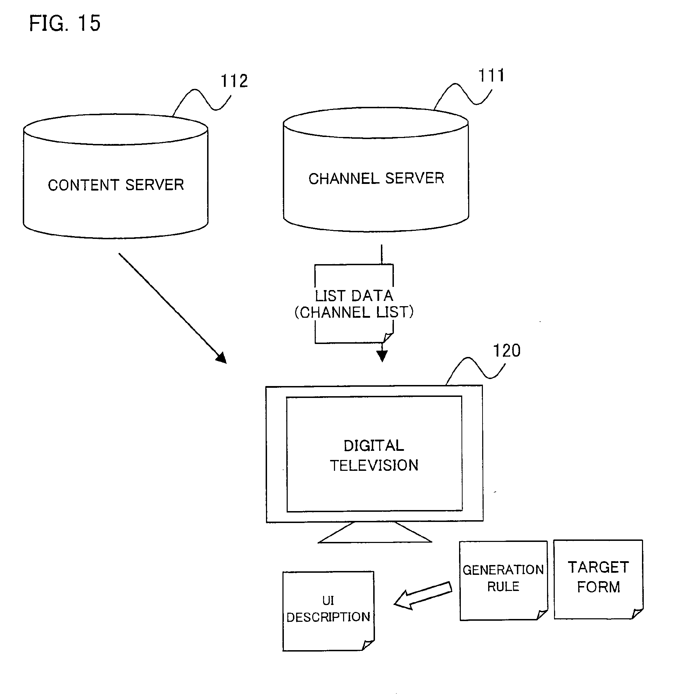

Fig. 15 illustrates an arrangement of a channel call application for displaying outline information of a content distributed from the content server 112 in a window of the digital television receiver 120. The channel server 111 and the content server 112 are placed in a network (also may be placed in the Internet) and in operation.
In order to generate a UI description for executing the channel call application, the digital television receiver 120 acquires a generation rule and a target form that are used for the channel call application. The generation rule and the target form may be accumulated in the digital television receiver 120 beforehand or may be downloaded from the UI description element server 100.
The digital television receiver 120 acquires list data from the channel server 111 and generates the UI description. When the generated UI description is executed and the user inputs a channel selection operation so as to select reproduction of the content, the digital television receiver 120 executes the generation rule for the channel call application, and rewrites the target form for the channel call application by using the channel list data acquired from the channel server 111. Thereby, the digital television receiver 120 generates the UI description for the channel call application, and executes the UI of the channel call application.

<As to UI for Channel Call in Application Example 2>

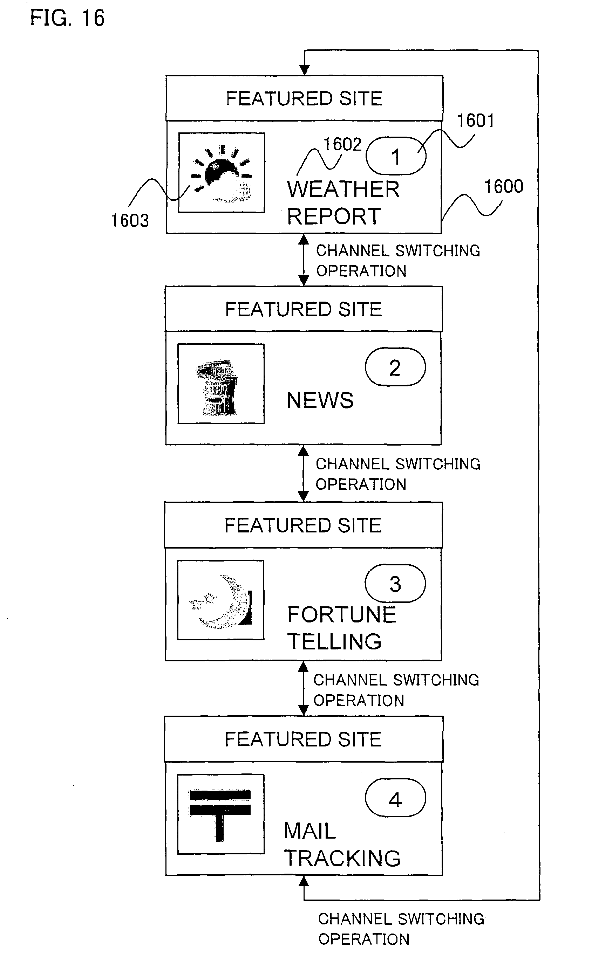

Fig. 16 illustrates an example of the UI for the channel call application.
When the reproduction of the content is selected by the channel selection operation carried out by the user, the channel call application displays an outline of a channel content in each channel call display window 1600 in a screen of the digital television receiver 120 as illustrated in Fig. 16.
The number 1601 indicates a channel number of a selected channel, and a character string 1602 indicates a title name of the selected channel, and an icon 1603 indicates an icon corresponding to the selected channel.
When a channel switching operation carried out by the user is inputted via the input section 209 and the UI executing section 206 receives the input, the digital television receiver 120 switches a content displayed in the window. At this time, the channel call application also follows the switching of the content so as to display an outline of the currently displayed channel content. As in an example illustrated in Fig. 16, when the channel is switched from Channel 1 "Weather Report" to Channel 2 "News" or Channel 3 "Fortune Telling", the display in the window 1600 is switched so as to display an outline of the corresponding channel, that is, an outline of "News" or "Fortune Telling".

<As to Flow in Generation and Execution of UI Description in Application Example 2>

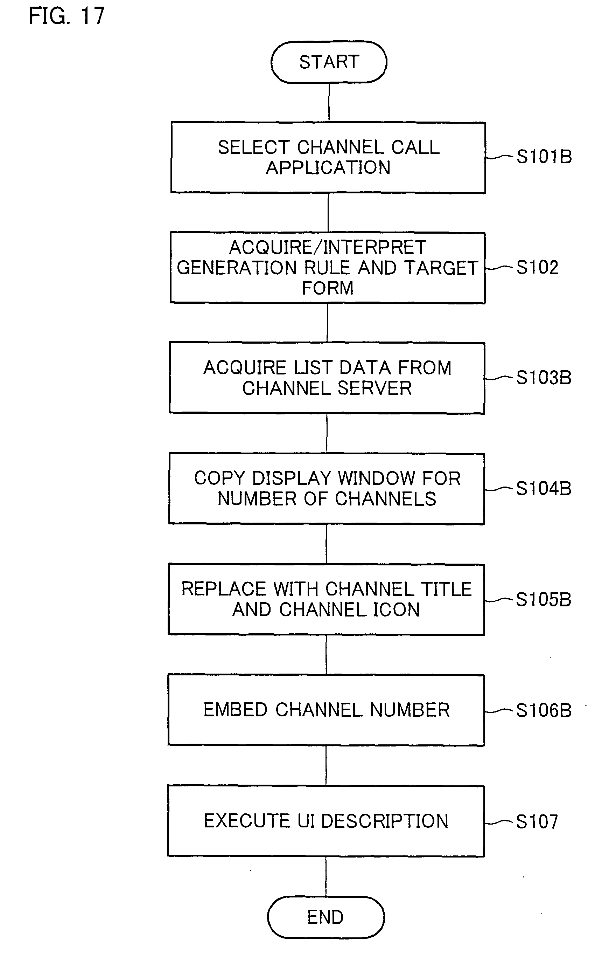

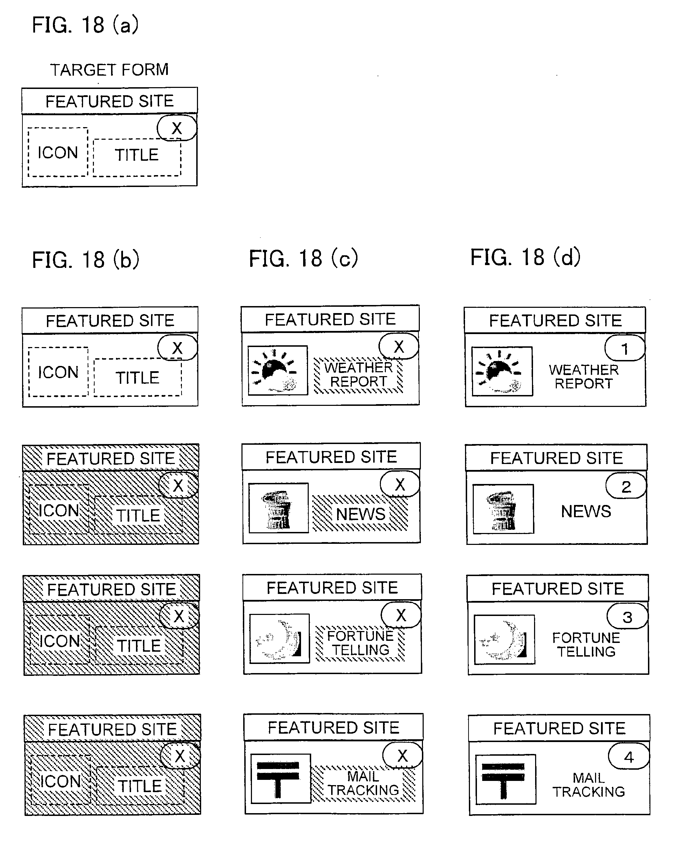

First, Fig. 17 that is a flowchart schematically illustrates a procedure in which the UI description is generated and executed in Application Example 2. Thereafter, Fig. 18 that is a schematic diagram illustrates how the UI description is generated.
First, the UI description executing section 206 receives, from the input section 209, information indicating that the user has selected the channel call application, that is, information indicating that reproduction of a content has been selected by a channel operation carried out by the user (S101B).
Next, the generation rule interpreting/UI description generating section 205 acquires, from the generation rule acquiring/ accumulating section 202 and the target form acquiring/accumulating section 203 respectively, a generation rule and a target form that are used to generate a UI description used in the channel call application, and the generation rule interpreting/UI description generating section 205 interprets the generation rule (S102).
Next, the generation rule interpreting/UI description generating section 205 acquires, from the channel server 111 via the list data acquiring/accumulating section 204 and the communication section 201, list data for generating the UI description used in the channel call application (S103B).
Next, the generation rule interpreting/UI description generating section 205 copies a description part of the target form which part is used to display a channel outline so that the number of resulting copies corresponds to the number of channels indicated by the acquired list data (S104B).
Next, the generation rule interpreting/UI description generating section 205 replaces a title character string and an icon file reference character string of the target form with a title name and an icon file name acquired from the list data respectively (S 105B).

Next, the generation rule interpreting/UI description generating section 205 replaces a channel number of the target form with an index number (S106B).

Lastly, the generation rule interpreting/ UI description generating section 205 outputs the generated UI description to the UI description executing section 206, and the UI description executing section 206 executes the inputted UI description, thereby realizing the UI for the channel call application (S107). Outline information corresponding to a content currently displayed in the window is displayed in the window 1600.

Next, with reference to Fig. 18(a) to Fig. 18(d), processes carried out in S104B to S106B are schematically illustrated.

As illustrated in Fig. 18(a), the target form has descriptions corresponding to a single window of the outline window. Fig. 18(b) schematically illustrates a state in which the target form is copied so that a necessary number of copies are made. At this time, the number of outline windows is merely increased to four, but descriptions of the windows have not been changed yet.

Fig. 18(c) schematically illustrates the process carried out in the aforementioned S105B. In each outline window, predetermined replacement character strings in a part of the descriptions of an outline window are replaced with a title name and an icon file name.

Fig. 18(d) schematically illustrates the process carried out in the aforementioned S106B. A channel number of each outline window is replaced with an index number. That is, a channel number shown as "X" in each window in Fig. 18(c) is replaced with an integer which begins with 1.

Fig. 18(d) illustrates a state in which generation of the UI description has been completed.

[Application Example 3 of Embodiment 1]

The following explains an example where Embodiment 1 is applied to a slide show application. In the aforementioned Application Examples 1 and 2, the list data is acquired from a single point, but Application Example 3 is characterized in that the list data is acquired from a plurality of points.

<As to Arrangement in Application Example 3>

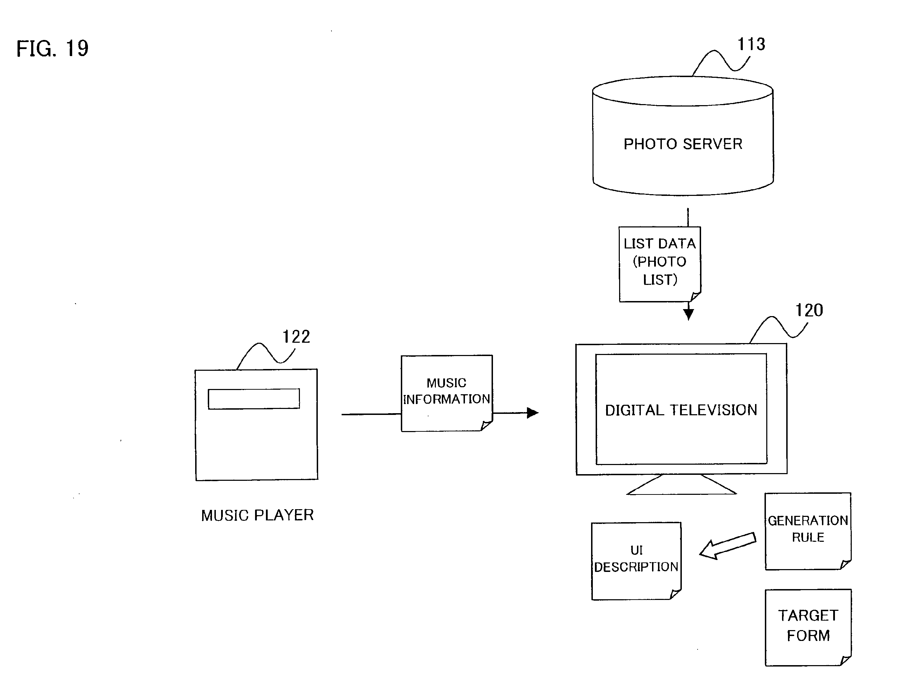

Fig. 19 illustrates an arrangement of a system of a slide show application for reproducing a combination of photos provided by a photo server 113 and music accumulated in the music player 122. The photo server 113 is placed in a network (also may be placed in the Internet) and in operation.

In order to generate a UI description for executing the slide show application, the digital television receiver 120 acquires a generation rule and a target form that are used for the slide show application. The generation rule and the target form may be accumulated in the digital television receiver 120 beforehand or may be downloaded from the UI description element server 100.

The digital television receiver 120 acquires list data from the music player 122 and the photo server 113, and generates the UI description. When the generated UI description is executed and the user selects reproduction of music of the music player 122, the digital television receiver 120 executes the generation rule for the slide show application, and rewrites the target form for the slide show application by using music information and photo list data respectively acquired from the music player 122 and the photo server 113. Thereby, the digital television receiver 120 generates the UI description for the slide show application, and executes the UI of the slide show application.

<As to UI for Slide Show in Application Example 3>

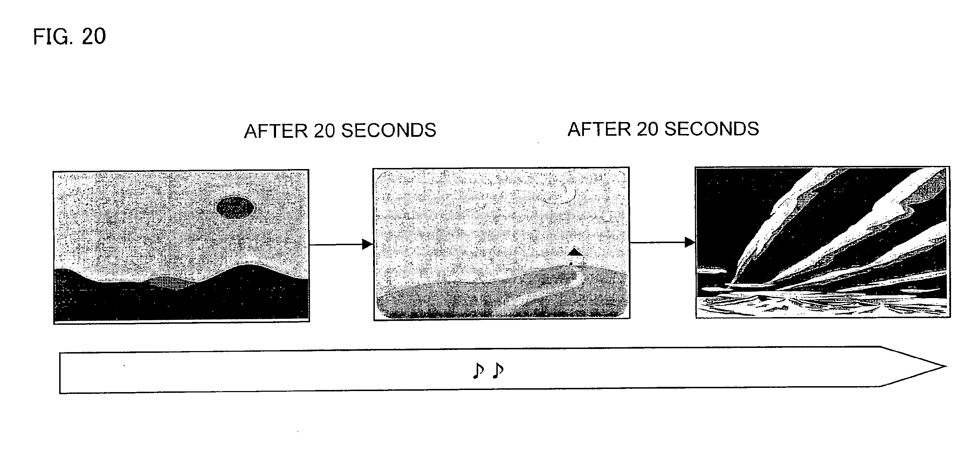

Fig. 20 illustrates an example of a UI for the slide show application.

When the reproduction of the music of the music player 122 is selected through an operation carried out by the user, the slide show application causes the digital television receiver 120 to reproduce the music acquired from the music player 122 and simultaneously display photo images acquired from the photo server 113 at a predetermined interval, e.g., at an interval of 20 seconds.

<As to Flow in Generation and Execution of UI Description in Application Example 3>

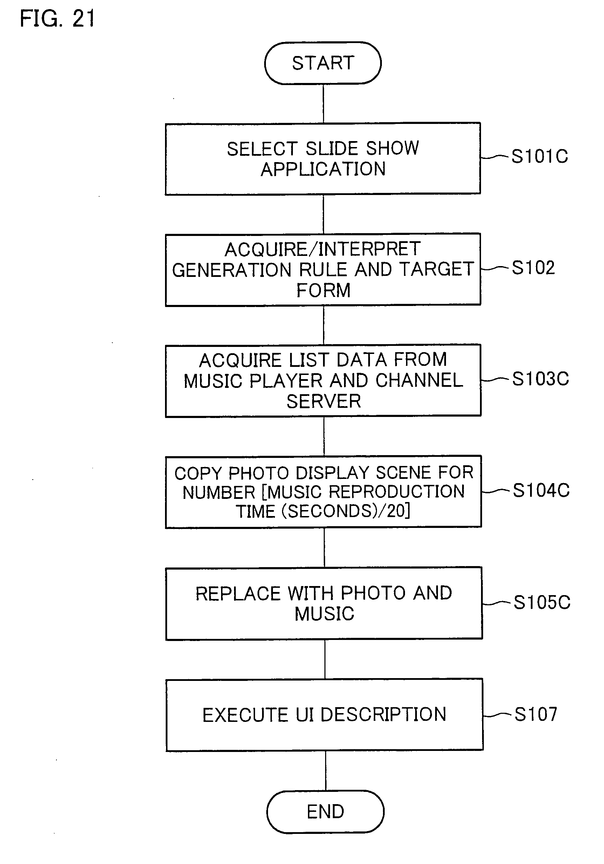

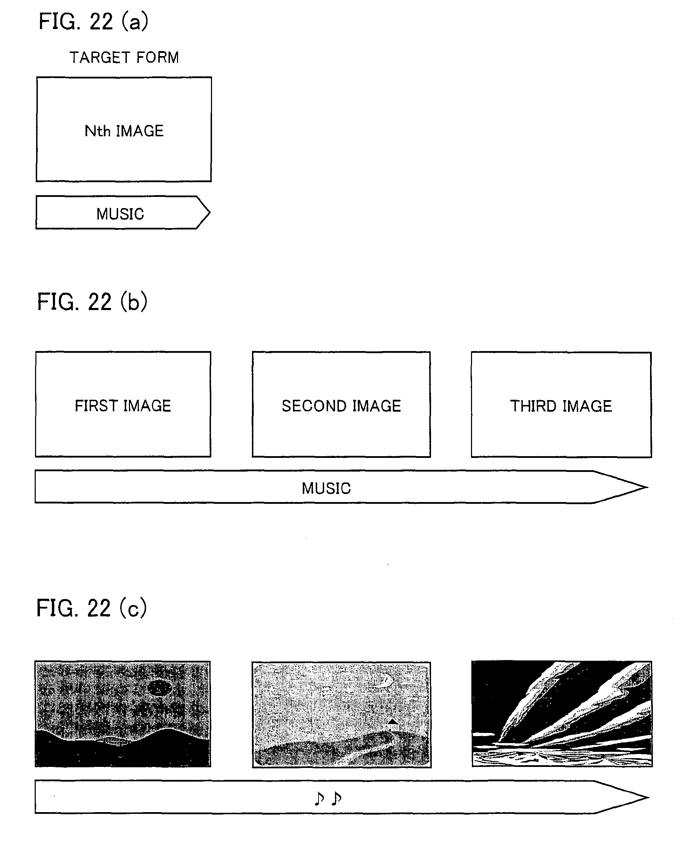

First, Fig. 21 that is a flowchart schematically illustrates a procedure in which the UI description is generated and executed in Application Example 3. Thereafter, Fig. 22 that is a schematic diagram illustrates how the UI description is generated.

First, the UI description executing section 206 receives, from the input section 209, information indicating that the user has selected the slide show application (S101C).

Next, the generation rule interpreting/UI description generating section 205 acquires, from the generation rule acquiring/ accumulating section 202 and the target form acquiring/ accumulating section 203 respectively, a generation rule and a target form that are used to generate a UI description used in the slide show application, and the generation rule interpreting/UI description generating section 205 interprets the generation rule (S102).

Next, the generation rule interpreting/UI description generating section 205 acquires, from the music player 122 and the photo server 113 via the list data acquiring/ accumulating section 204 and the communication section 201, list data for generating the UI description used in the slide show application (S 103C).

Next, the generation rule interpreting/UI description generating section 205 copies a description part of the target form which description part is used to display a photo image so that the number of resulting copies corresponds to a number obtained by dividing a reproduction time of the acquired music by a predetermined time interval (seconds) at which photo images are switched (S104C). That is, in a case where a music whose reproduction time is one minute is to be reproduced and photo images are to be switched at an interval of 20 seconds, three photo images are required.

Next, the generation rule interpreting/UI description generating section 205 replaces a reference character string of a music file of the target form and a reference character string of a photo image file of the target form respectively with a music file name and a photo image file name which have been acquired from the list data (S105C).

Lastly, the generation rule interpreting/UI description generating section 205 outputs the generated UI description to the UI description executing section 206, and the UI description executing section 206 executes the inputted UI description, thereby realizing the UI for the slide show application (S107).

Next, with reference to Fig. 22(a) to Fig. 22(c), processes carried out in the aforementioned S104C to S105C are schematically explained as follows.

As illustrated in Fig. 22(a), the target form has descriptions corresponding to a single slide show window.

Fig. 22(b) schematically illustrates a state in which the target form is copied so that a necessary number of copies are made. At this time, the number of slide show photo image frames is merely increased to three, but descriptions of each window has not been changed yet.

Fig. 22(c) schematically illustrates the process carried out in the aforementioned S105C. In Fig. 22(c), as to each photo image frame and the music frame, predetermined replacement character strings in a part of the descriptions respectively describing the photo image frame and the music frame are replaced with the photo image file name and the music file name which have been extracted from the list data.

Fig. 22(c) illustrates a state in which generation of the UI description has been completed.

<Supplementary Explanation of Embodiment 1>

In the present embodiment, the same description of the target form is copied so as to obtain the first copy through the last copy in accordance with the copy generation rule, but different descriptions may be copied so as to respectively correspond to the first copy, the last copy, and other intermediate copy between the first copy and the last copy.

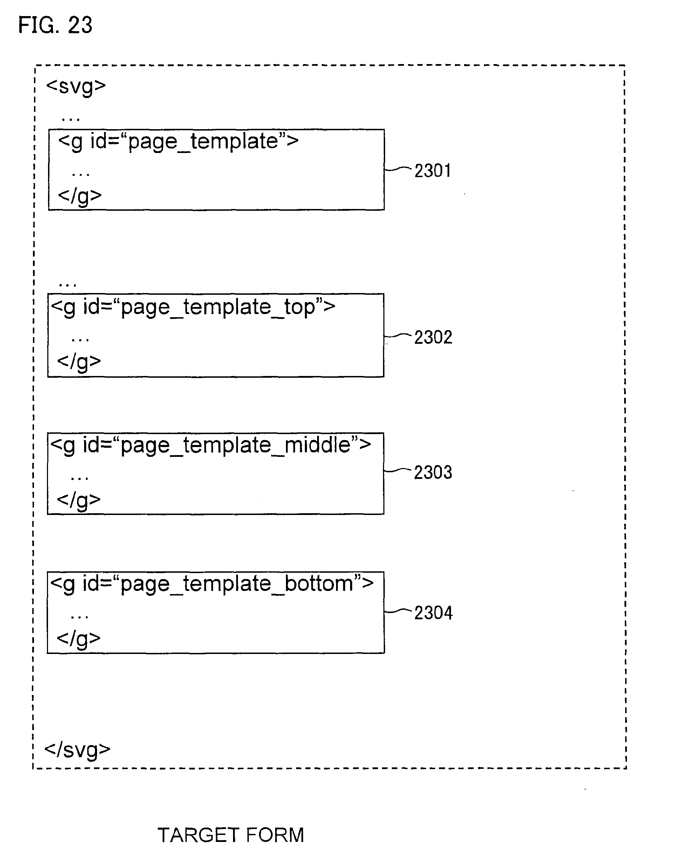

In this case, as illustrated in Fig. 23, the target form has descriptions to be copied so that the descriptions respectively correspond to the first, intermediate, and last copies, and each of the descriptions has a name obtained by adding a predetermined suffix "_top" (indicative of a source for the first copy), "_middle" (indicative of a source for the intermediate copy other than the first and the last copies), or "_bottom" (indicative of a source for the first copy) in an ID property value (id="page_template") indicating that the description is a source for the corresponding copy.

Further, in a case where the generation rule interpreting/UI generating section 205 carries out a copying operation in accordance with the copy generation rule, the ID property value indicative of the source is switched according to the number of times to copy so as to carry out the copying operation.

Specifically, in a case where the number of times to copy is 0, a description 2301 (id="page_template") surrounded by a solid line in the target form is used. In a case where the number of times to copy is 1, a description 2302 (id="page=template_top") surrounded by a solid line and a description 2304 (id="page=template_bottom") surrounded by a solid line are used. In a case where the number of times to copy is 2 or more, the description 2302, a description 2303 (id="page=template_middle") surrounded by a solid line, and the description 2304 are used.

With this arrangement, a description part for a top page is specified in the description 2302 (id="page=template_top") surrounded by the solid line which description 2302 serves as a source for the first copy, and a description part for a last page is specified in the description 2304 (id="page=template_bottom") surrounded by the solid line which description 2304 serves as a source for the last copy. This makes it possible to easily generate a UI description of a UI in which the top page and the last page are different , e.g., a UI description of a UI including a start message and an end message.

[Embodiment 2]

The present embodiment gives an explanation of a UI description generation server as an example which UI description generation server generates an XML description for realizing a UI, as an embodiment of a data generating device.

<As to Outline of How System Is Arranged and How The System Operates in Embodiment 2>

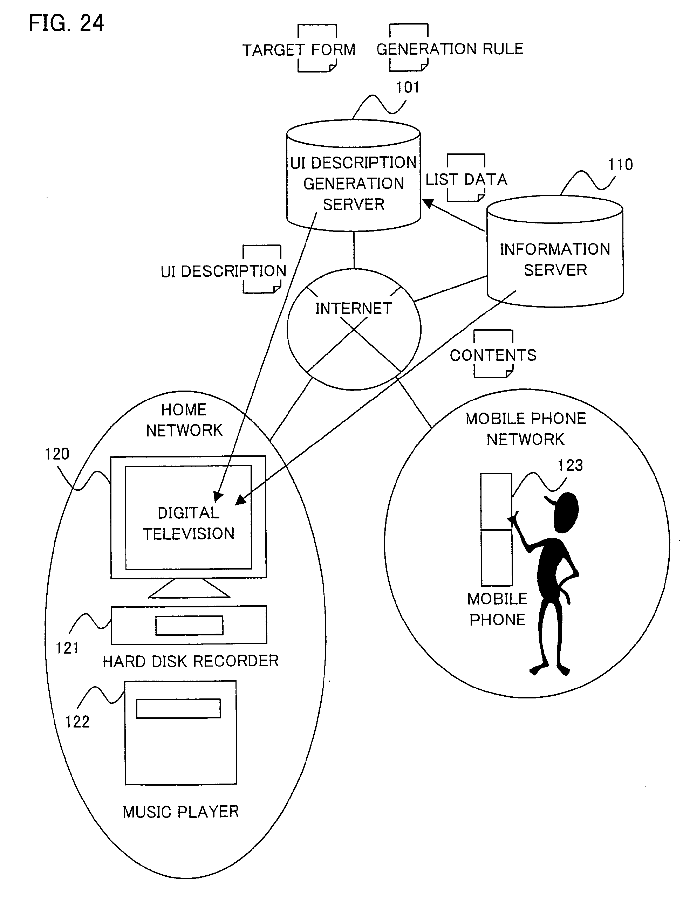

Fig. 24 illustrates an example of how a system including the data generating device of an embodiment of the present invention is arranged and an example of how the system operates.

The system according to the present embodiment includes: (1) a UI description generation server 101 for providing, via the Internet, a UI description that is generated data; (2) an information server 110 for providing, via a network such as the Internet, list data which is indicative of a list of various services and location information of contents used to generate the UI description and which also contains information indicative of the number of contents; and (3) an AV device such as a digital television receiver 120, a hard disk recorder 121, and a music player 122, or a mobile phone 123.

The following schematically explains how the system including the UI description generation server 101 according to the present embodiment operates. Note that the explanation is based upon such assumption that the information server 110 has been already activated and has become ready to provide information.

First, the digital television receiver 120 requests the UI description generation server 101 to generate the UI description. The UI description generation server 101 downloads the list data from the information server 110 so as to generate the UI description from a generation rule and a target form that correspond to a UI used at the time when the information server 110 provides information to the digital television receiver 120. The UI description generation server 101 transmits, to the digital television receiver 120, the UI description thus generated. The digital television receiver 120 receives the UI description thus transmitted and executes the UI description, thereby realizing a user interface through which information from the information server 110 is supplied.

<As to Function Block Diagram of Embodiment 2>

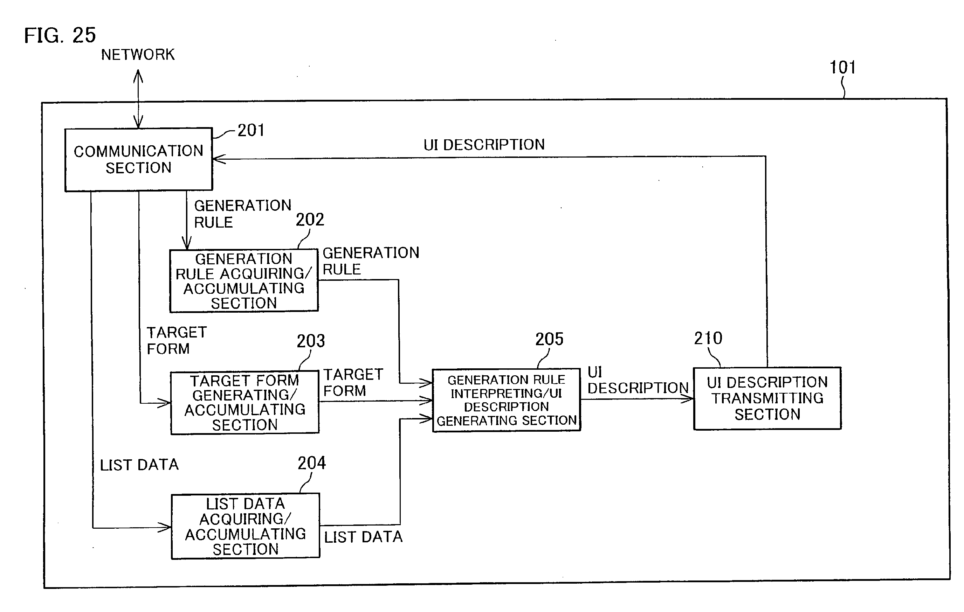

Fig. 25 is a function block diagram illustrating the UI description generation server 101 as an example of Embodiment 2 of the present invention. Only main data flows are illustrated therein.

A communication section 201 performs communication with the digital television receiver 120 via the network so as to accept a request for generation of the UI description. The communication section 201 also performs communication with the information server 110 so as to receive the list data. Alternatively, the communication section 201 may be so arranged that the communication section 201 performs communication with the UI description element server 100 via the network so as to receive the generation rule and/or the target form.

A generation rule acquiring/accumulating section 202 holds the generation rule in advance, and transmits the generation rule to a generation rule interpreting/UI description generating section 205. Alternatively, the generation rule acquiring/ accumulating section 202 may be so arranged that the generation rule acquiring/ accumulating section 202 acquires the generation rule from the UI description element server 100 through the communication section 201 and accumulates the generation rule, and transmits the acquired generation rule to the generation rule interpreting/UI description generating section 205.

A target form acquiring/accumulating section 203 holds the target form in advance, and transmits the target form to the generation rule interpreting/UI description generating section 205. Alternatively, the target form acquiring/ accumulating section 203 may also be so arranged that the target form acquiring/accumulating section 203 acquires the target form from the UI description element server 100 through the communication section 201 and accumulates the target form, and transmits the acquired target form to the generation rule interpreting/UI description generating section 205.

A list data acquiring/accumulating section 204 acquires the list data from the information server 110 through the communication section 201 and accumulates the list data, and transmits the acquired list data to the generation rule interpreting/UI description generating section 205. The list data acquiring/accumulating section 204 may also so arranged that the list data acquiring/accumulating section 204 holds the list data in advance, and transmits the list data to the generation rule interpreting/UI description generating section 205.

The generation rule interpreting/UI description generating section 205 interprets the generation rule received from the generation rule acquiring/ accumulating section 202 and applies the generation rule thus interpreted, so as to embed, into the target form received from the target form acquiring/ accumulating section 203 as a template, information extracted from the list data received from the list data acquiring/ accumulating section 204, thereby generating the UI description. The generation rule interpreting/UI description generating section 205 transmits the UI description thus generated to a UI description transmitting section (user interface data transmitting means) 210.

The UI description transmitting section 210 transmits the UI description received from the generation rule interpreting/UI description generating section 205 to the digital television receiver 120 through the communication section 201. The UI description thus transmitted is executed in the digital television receiver 120 so as to realize a UI with which information provided from the information server is utilized.

< As to Outline of Main Data Flows in Embodiment 2>

Data flows at the time when the generation rule interpreting/UI description generating section 205 generates the UI description are same as that in Embodiment 1. Accordingly, description thereof is omitted.

<As to Flow in Generation of Description>

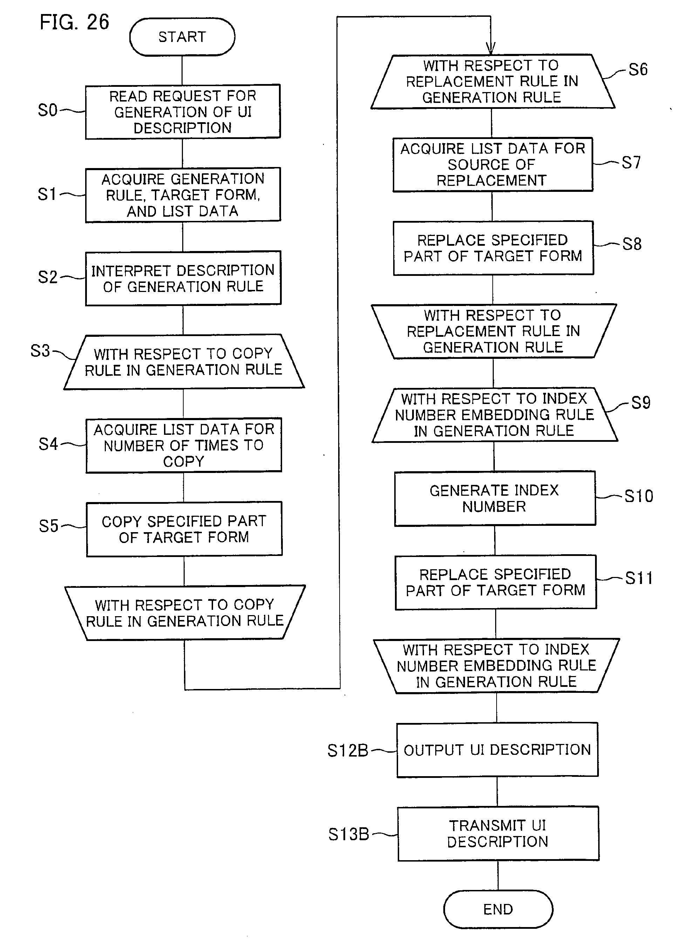

Fig. 26 is a flowchart illustrating procedural steps in a process in which the UI description generation server 101 generates a UI description so as to transmit the UI description to the digital television receiver 120
First, the communication section 201 receives a request for generation of the UI description from the digital television receiver 120 and transmits the request to the generation rule interpreting/UI description generating section 205 through a path that is not illustrated (S0).

Next, the generation rule interpreting/UI description generating section 205 acquires the generation rule and the target form from the generation rule acquiring/ accumulating section 202 and the target form acquiring/accumulating section 203, respectively (S1). The generation rule acquiring/accumulating section 202 and the target form acquiring/ accumulating section 203 may be so arranged that the generation rule acquiring/accumulating section 202 transmits the generation rule held in advance to the generation rule interpreting/UI description generating section 205 and the target form acquiring/ accumulating section 203 transmits the target form held in advance to the generation rule interpreting/ UI description generating section 205. Alternatively, it may be so arranged that the generation rule acquiring/ accumulating section 202 acquires the generation rule from the UI description element server 100 on the network through the communication section 201 and transmits the generation rule to the generation rule interpreting/UI description generating section 205, and the target form acquiring/accumulating section 203 acquires the target form from the UI description element server 100 on the network through the communication section 201 and transmits the target form to the generation rule interpreting/UI description generating section 205. Further, it also may be so arranged that the generation rule acquiring/accumulating section 202 transmits, to the generation rule interpreting/UI description generating section 205, the generation rule acquired in advance from the UI description element server 100 and accumulated, and the target form acquiring/accumulating section 203 transmits, to the generation rule interpreting/UI description generating section 205, the target form acquired in advance from the UI description element server 100 and accumulated.
Next, the generation rule interpreting/UI description generating section 205 interprets the generation rule received from the generation rule acquiring/accumulating section 202, thereby figuring out which UI description generation rule is contained in the generation rule (S2).
Next, the generation rule interpreting/UI description generating section 205 repeats performing steps S4 and S5 described below, with respect to each copy generation rule of character string in the generation rule (S3).
The generation rule interpreting/UI description generating section 205 extracts information on the number of times to copy character strings from the list data, and performs calculation so as to obtain the number of windows necessary to display all thumbnail images and the like of moving images, that is, the number of times to copy (S4).
The generation rule interpreting/UI description generating section 205 copies a specified part of the target form for the number of times to copy, which specified part has an identifier specified by the copy generation rule of character string (S5).
Next, the generation rule interpreting/UI description generating section 205 repeats performing steps S7 and S8 described below, with respect to each replacement generation rule of character string in the generation rule (S6).
The generation rule interpreting/UI description generating section 205 extracts, from the list data, information used in replacement of the character string (S7).
The generation rule interpreting/ UI description generating section 205 replaces a part of the character string to be replaced in the target form with the information extracted in S7 (S8).
Next, the generation rule interpreting/UI description generating section 205 repeats performing steps S10 and S11 described below, with respect to each index number embedding generation rule in the generation rule (S9).
The generation rule interpreting/UI description generating section 205 calculates the number to be embedded (S10), and embeds this number into an appropriate part of the target form (S11). For example in the case of page numbers, numbers 1, 2, 3 and the like are embedded into respective pages.
Next, the UI description completed as a result of the foregoing edition according to the generation rules is outputted to the UI description transmitting section 210 (S 12B).
Lastly, the UI description transmitting section 210 transmits this received UI description to the digital television receiver 120 having made the request for generation of the UI description (S13B).

[Application Example of Embodiment 2]

The following describes an exemplary case in which Embodiment 2 is applied to an application for reproduction of moving images.

<As to Arrangement in Application Example>

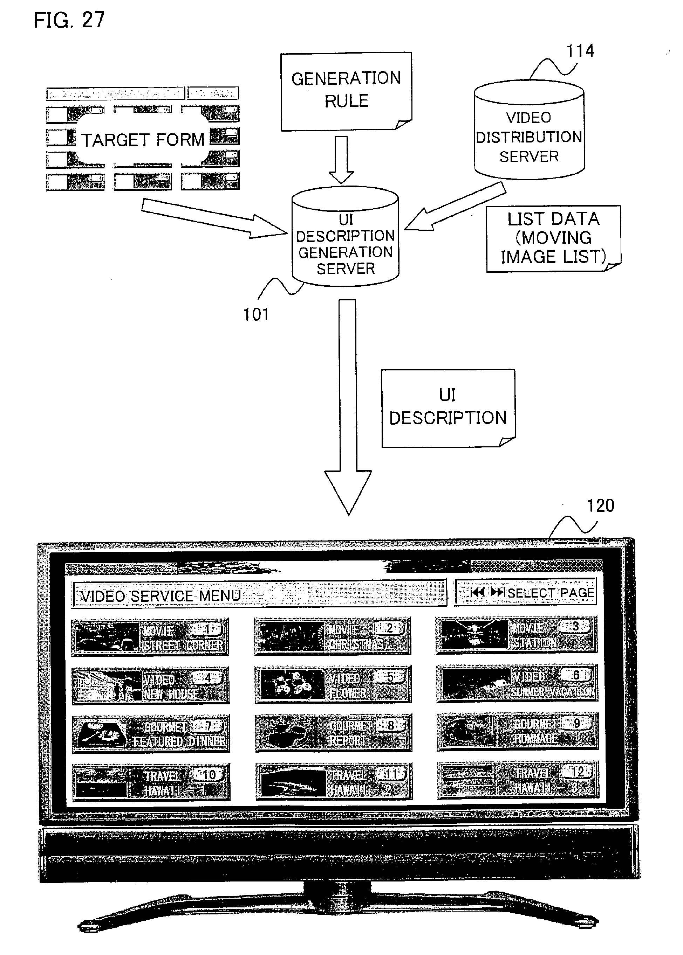

Fig. 27 shows an example of an arrangement of a system in a case where the UI description generation server 101 generates the UI description for selecting and reproducing moving images distributed from a video distribution server 114 in the digital television receiver 120.

The UI description generation server 101 holds in advance the generation rule and the target form for reproduction of moving images.

When a function to reproduce the moving images distributed from the video distribution server 114 is selected through the digital television receiver 120, the digital television receiver 120 transmits, to the UI description generation server 101, a request for generation of the UI description for reproduction of moving images.

Having received the request for generation of the UI description for reproduction of moving images, the UI description generation server 101 interprets the generation rule regarding generation of UI description for reproduction of moving images, and rewrites, with the use of the list data of the moving images that is obtained from the video distribution server 114, the target form for generating the UI description for reproduction of moving images, thereby generating the UI description for reproduction of moving images. The UI description generation server 101 transmits the generated UI description for reproduction of moving images to the digital television receiver 120.

The digital television receiver 120 interprets the received UI description to realize a user interface concerning reproduction of moving images distributed from the video distribution server 114.

<As to Flow in Generation of UI Description in Application Example>

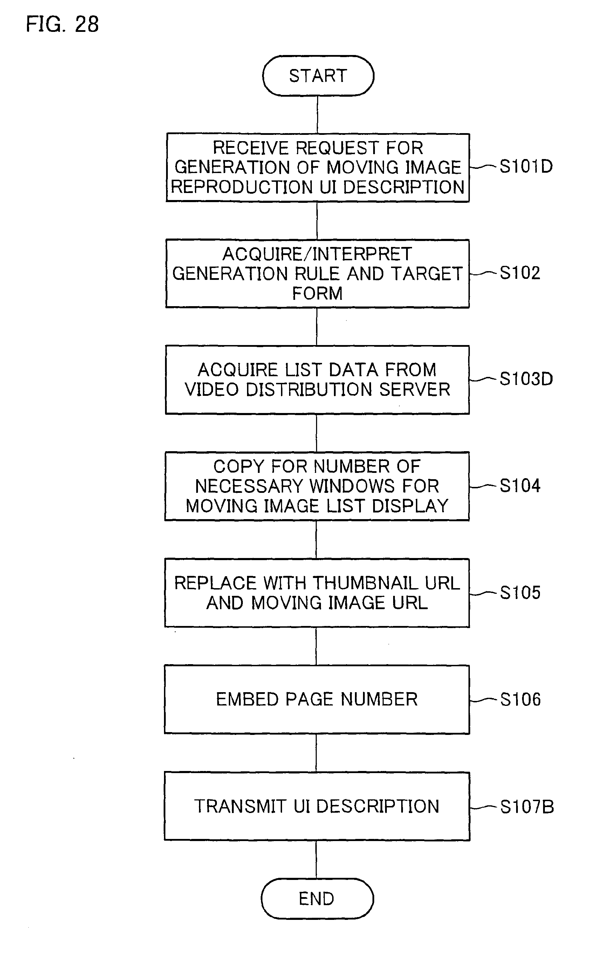

Fig. 28 is a flowchart schematically illustrating procedural steps in the process of generating the UI description in the Application Example.

First, the communication section 201 transmits a request for generation of the UI description, which request is sent from the digital television receiver 120, to the generation rule interpreting/UI description generating section 205 through a path that is not illustrated (S101D).

Next, the generation rule interpreting/UI description generating section 205 obtains the generation rule and the target form, both for generating the UI description used in an application for reproduction of moving images, from the generation rule acquiring/ accumulating section 202 and the target form acquiring/accumulating section 203, respectively, and interprets the generation rule (S102).

Next, the generation rule interpreting/UI description generating section 205 obtains the list data, for generating the UI description used in the application for reproduction of moving images, from the video distribution server 114 through the list data acquiring/ accumulating section 204 and the communication section 201 (S103D).

Next, on the basis of the number of contents of the moving images that is specified by the list data thus obtained and the number of thumbnail images of the contents of the moving images that are displayable on a single screen, the generation rule interpreting/UI description generating section 205 calculates the number of necessary list windows of recorded images, that is, the number of times to copy, and makes a copy of a specified part for the number of times specified (S104).

Next, the generation rule interpreting/UI description generating section 205 replaces a moving image file reference character string and a thumbnail file reference character string in the target form with a thumbnail file name (URL) and a moving image file name, each obtained from the list data (URL), respectively (S105).

Next, the generation rule interpreting/ UI description generating section 205 replaces the page numbers in the list windows of recorded images in the target form with index numbers (S106).

Lastly, the generation rule interpreting/UI description generating section 205 outputs this generated UI description to the UI description transmitting section 210. Then, the UI description transmitting section 210 transmits the received UI description to the digital television receiver 120 through the communication section 201 (S107B).

Note that explanation of outline of the processing performed in steps S104 to S106, which are described above, is omitted because it is the same as the explanation given in <As to Flow in Generation and Execution of UI description in Application Example 1 > above.

[Embodiment 3]

The present embodiment gives an explanation of a UI description generation server as an example which UI description generation server generates an XML description for realizing a UI, as an embodiment of a data generating device. Embodiment 3 differs from Embodiment 2 in that a plurality of target forms are used to generate a plurality of UI descriptions.

<As to Outline of How System Is Arranged and How The System Operates in Embodiment 3>

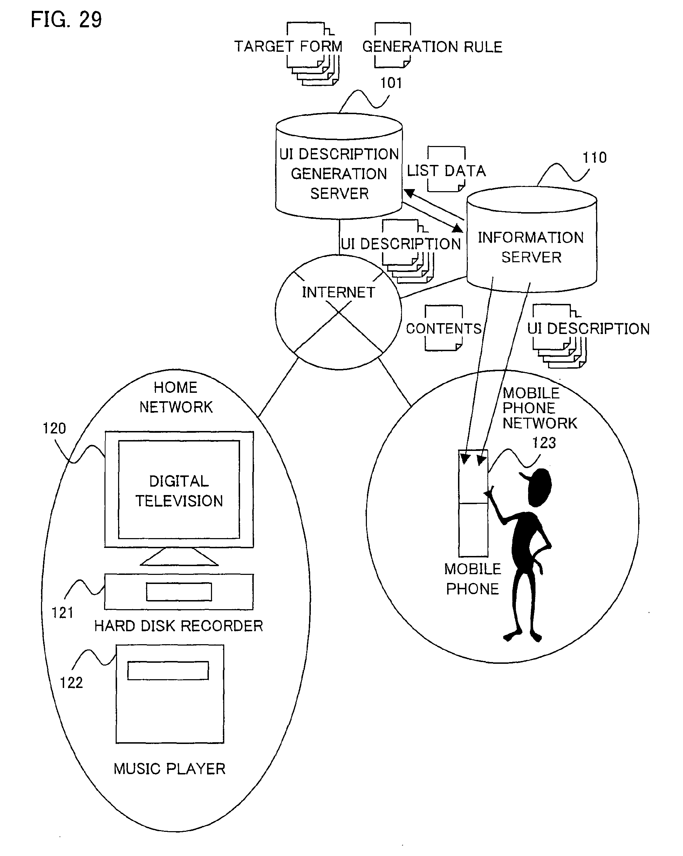

Fig. 29 illustrates an example of how a system including the data generating device of an embodiment of the present invention is arranged and an example of how the system operates.

The system according to the present embodiment includes: (1) a UI description generation server 101 for providing, via the Internet, a UI description that is generated data; (2) an information server 110 for providing, via a network such as the Internet, list data which is indicative of a list of various services and location information of contents used to generate the UI description and which also contains information indicative of the number of contents; and (3) an AV device such as a digital television receiver 120, a hard disk recorder 121, and a music player 122, or a mobile phone 123.

The following schematically explains how the system including the UI description generation server 101 according to the present embodiment operates. Note that the explanation is based upon such assumption that the information server 110 has been already activated and has become ready to provide information.

First, the mobile phone 123 requests the information server 110 to provide information. When providing a service to the mobile phone 123, the information server 110 requests the UI description generation server 101 to generate a UI description with which a necessary UI is realized on the mobile phone 123. The UI description generation server 101 downloads the list data from the information server 110, and generates a plurality of UI descriptions (hereinafter, referred to as a UI description set) from the generation rule and a plurality of target forms (hereinafter, referred to as a target form set) all corresponding to the UI used when the information server 110 provides information to the mobile phone 123. The UI description generation server 101 transmits this generated UI description set to the information server 110. The information server 110 forwards the mobile phone 123 the UI description set thus obtained. Having received the UI description set thus forwarded, the mobile phone 123 sequentially executes respective UI descriptions contained in the UI description set, thereby realizing a UI through which information from the information server 110 is provided.

<As to Function Block Diagram of Embodiment 3>

The function block diagram of the present embodiment is the same as Fig. 25 that is a function block diagram of Embodiment 2. Thus, illustration thereof is omitted. However, it should be noted that each of a communication section 201, a target form acquiring/accumulating section 203, a generation rule interpreting/UI description generating section 205, and a UI description transmitting section 210 handles a plurality of target forms and a plurality of UI descriptions.

< As to Outline of Main Data Flows in Embodiment 3>

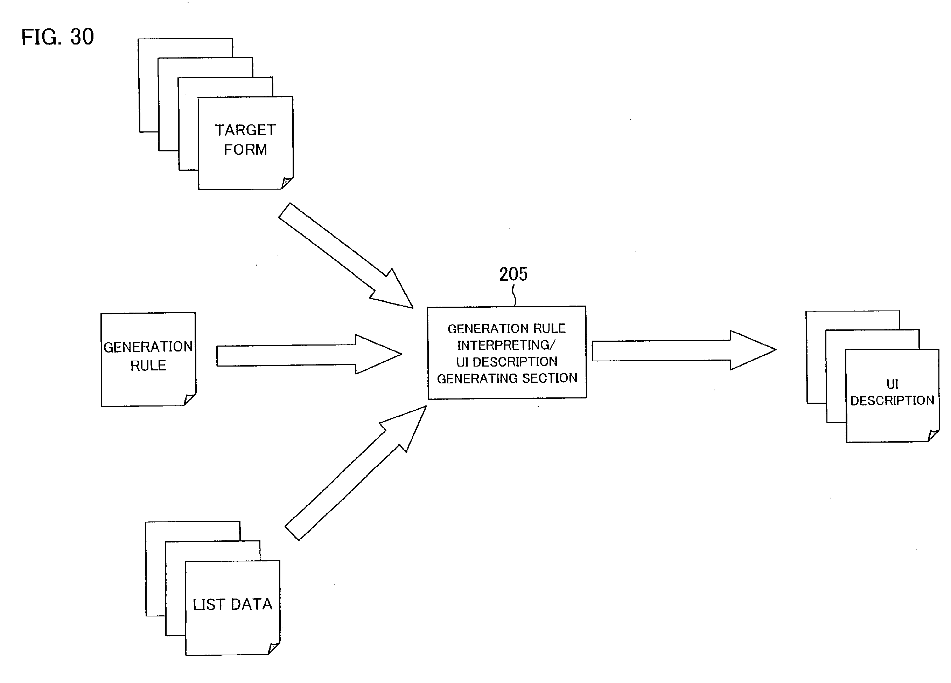

Fig. 30 illustrates data flows at the time when the generation rule interpreting/UI description generating section 205 generates the UI descriptions. The generation rule interpreting/UI description generating section 205 obtains, as inputs, a generation rule, a target form set made of a plurality of files, and list data, and outputs a UI description set made of a plurality of files.

The generation rule for generating the UI description set from the target form set contains a copy generation rule, a replacement generation rule, and an index number embedding generation rule. The generation rule interpreting/UI description generating section 205 interprets the generation rules, reads the list data on the basis of the generation rules thus interpreted, and edits the target form set with the use of information extracted from the list data thus read, thereby generating the UI description set.

<As to Copy Generation Rule>

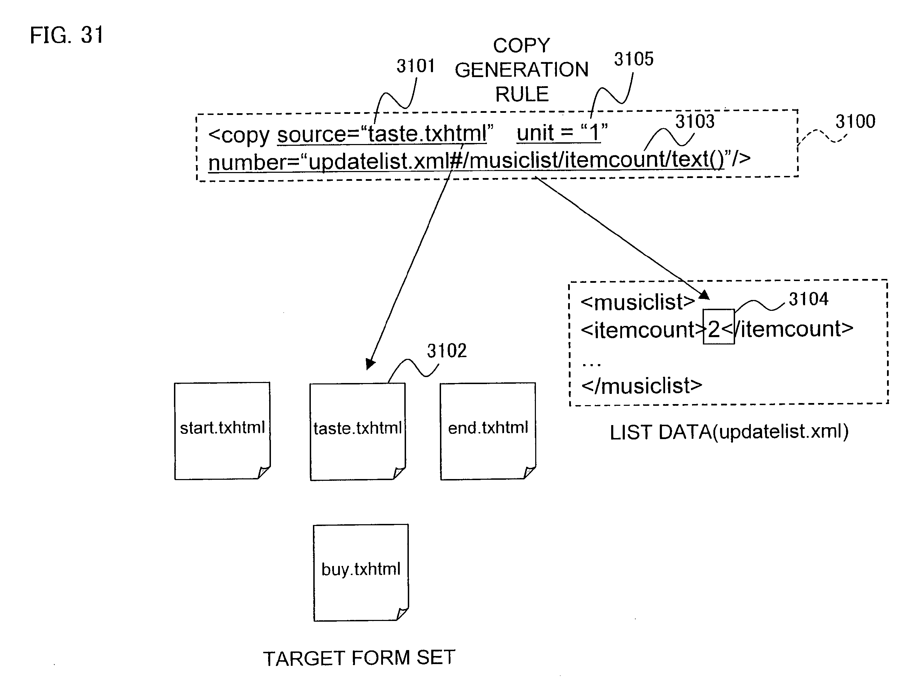

Fig. 31 shows an example of the copy generation rule described in the generation rule. On the basis of the copy generation rule, the generation rule interpreting/ UI description generating section 205 copies the files constituting the target form set and adds a resulting copy to the target form set.

A description 3100 surrounded by a dotted line is an example of the copy generation rule in the generation rule.

A description 3101 (source="taste.txhtml") underlined indicates that a file 3102 (taste.txhtml) constituting the target form set is to be copied.

A description 3103 (number="updatelist.xml# / musiclist/ itemcount/ text()") underlined indicates that "2", which is a character string 3104 present in a layer of /musiclist/itemcount/ in a list data file (updatelist.xml) is to be used for an operation to calculate the number of times to copy. A numerical value defined by the character string indicates the number of contents included in the list data.

A description 3105 (unit = "1") underlined indicates that the number (unit) of contents to be embedded into each file 3102 constituting the target form set is 1.

The number of times to copy the file 3102 constituting the target form set is calculated by the following formula.

$$\text{The number of times to copy} = (\text{the number of contents} -$$

$$1)/(\text{units}).$$

For example in the case of the description 3100 surrounded by the dotted line, (2 - 1)/ 1 = 1. Therefore, the number of times to copy is 1.

After the copy of the file 3102 constituting the target form has been made, the file name of the file 3102 is changed when the resulting copy is added to the target form set. An example of a method to change the file name is to add an integer starting with 0 to a part of the file name that is not an extension.

On the basis of the copy generation rule as defined in the description 3100 surrounded by the dotted line, the file 3102 (taste.txhtml) is copied once, and this copy is added to the target form set. Thus, the file names of the file 3102 and the copy thereof are changed to taste0.xhtml and taste1.xhtml, respectively.

In Fig. 31, the target form set is constituted of four kinds of target forms, including a target form (start.txhtml) of the UI description used to start a UI of a particular application, a target form (end.txhtml) of the UI description used to end a UI of a particular application, and a target form (buy.txhtml) of the UI description used to purchase a content in a particular application, in addition to the file 3102.

<As to Replacement Generation Rule>

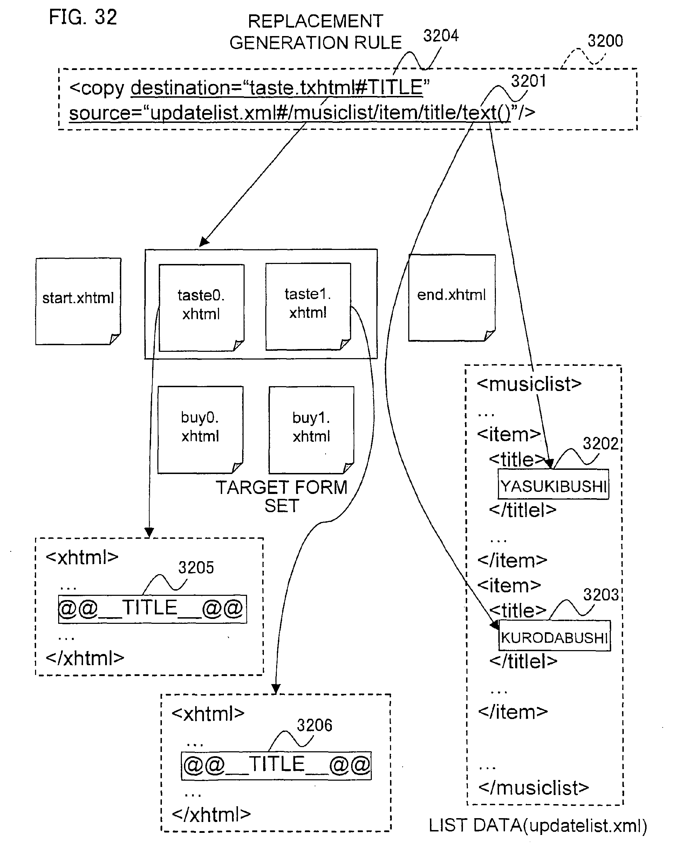

Fig. 32 shows an example of the replacement generation rule described in the generation rule. On the basis of the replacement generation rule, the generation rule interpreting/UI description generating section 205 replaces a predetermined part of the files constituting the target form set.

A description 3200 surrounded by the dotted line shows an example of a replacement generation rule in the generation rule.

A description 3201 (source="updatelist.xml# / musiclist/ item/title / text()") underlined indicates that a character string 3202 (*"yasukibushi* folk song") and a character string 3203 (*"kurodabushi* folk song") present in a layer of /musiclist/ item/title/ in list data file (updatelist.xml) are to be used in replacement.

A description 3204 (destination="taste.txhtml#TITLE") underlined indicates that, among descriptions in files that are copies of the file 3102 (taste.txhtml) constituting the target form set, character strings 3205 and 3206 that agree with a character string @@_TITLE_@@ are to be replaced by the character strings 3202 and 3203.

On the basis of the replacement generation rule as defined in the description 3200 surrounded by the dotted line, the character string 3205 in the file taste0.xhtml is replaced by *"yasukibushi* folk song", and the character string 3206 in the file taste1.xhtml is replaced by *"kurodabushi* folk song".

<As to Index Number Embedding Generation Rule>

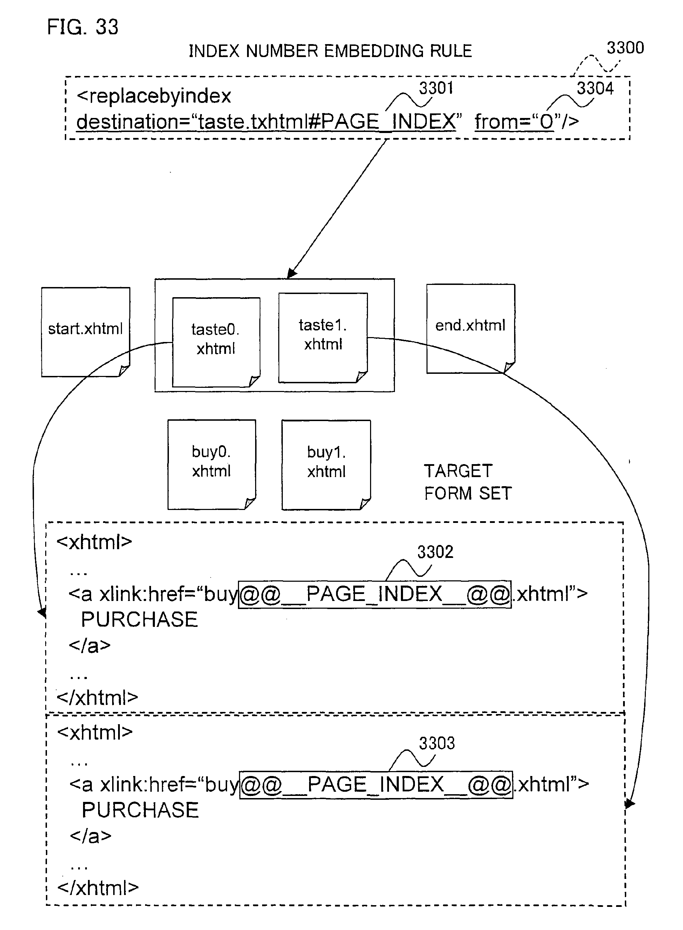

Fig. 33 shows an example of the index number embedding generation rule described in the generation rule. On the basis of the index number embedding generation rule, the generation rule interpreting/UI description generating section 205 embeds an index number into a predetermined part of the target form.

A description 3300 surrounded by the dotted line shows an example of the index number embedding generation rule in the generation rule.

A description 3301 (destination="taste.txhtml#PAGE_INDEX") underlined indicates that the index number is to be embedded into character strings 3302 and 3303 that agree with a character string @@_PAGE_INDEX_@@, among descriptions in files that are copies of the file 3102 (taste.txhtml) in the target form set. Further, the description "0" in a description 3304 (from="0") underlined indicates that the index number that is to be embedded starts with 0.

On the basis of the index number embedding generation rule in the description 3300 surrounded by the dotted line, the character string 3302 in the file taste0.xhtml is replaced by "0", and the character string 3303 in the file taste1.xhtml is replaced by "1". More specifically, link references (xlink:href="buy@@_PAGE_INDEX_@@.xhtml") specified by xlink: href attributes in the file taste0.xhtml and the file taste1.xhtml are changed to "buy0.xhtml" and "buy1.xhtml", respectively.

<Supplemental Explanation of Embodiment 3>

In the present embodiment, in accordance with the copy generation rule, the copies of the file 3102, which is contained in the target form set and copied, are made by copying a single file to produce the first copy to the last copy. However, different files may be copied so as to respectively correspond to the first copy, the last copy, and other intermediate copy other than the first copy and the last copy.

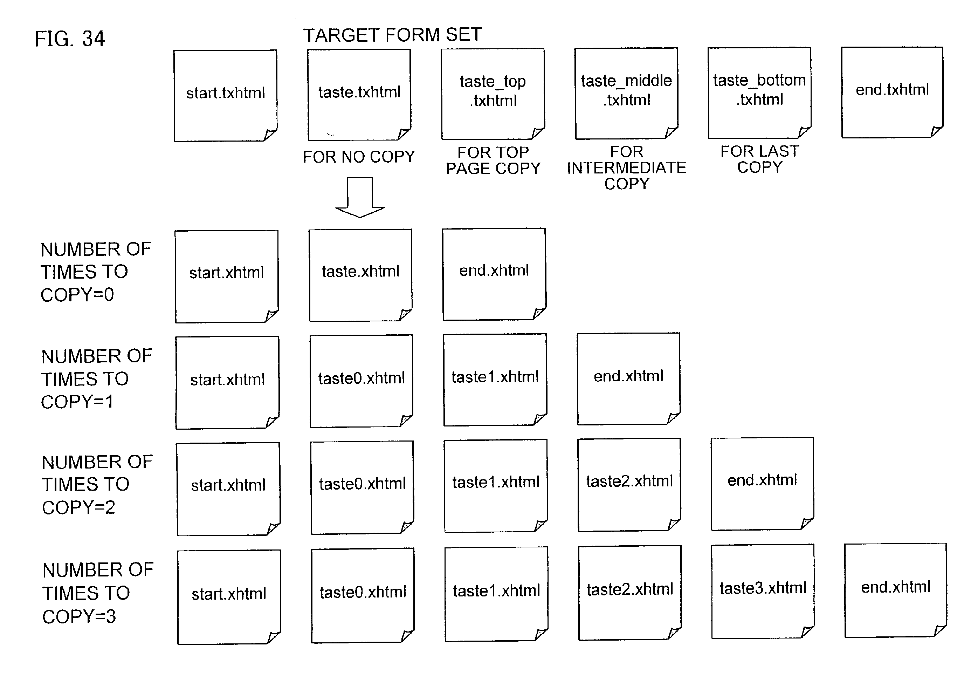

In this case, as illustrated in Fig. 34, original files from which respective copies are to be produced are individually prepared in advance in the target form set, and each of the original files is given a file name indicating that it is the original file and including a predetermined suffix "_top" (this suffix indicates that the file is an original file from which the first copy is produced), "_middle" (this suffix indicates that the file is an original file from which the intermediate copies other than the first and last copies are produced), or "_bottom" (this suffix indicates that the file is an original file from which the last copy is produced).

When performing the copy on the basis of the copy generation rule, the generation rule interpreting/UI generating section 205 changes the file name indicating the original file from which the copy is produced, according to the number of times to be copied.

Concretely, if the number of times to copy is zero, the file taste.txhtml in the target form set is used. The file name is changed to taste.xhtml.

If the number of times to copy is one, a file taste_top.txhtml and a file taste_bottom.txhtml are used. The file names are changed to taste0.xhtml and taste1.xhtml, respectively.

If the number of times to copy is two, the file taste_top.txhtml, a file taste_middle.txhtml, and the taste_bottom.txhtml are used. The file names are changed to taste0.xhtml, taste1.xhtml, and taste2.xhtml, respectively.

If the number of times to copy is three or more, the file taste_top.txhtml, the file taste_middle.txhtml, and the file taste_bottom.txhtml are used, and a plurality of copies of the file taste_middle.txhtml are produced and used. The file name of the file taste_top.txhtml after the copy is taste0.xhtml. Moreover, the file names of the file taste_middle.txhtml, from which a plurality of copies are to be produced, after the copy start with taste1.xhtml and taste2.xhtml. Further, the file name of the file taste_bottom.txhtml after the copy is taste3.xhtml (in a case where the number of times to copy is three).

The foregoing arrangement makes it possible to easily generate the UI description of a UI differing only in the top page and the last page, by specifying a description for the top page as the original from which the first copy is to be made, and specifying a description for the last page as the original from which the last copy is to be made.

<As to Flow in Generation of UI Description>

The flow of the process in which the UI description generation server 101 receives the request for generation of the UI description from the information server 110, interprets the generation rule, generates the UI description, and transmits the UI description to the information server 110 is the same as that of the process in Embodiment 2 which process is performed when the request for generation of the UI description is received from the digital television receiver 120. Thus, description thereof is omitted. There is, however, a difference in that a plurality of files are handled as the target form and a plurality of files are generated as the UI description.

[Application Example of Embodiment 3]

The following describes an exemplary case in which Embodiment 3 is applied to an incoming call signaling song preview/ purchase application.

<As to Arrangement in Application Example>

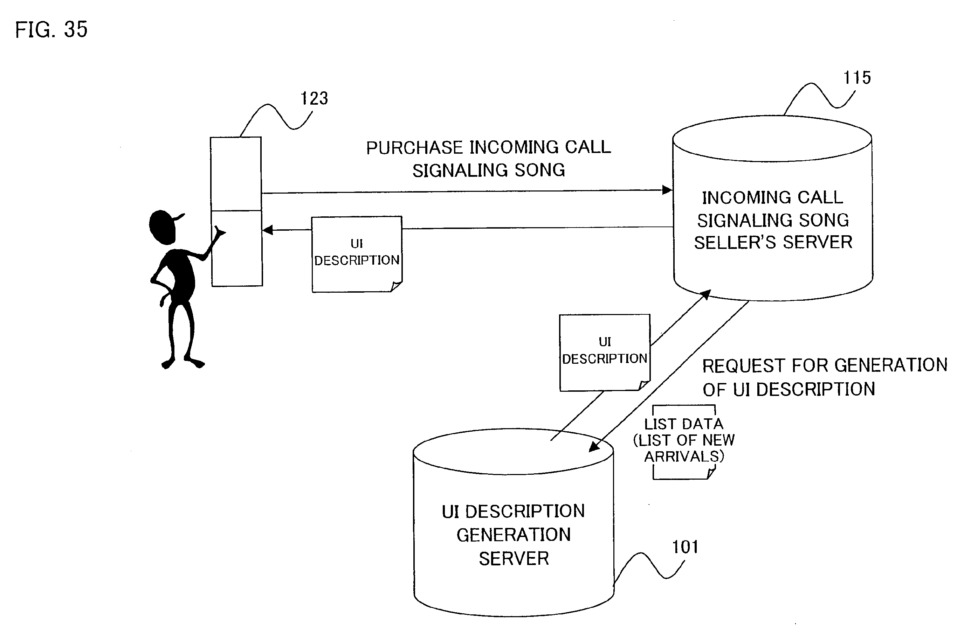

Fig. 35 shows an example of a system arrangement. In this system, a newly-arrived incoming call signaling song for sale is delivered from an incoming call signaling song seller's server 115, and the newly-arrived incoming call signaling song is introduced, tried, and purchased on the mobile phone 123. The UI description for realizing a UI of the incoming call signaling song preview/purchase application is generated in the UI description generation server 101.

The UI description generation server 101 holds in advance the generation rule and the target form for preview/ purchase of incoming call signaling song.

When selection of the incoming call signaling song preview/ purchase application is entered in the mobile phone 123 by a user, the mobile phone 123 sends, to the incoming call signaling song seller's server 115, a request for transmission of the UI description for preview/purchase of incoming call signaling song. Receiving the request for transmission of the UI description for preview/purchase of incoming call signaling song, the incoming call signaling song seller's server 115 sends, to the UI description generation server 101, a request for generation of the UI description for preview/purchase of incoming call signaling song. Receiving the request for generation of the UI description for preview/purchase of incoming call signaling song, the UI description generation server 101 interprets the generation rule for preview/purchase of incoming call signaling song, executes the generation rule, and rewrites the target form set for preview/purchase of incoming call signaling song with the use of the list data indicative of a list of new arrivals which list data is obtained from the incoming call signaling song seller's server 115, thereby generating the UI description for preview/purchase of incoming call signaling song. The UI description generation server 101 then sends the UI description to the incoming call signaling song seller's server 115.

The incoming call signaling song seller's server 101 forwards the received UI description for preview/purchase of incoming call signaling song to the mobile phone 123. The mobile phone 123 interprets and executes the UI description for preview/purchase of incoming call signaling song so as to realize a UI with which incoming call signaling song is tried and purchased. A user tries and purchases the incoming call signaling song by operating the mobile phone 123.

<As to UI for Preview/purchase of incoming call signaling song in Application Example>

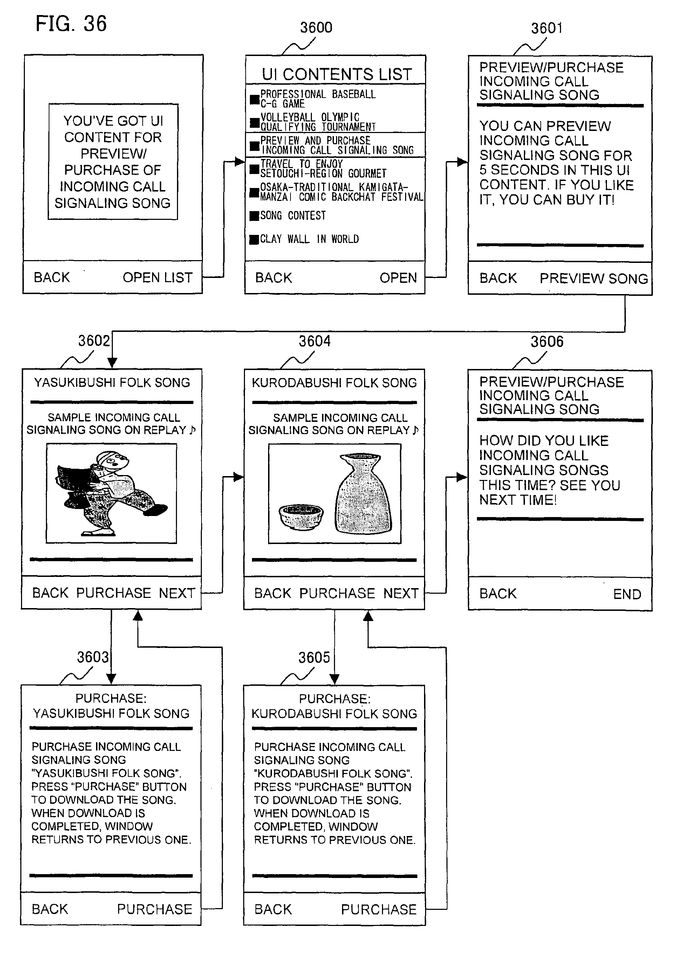

Fig. 36 shows an example of a UI with which an incoming call signaling song is tried and purchased.

First, a message "YOU'VE GOT A UI CONTENT FOR PREVIEW/PURCHASE OF INCOMING CALL SIGNALING SONG" is displayed on a screen of the mobile phone 123. When a user selects an "OPEN THE LIST" button, the screen switches to a window 3600. If a "PREVIEW AND PURCHASE INCOMING CALL SIGNALING SONG" menu is selected on the window 3600, the screen switches to a window 3601, and execution of the UI with which an incoming call signaling song is previewed and purchased starts. If a "PLAY" button is selected on the window 3601, the screen switches to a window 3602 and displays an introduction of the first song, *yasukibushi* folk song, and preview sounds are reproduced. If a "PURCHASE" button is selected on the window 3602, the screen switches to a window 3603 so as to display a window to confirm the purchasing of the *yasukibushi* folk song. If a "NEXT" button is selected on the window 3602, the screen switches to a window 3604 so as to display an introduction of the second song, *kurodabushi* folk song, and preview sounds are reproduced. If the "PURCHASE" button is selected on the window 3604, the screen switches to a window 3605 so as to display a window to confirm the purchasing of the *kurodabushi* folk song. If the "NEXT" button is selected on the window 3604, the screen switches to a window 3606 so as to display a window to end the preview/purchase of incoming call signaling song. If an "END" button is selected on the window 3606, the UI for preview/purchase of incoming call signaling song ends, and the screen returns to the window 3600.

<As to Target Form Set of Application Example>

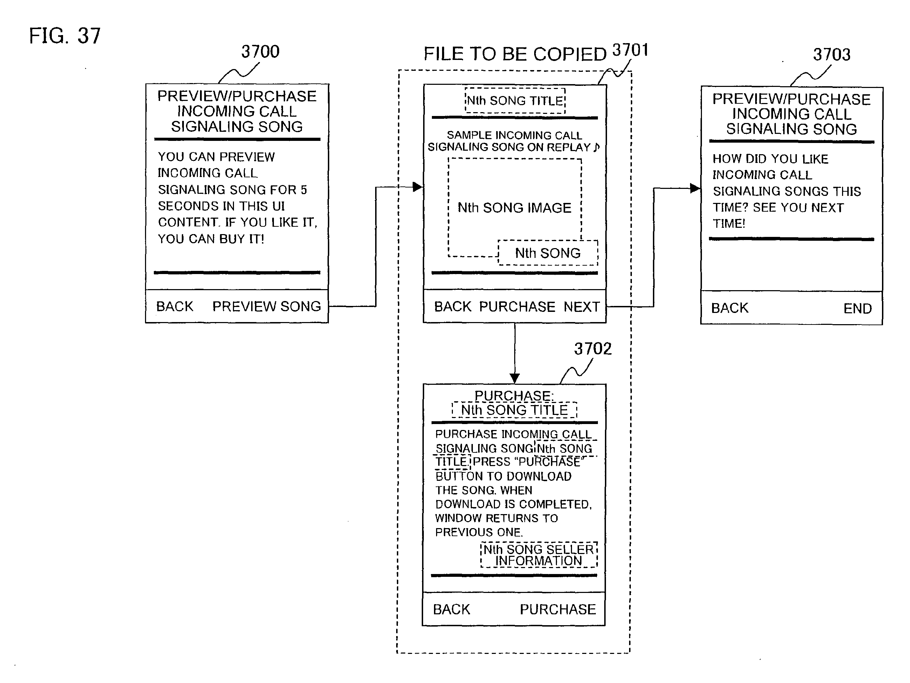

Fig. 37 shows an example of an arrangement of the target form set for preview/purchase of incoming call signaling song.

The target form set for preview/purchase of incoming call signaling song is constituted of a preview start window 3700, a song preview window 3701, a song purchase window 3702, and an end window 3703. Respective copies of the song preview window 3701 and the song purchase window 3702 are made according to the number of songs contained in the list data, and are added to the target form set. To describe the windows in comparison with the files constituting the target form set shown in Fig. 31, the description of the preview start window 3700 is included in the file start.txhtml, the description of the song preview window 3701 is included in the file taste.txhtml, the description of the song purchase window 3702 is included in the file buy.txhtml, and the description of the end window 3703 is included in the file end.txhtml.

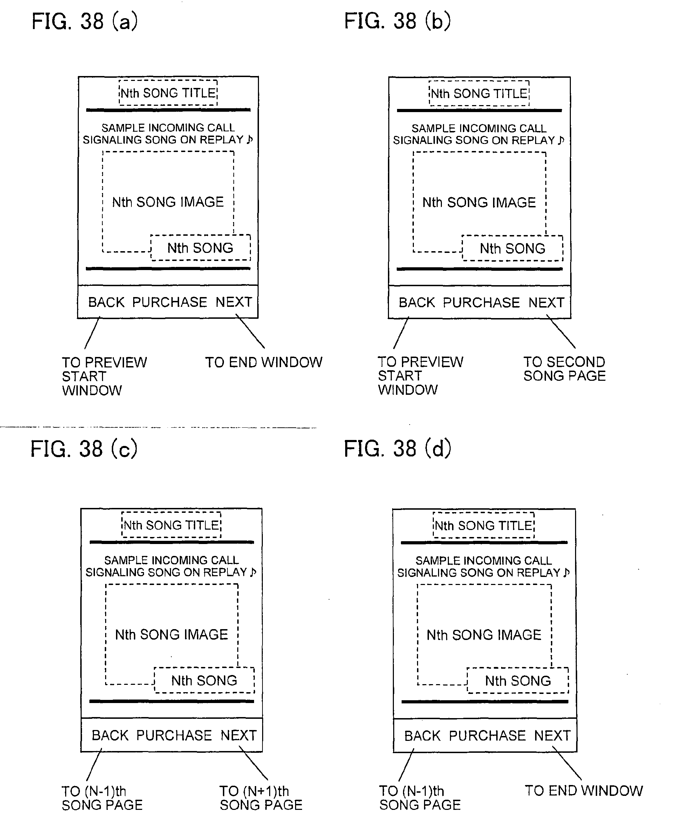

Figs. 38(a) to 38(d) show examples of the song preview window 3701 used to make the first copy, the last copy, and the intermediate copies other than the first copy and the last copy, in a case where the file contained in the target form set for preview/purchase of incoming call signaling song and serves as the original file from which the copy is to be made is changed according to the number of times to copy.

The descriptions in the windows shown in Figs. 38(a) to 38(d) are the same, except that the window to jump to when the "RETURN" button or the "NEXT" button is selected differs.

Fig. 38(a) shows a song preview window that is used when the list data contains only one song and no copy of the file constituting the target form set is to be carried out. With the "RETURN" button, the window switches to the preview start window 3700. With the "NEXT" button, the window switches to the end window 3703. The description of this window is included in the file taste.txhtml shown in Fig. 34.

Fig. 38(b) shows a song preview window that is used for the first song when the list data contains two or more songs. With the "RETURN" button, the window switches to the preview start window 3700. With the "NEXT" button, the window switches to the song preview window for the second song. The description of this window is included in the file taste_top.txhtml shown in Fig. 34.

Fig. 38(c) shows a song preview window used for songs other than the first song and the last song when the list data contains three or more songs. With the "RETURN" button, the window switches to the song preview window for the previous song. With the "NEXT" button, the window switches to the song preview window for the following song. The description of this window is included in the file taste_middle.txhtml shown in Fig. 34.

Fig. 38(d) shows a song preview window that is used for the last song when the list data contains two or more songs. With the "RETURN" button, the window switches to the song preview window for the previous song. With the "NEXT" button, the window switches to the end window 3703. The description of this window is included in the file taste_ bottom.txhtml shown in Fig. 34.

<As to Flow in Generation of the UI description in the Application Example>

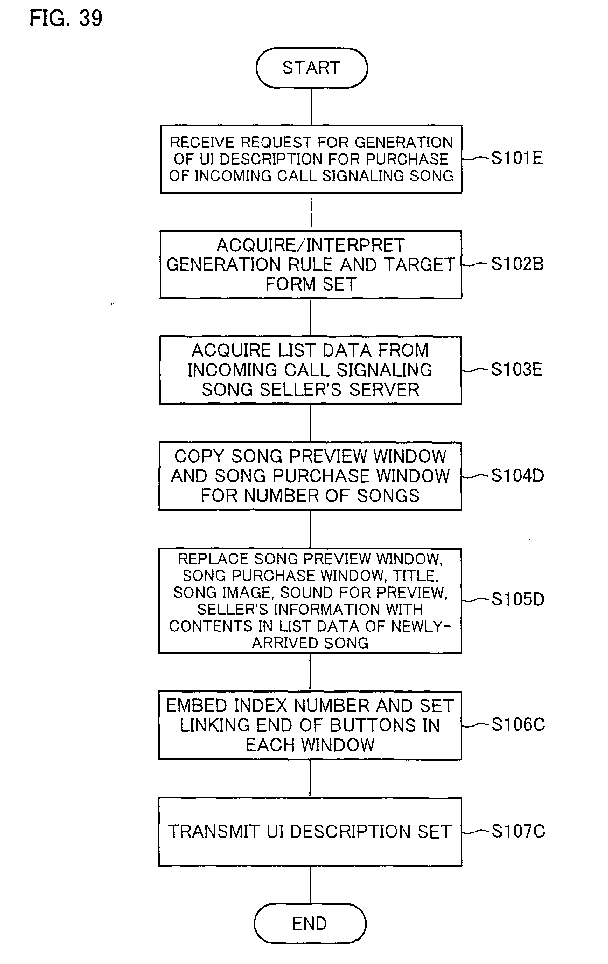

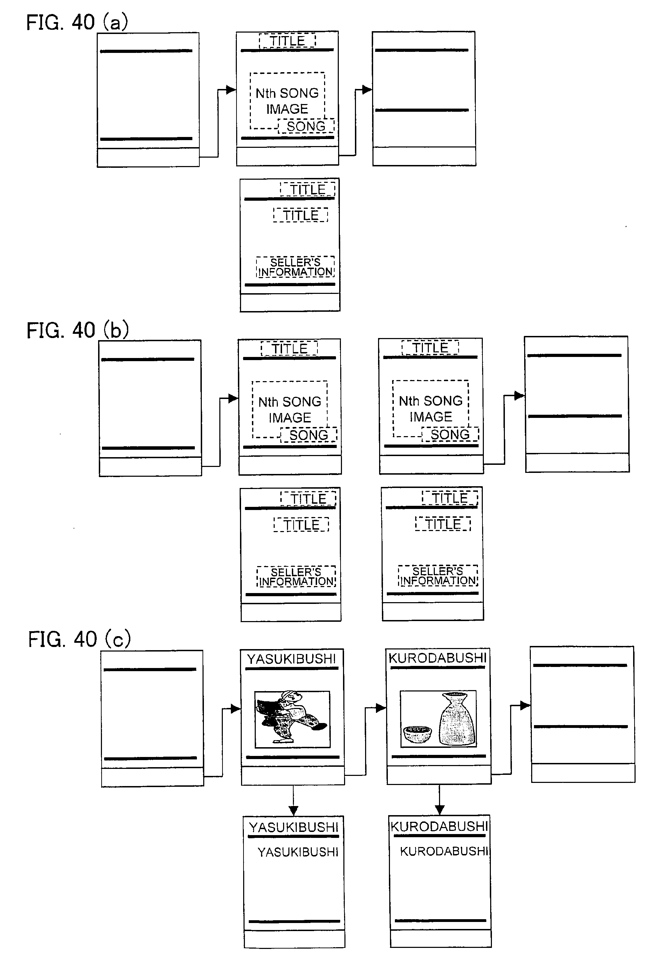

Fig. 39 is a flowchart showing procedural steps in a process in which the UI description of the Application Example is generated. Fig. 40 is a schematic diagram illustrating the process of generating the UI description set.

First, the communication section 201 transmits the request for generation of the UI description, which request is sent from the incoming call signaling song seller's server 115, to the generation rule interpreting/UI description generating section 205 through a path that is not illustrated (S101E).

Next, the generation rule interpreting/UI description generating section 205 obtains, from the generation rule acquiring/accumulating section 202 and the target form acquiring/ accumulating section 203, the generation rule and the target form set for generating the UI descriptions used in an incoming call signaling song preview/purchase application, respectively, and interprets the generation rule (S102B).

Next, the generation rule interpreting/UI description generating section 205 obtains the list data, used to generate the UI description set used in the incoming call signaling song preview/ purchase application, from the incoming call signaling song seller's server 115 through the list data acquiring/ accumulating section 204 and the communication section 201 (S103E).

Next, the generation rule interpreting/UI description generating section 205 calculates, from the number of songs on the list of new arrivals as indicated by the list data obtained, the number of necessary song preview windows and the number of necessary song purchase windows, and copies a predetermined file of the target form set for the predetermined number of times (S104D). In this case, the song preview window file of the target form set, from which file copies are to be made, is changed according to the number of times to copy the file.

Next, the generation rule interpreting/UI description generating section 205 replaces predetermined character strings in a song preview window and a song purchase window of the target form set with a song title, a song image file name obtained from the list data, a preview sound file name obtained from the list data, and seller information which are obtained from the list data, respectively (S105D).

Next, the generation rule interpreting/UI description generating section 205 replaces, with the index numbers, song number sections included in link information of the song preview window and the song purchase window of the target form set (S106C).

Lastly, the generation rule interpreting/UI description generating section 205 outputs this generated UI description set to the UI description transmitting section 210, and the UI description transmitting section 210 transmits, through the communication section 201, the received UI description set to the mobile phone 123 via the incoming call signaling song seller's server 115 (S107C).

The following provides an outline of the processing carried out in S104D to S106C, with reference to Figs. 40 (a) to 40(c).

The target form set contains, as shown in Fig. 40(a), a set of UI descriptions for preview/purchase of incoming call signaling song.

Fig. 40(b) provides an outline of a state in which, among the files constituting this target form set, files corresponding to the song preview window and the song purchase window are copied to make the necessary number of copies. At this point, merely the respective files are copied and the file names are changed. However, the respective descriptions in the files are not changed.

Fig. 40(c) illustrates an outline of the processing carried out in S105D and in S106C. Fig. 40(c) shows a state in which the predetermined character strings in the song preview window and the song purchase window of the target form set are replaced with the song title, the song image file name, the preview sound file name, and the seller information which are obtained from the list data, respectively, and the song numbers included in the link information in the song preview window and the song purchase window of the target form set are replaced with the index numbers.

Fig. 40(c) shows a state of the UI description set thus completed.

<As Method of Transmitting UI Description>

In the Application Example of the present embodiment, the incoming call signaling song seller's server 115 collectively transmits, to the mobile phone 123, the generated UI description set for preview/purchase of incoming call signaling song for all windows. Alternatively, it may be so arranged that a UI description file corresponding to the preview start window 3700 is transmitted first, and, if a user operates a button so that it becomes necessary to switch a window, a necessary UI description file of a song preview scene 3702 or the like is separately transmitted.

[Embodiment 4]

The present embodiment describes, as an embodiment of a data generating device, a target form generation server as an example which target generation server generates a target form from which a UI description is to be generated.

<As to Outline of How System Is Arranged and How The System Operates in Embodiment 4>

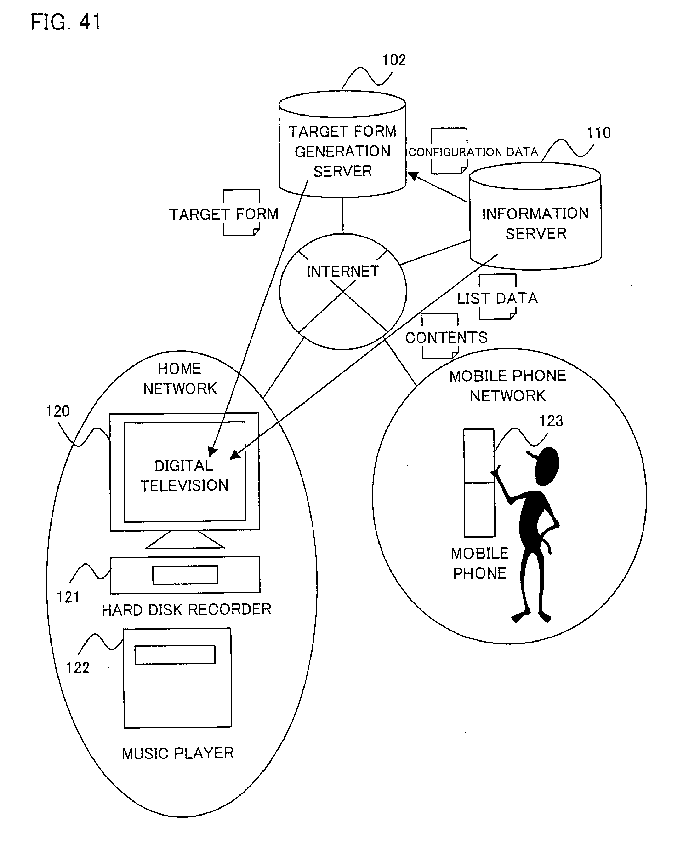

Fig. 41 shows an example of how a system including a target form generation server 102 of an embodiment of the present invention is arranged and an example of how the system operates.

The system according to the present embodiment includes: (1) a target form generation server 102 for providing, via the Internet, a target form that is data to be generated; (2) an information server 110 for providing, via a network such as the Internet, list data which is indicative of a list of various services and contents used to generate the UI description and configuration data (input data) that is information to be used for generating the target form; and (3) an AV device such as a digital television receiver 120, a hard disk recorder 121, and a music player 122, or a mobile phone 123.

The following discusses an outline of operation of the system including the AV device according to the present embodiment. In the following description, it is assumed that the target form generation server 102 and the information server 110 has been already activated and has become ready to provide information. Further, the configuration data is data needed to generate the target form corresponding to the list data that is necessary to generate the UI description in the Embodiments above. Further, a meta target form is a template of the target form.

First, the digital television receiver 120 requests the target form generation server 102 to generate the target form needed to realize a UI that is necessary to use the content that the information server 110 provides. In order to generate the target form requested, the target form generation server 102 downloads the configuration data from the information server 110 through the Internet, generates the target form with the use of the meta target form, the target form generation rule, and the configuration data, all of which are held in advance, and transmits the generated target form to the digital television receiver 120. Then, the digital television receiver 120 generates the UI description with the use of the target form thus supplied, the list data downloaded from the information server 110, and the generation rule held in advance, and executes the UI description, thereby realizing a user interface with which a user use various functions that the digital television receiver 120 has.

<As to Functional Block Diagram of Embodiment 4>

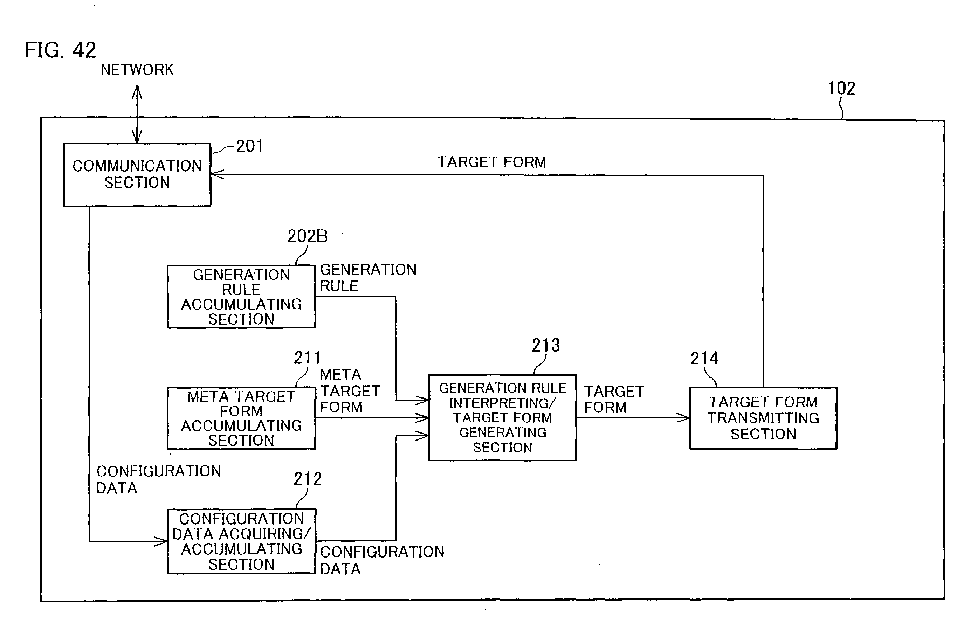

Fig. 42 is a function block diagram of the target form generation server 102 as an example according to Embodiment 4 of the present invention. Only main data flows are illustrated therein.

A communication section 201 performs communication with the digital television receiver 120 through a network to accept a request for generation of the target form. The communication section 201 also performs communication with the information server 110 to receive the configuration data.

A generation rule accumulating section 202B holds the target form generation rule in advance, and supplies the target form generation rule to the generation rule interpreting/target-form generating section (meta template data rewriting means) 213.

The meta target form accumulating section 211 holds the meta target form in advance, and supplies the meta target form to the generation rule interpreting/target form generating section 213.

The configuration data acquiring/ accumulating section 212 acquires the configuration data from the information server 110 through the communication section 201, accumulates the configuration data, and supplies the configuration data to the generation rule interpreting/target form generating section 213. Alternatively, it may be so arranged that the configuration data acquiring/accumulating section 212 holds the configuration data in advance and supplies the configuration data to the generation rule interpreting/ target form generating section 213.

The generation rule interpreting/ target form generating section 213 interprets the generation rule supplied from the generation rule accumulating section 202B. Applying the generation rule thus interpreted, the generation rule interpreting/target form generating section 213 uses the meta target form, supplied from the meta target form accumulating section 211, as the template, and embeds, into the meta target form, information extracted from the configuration data supplied from the configuration data acquiring/ accumulating section 212, thereby generating the target form. The generation rule interpreting/target form generating section 213 supplies this generated target form to the target form transmitting section (template data transmitting means) 214.

The target form transmitting section 214 transmits this target form, which is supplied from the generation rule interpreting/target form generating section 213, to the digital television receiver 120 through the communication section 201. The target form thus transmitted is used to generate the UI description in the digital television receiver 120, and the UI description thus generated is executed so as to realize a UI through which information supplied from the information server 110 is utilized.

<As to Outline of Main Data Flows in Embodiment 4>

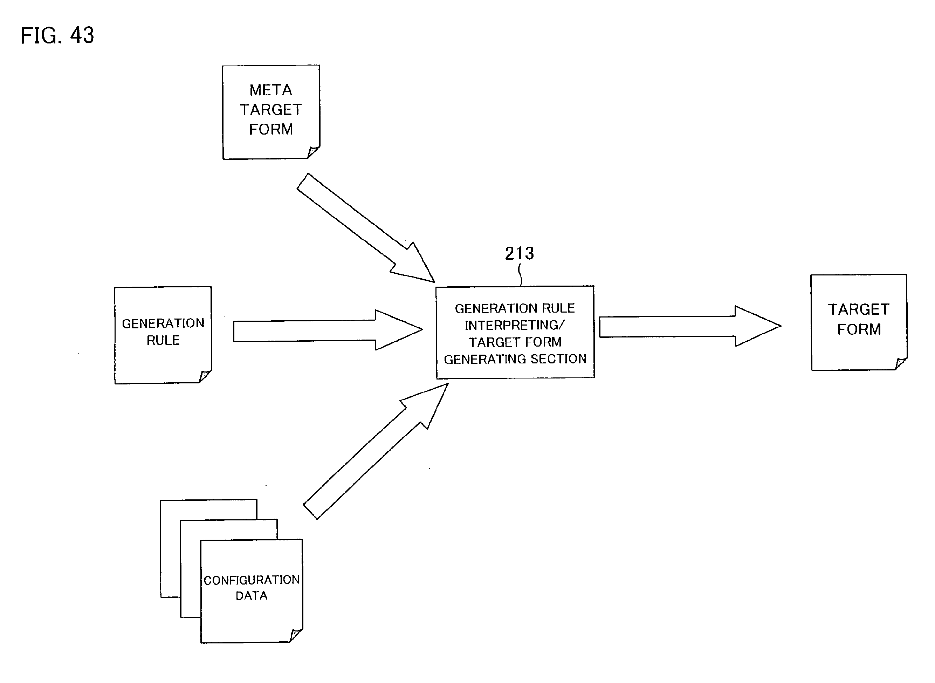

Fig. 43 shows data flows at the time when the generation rule interpreting/ target form generating section 213 generates the target form. The generation rule interpreting/target form generating section 213 receives, as inputs, the target form generation rule, the meta target form, and the configuration data, and produces the target form as an output.

<As to Flow in Generation of Target Form>

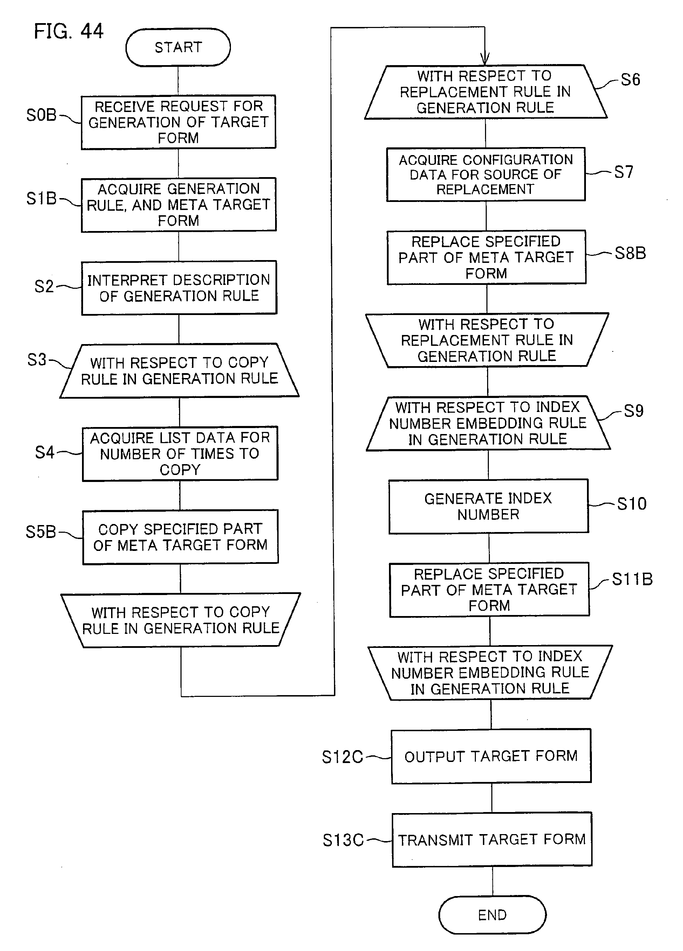

Fig. 44 is a flowchart showing the procedural steps in the process in which the target form generation server 102 receives the request for generation of the target form, interprets the target form generation rule and generates the target form, and transmits the target form to the digital television receiver 120.
First, the communication section 201 transmits the request for generation of the target form, which request is sent from the digital television receiver 120, to the generation rule interpreting/ target form generating section 213 through a path that is not illustrated (S0B).
Next, the generation rule interpreting/target form generating section 213 identifies the target form requested, and obtains the target form generation rule and the meta target form, both used to generate the target form, from the generation rule accumulating section 202B and the meta target form accumulating section 211, respectively (S1B).
Next, the generation rule interpreting/target form generating section 213 interprets the target form generation rule supplied from the generation rule accumulating section 202B and figures out which generation rule is contained in the target form generation rule (S2).
Next, the generation rule interpreting/target form generating section 213 repeats S4 and S5B, which are described below, with respect to each copy generation rule of the character string in the target form generation rule (S3).
The generation rule interpreting/target form generating section 213 extracts, from the configuration data, information on the number of times to copy the character string, and performs computation to calculate the number of windows necessary to display all thumbnail images and the like of the moving images, that is, the number of times to copy (S4).
The generation rule interpreting/UI description generating section 205 copies a specified part of the meta target form, which specified part has an identifier specified by the copy rule of the character string, for the number of times to copy (S5B).
Next, the generation rule interpreting/target form generating section 213 repeats S7 and S8B, which are described below, with respect to each replacement generation rule of character string in the target form generation rule (S6).
The generation rule interpreting/target form generating section 213 extracts, from the configuration data, information used to replace the character string (S7).
The generation rule interpreting/target form generating section 213 replaces, with the information extracted in S7, the character string that is included in the meta target form and is to be replaced (S8B).
Next, the generation rule interpreting/ target form generating section 213 repeats S10 and S11B, which are described below, with respect to each index number embedding generation rule in the target form generation rule (S9).
The generation rule interpreting/target form generating section 213 computes the number that is to be embedded (S10) and embeds the number into an appropriate part of the meta target form (S11B). For example in the case of page numbers, numbers such as 1, 2, 3 are embedded into the pages, respectively.
Next, the target form having been edited according to the respective generation rules and thus completed is supplied to the target form transmitting section 214 (S12C).
Lastly, the target form transmitting section 214 transmits this supplied target form to the digital television receiver 120 having made the request for the generation of the target form (S13C).

[Application Example of Embodiment 4]

The following discusses an exemplary case in which Embodiment 4 is applied to an application for reproduction of moving images.

<As to Arrangement of the Application Example>

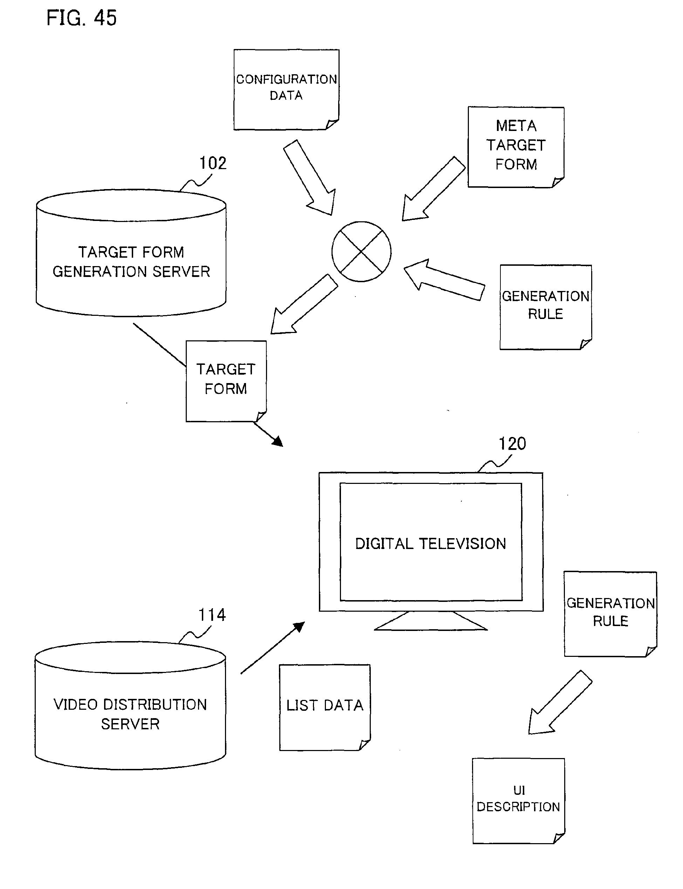

Fig. 45 shows an example of an arrangement of a system in which the target form for reproduction of moving images is generated in the target form generation server 102, which target form is used to generate the UI description for reproduction of moving images on the digital television receiver 120.
The target form generation server 102 holds in advance the target form generation rule and the meta target form for generating the UI description for reproduction of moving images.

When selection of downloading the target form for reproduction of moving images is entered into the digital television receiver 120, the digital television receiver 120 sends the target form generation server 102 a request for generation of the target form for reproduction of moving images. Receiving the request for generation of the target form for reproduction of moving images, the target form generation server 102 executes the target form generation rule for generating the UI description for reproduction of moving images, and rewrites the meta target form with the use of the configuration data, thereby generating the target form for reproduction of moving images. The target form generation server 102 then transmits the target form to the digital television receiver 120.

The digital television receiver 120 accumulates supplied target forms for reproduction of moving images, and uses the target forms in order to generate the UI description for reproduction of moving images.

<As to Flow in Generation of Target Form in Application Example>

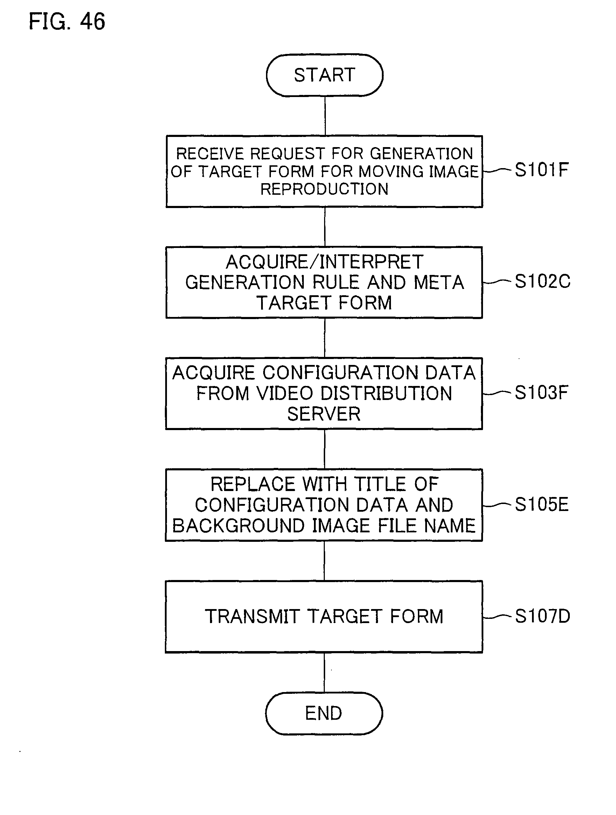

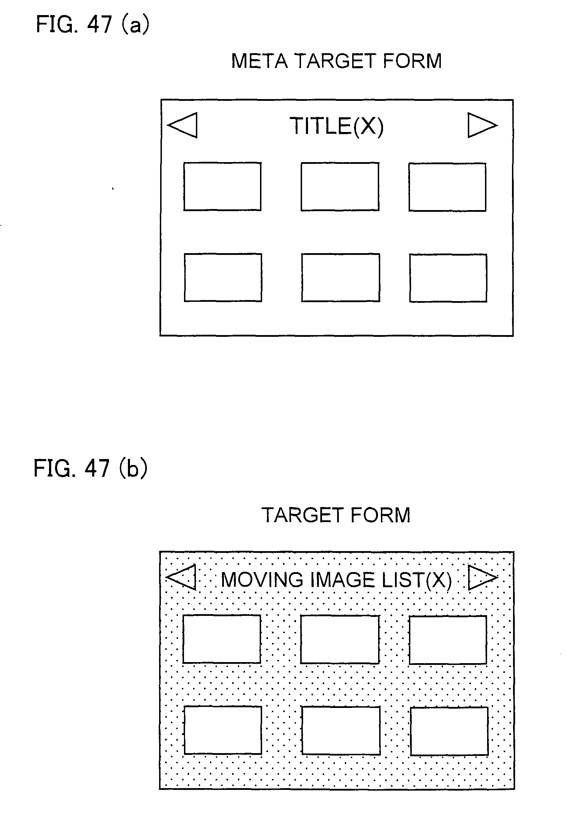

Fig. 46 is a flowchart showing an outline of the procedural steps in the process of generating the target form in the Application Example. Fig. 47 is a schematic diagram illustrating the process of generating the target form.

First, the communication section 201 transmits the request for generation of the target form, which request is sent from the digital television receiver 120, to the generation rule interpreting/ target form generating section 213 through a path that is not illustrated (S101F).

Next, the generation rule interpreting/target form generating section 213 obtains, from the generation-rule accumulating section 202B and the meta target form accumulating section 211, the generation rule and the meta target form for generating the UI description used in an application for reproduction of moving images, respectively, and interprets the generation rule (S102C).

Next, the generation rule interpreting/target form generating section 213 obtains the configuration data for generating the target form for generating the UI description used in the application for reproduction of moving images, from the video distribution server 114 through the configuration data acquiring/ accumulating section 212 and the communication section 201 (S103F). Alternatively, it may be so arranged that the configuration data is held in advance in the configuration data acquiring/accumulating section 212, instead of being obtained via the network.

Next, the generation rule interpreting/target form generating section 213 replaces the character string of the title in the meta target form with the title obtained from the configuration data, and replaces the character string of the file name of the background image with the file name of the background image which file name is obtained from the configuration data (S105E).

Lastly, the generation rule interpreting/target form generating section 213 supplies this generated target form to the target form transmitting section 214, and the target form transmitting section 214 transmits this supplied target form to the digital television receiver 120 through the communication section 201 (S107D).

The following provides an outline of the processing carried out in S105E, with reference to Figs. 47(a) and 47(b).

The meta target form contains, as shown in Fig. 47(a), descriptions corresponding to a window of the target form.

Fig. 47(b) shows a state in which the character string of the title in the meta target form is replaced with the title obtained from the configuration data, and the character string of the file name of the background image is replaced with the file name of the background image which file name is obtained from the configuration data.

Fig. 47(b) shows a state of the target form thus completed.

[Embodiment 5]

The present embodiment describes a list data conversion server for generating list data that is a source from which the UI description is generated, as an example of an embodiment of a data generating device.

<As to Outline of How System Is Arranged and How The System Operates in Embodiment 5>

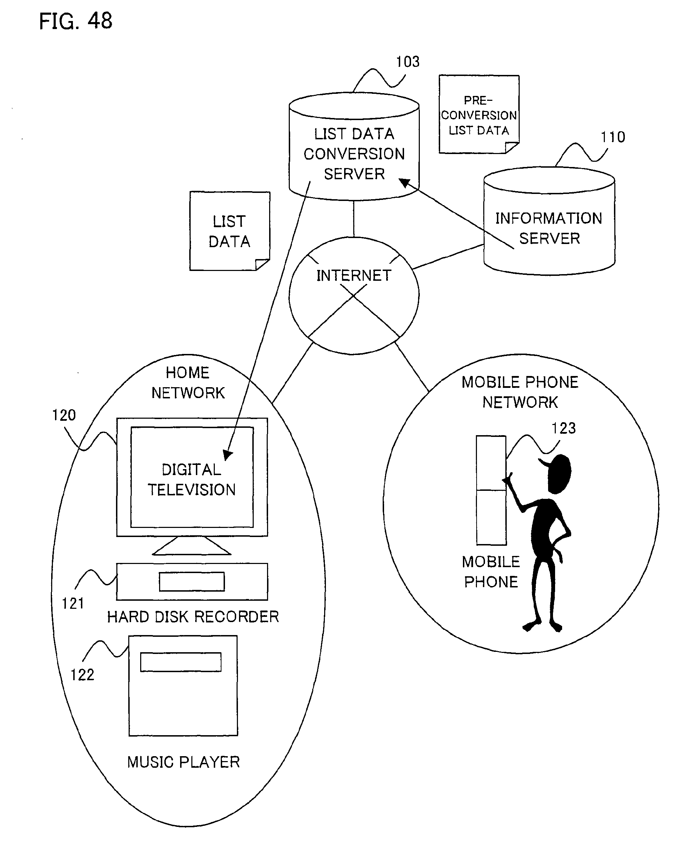

Fig. 48 illustrates an example of how a system including a list data conversion server 103 of an embodiment of the present invention is arranged and an example of how the system operates.

The system according to the present embodiment is constituted by including: (1) an information server 110 which offers, via a network such as the Internet, various services and pre-conversion list data (pre-conversion input data) that is an original data of list data (input data) used for generation of UI description; (2) a list data conversion server 103 which converts the pre-conversion list data into the list data and offers the list data via the Internet; and (3) an AV device, such as a digital television receiver 120, a hard disk recorder 121, and a music player 122, or a mobile phone 123.

The following schematically explains how the system including the AV device according to the present embodiment operates. Note that, the explanation is based upon such assumption that the list data conversion server 103 and the information server 110 have been already activated and have become ready to provide information. The pre-conversion list data is data required to generate list data used to generate UI description in the foregoing embodiments. The list data conversion server 103 generates list data by converting the pre-conversion list data.

First, the digital television receiver 120 requests the list data conversion server 103 to generate list data required for generation of UI description, so as to realize UI required for use of content provided by the information server 110.

Next, in order to generate the list data, the list data conversion server 103 downloads the pre-conversion list data from the information server 110 via the network, generates the list data from a target form, a generation rule, and a configuration data, all of which are held beforehand for generation of the list data, and transmits the generated list data to the digital television receiver 120.

Lastly, the digital television receiver 120 generates the UI description from the received list data, and target form and generation rule which are held beforehand, and executes the UI description, thereby realizing a user interface which allows the user to use various kinds of contents provided by the information server 110.

<As to Functional Block Diagram of Embodiment 5>

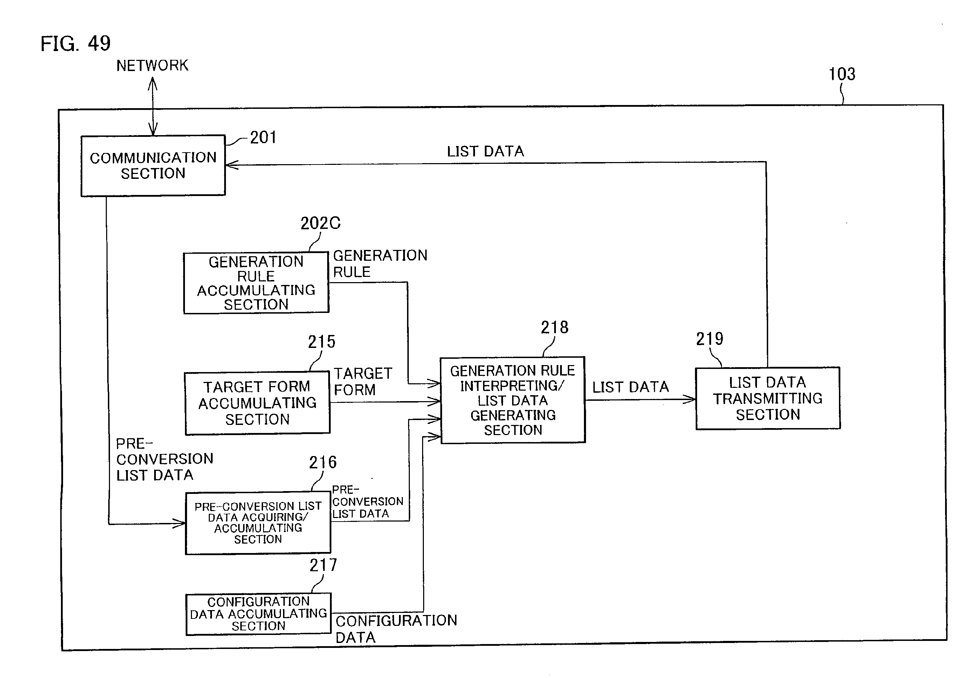

Fig. 49 is a functional block diagram illustrating the list data conversion server 103 as an example of Embodiment 5 of the present invention. Note that, only main data flows are illustrated.

A communication section 201 communicates with the digital television receiver 120 via the network to accept the list data generation request, and transmits the list data to the digital television receiver 120. Then, the communication section 201 communicates with the information server 110 to receive the pre-conversion list data.

A generation rule accumulating section 202C holds a generation rule for list data generation beforehand, and transmits the generation rule to a generation rule interpreting/list data generating section (template data rewriting means) 218.

A target form accumulating section 215 transmits the target form for list data generation, which is held therein beforehand, to the generation rule interpreting/list data generating section 218.

A pre-conversion list data acquiring/ accumulating section 216 acquires the pre-conversion list data via the communication section 201 from the information server 110 and accumulates the acquired pre-conversion list data therein. Further, the pre-conversion list data acquiring/ accumulating section 216 holds configuration data for list data generation beforehand. The pre-conversion list data acquiring/ accumulating section 216 transmits the pre-conversion list data and the configuration data to the generation rule interpreting/list data generating section 218.

The configuration data accumulating section 217 transmits the configuration data for list data generation, which is held therein beforehand, to the generation rule interpreting/list data generating section 218.

The generation rule interpreting/list data generating section 218 interprets the generation rule received from the generation rule accumulating section 202C and applies the generation rule resulting from the interpretation so as to embed information extracted from the pre-conversion list data received from the pre-conversion list data acquiring/ accumulating section 216 and the configuration data received from the configuration data accumulating section 216 into the target form received from the target form accumulating section 215 as a template, thereby generating the list data. The generation rule interpreting/list data generating section 218 transmits the generated list data to a list data transmitting section 219.

The list data transmitting section 219 transmits the list data received from the generation rule interpreting/list data generating section 218 to the digital television receiver 120 via the communication section 201. Note that the list data transmitted is used by the digital television receiver 120 to generate the UI description. The generated UI description is executed, so that the UI for using the contents provided from the information server 110 is realized.

<As to Outline of Main Data Flows in Embodiment 5>

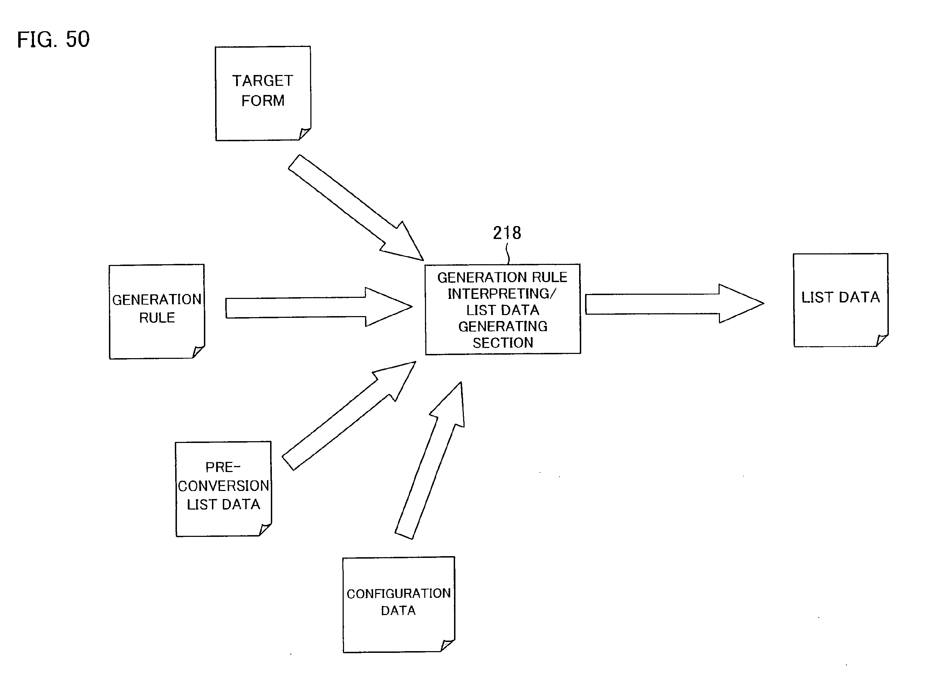

Fig. 50 illustrates data flows at the time when the generation rule interpreting/list data generating section 218 generates the list data. The generation rule interpreting/list data generating section 218 obtains, as an input, the pre-conversion list data, and the generation rule, the target form, and the configuration data for list data generation, and outputs the list data.

<As to Flow in Generation of Channel List Data >

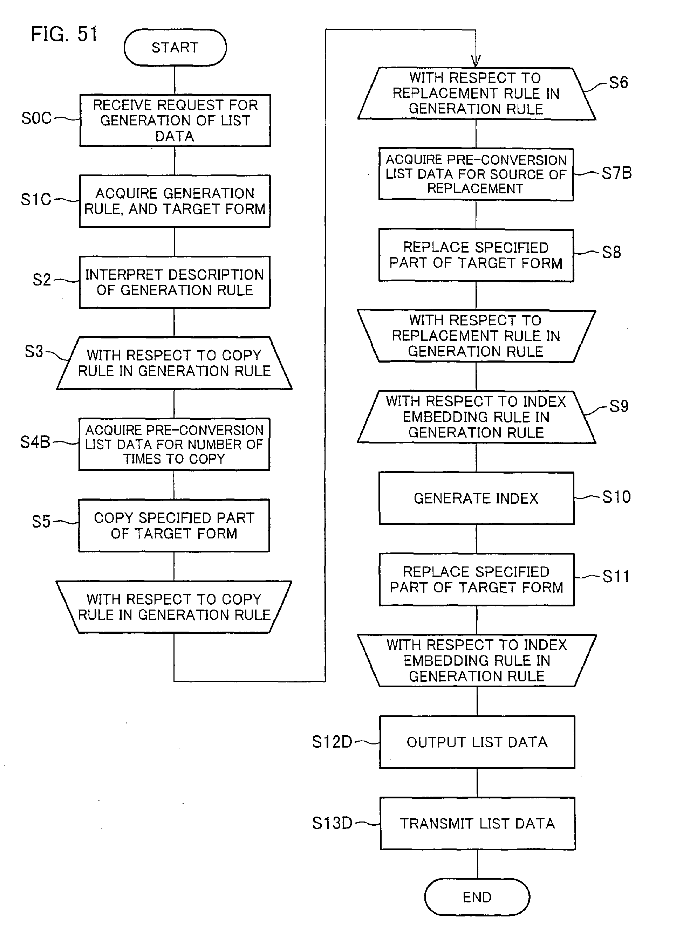

Fig. 51 illustrates a flowchart of the procedure in which the list data conversion server 103 receives the list data generation request, interprets the generation rule for list data generation to generate the list data, and transmits the generated list data to the digital television receiver 120.

First, the communication section 201 transmits the list data generation request received from the digital television receiver 120 to the generation rule interpreting/ list data generating section 218 over a path not shown (S0C).

Next, the generation rule interpreting/list data generating section 218 figures out what list data has been requested, and obtains generation rule and target form both of which are required to generate the list data from the generation rule accumulating section 202C and the target form accumulating section 215, respectively (S1C).

Then, the generation rule interpreting/list data generating section 218 interprets the generation rule for list data generation, which has been received from the generation rule accumulating section 202C, and recognizes which rule for list data generation is included in the list data generation rule (S2).

Next, the generation rule interpreting/list data generating section 218 repeats the following processes in S4B and S5 with respect to each copy generation rule of character string included in the list data generation rule (S3).

The generation rule interpreting/ list data generating section 218 extracts, from the pre-conversion list data, information regarding the number of times the character string is to be copied, such as the number of contents, and performs calculation to obtain the number of times to copy (S4B).

The generation rule interpreting/list data generating section 218 copies the predetermined part of the target form which part has an identifier specified by the character string copy rule for the number of times to copy (S5).

Next, the generation rule interpreting/list data generating section 218 repeats the following processes in S7B and S8 with respect to each character string replacement rule included in the list data generation rule (S6).

The generation rule interpreting/list data generating section 218 extracts, from the pre-conversion list data, information to be used for replacement of the character string (S7B).

The generation rule interpreting/list data generating section 218 replaces, with the information extracted in S7B, the character string of the target form which string is to be replaced (S8).

Next, the generation rule interpreting/list data generating section 218 repeats processes in S10 and S11 with respect to each index number embedding generation rule included in the list data generation rule (S9).

The generation rule interpreting/list data generating section 218 calculates a number to be embedded (S10) so as to embed the calculated number into the appropriate part of the target form (S11). For example, content numbers such as 1, 2, and 3 are embedded into items for contents, respectively.

Next, the list data whose edition based on each generation rule has been completed is outputted to the list data transmitting section 219 (S12D).

Lastly, the list data transmitting section 219 transmits the received list data to the digital television receiver 120 which has requested the list data generation (S13D).

[Application Example of Embodiment 5]

The following describes an example where Embodiment 5 is applied to a channel call reproduction application.

<As to Arrangement in Application Example>

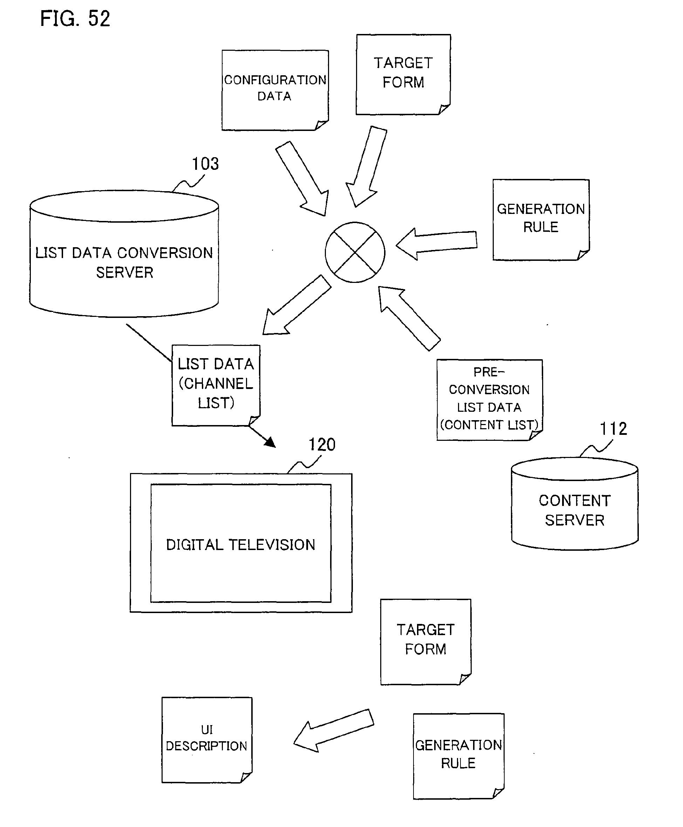

Fig. 52 illustrates an example of a system configuration for causing the list data conversion server 103 to generate channel list data for channel call application which channel list data is used to cause the digital television receiver 120 to generate a UI description for realizing a UI that allows outline information of a content distributed from the content server 112 to be displayed on a screen of the digital television receiver 120.

The list data conversion server 103 holds beforehand the generation rule, target form, and configuration data all of which are used to generate the channel list data. The channel list data herein is the one used to generate UI description for channel call.

When the digital television receiver 120 is requested to update channel list data, the digital television receiver 120 transmits a channel list data generation request to the list data conversion server 103. Upon receipt of the channel list data generation request, the list data conversion server 103 executes the generation rule for channel list data generation, rewrites the target form by using the configuration data and the content list data that has been acquired from the content server 112, generates channel list data, and transmits the channel list data to the digital television receiver 120.

The digital television receiver 120 accumulates the received channel list data, and uses the channel list data in generating the UI description for channel call application.

<As to Flow in Generation of List Data in Application Example>

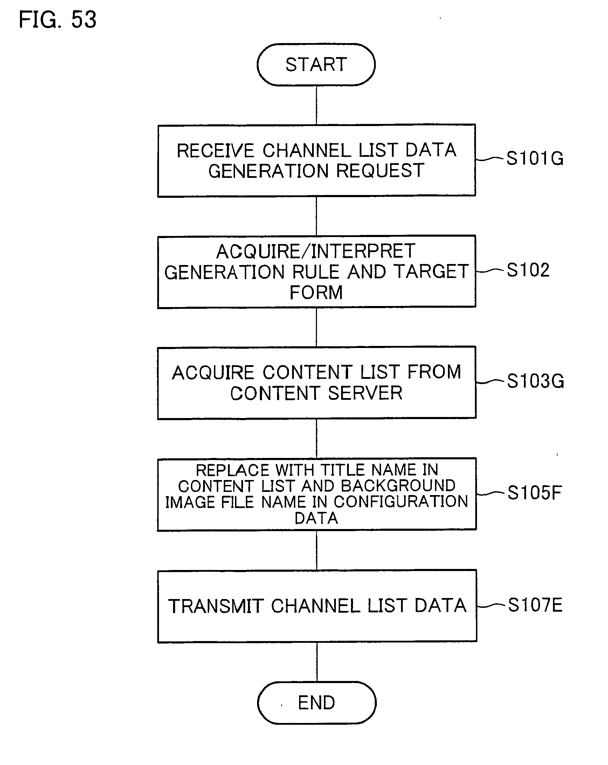

Fig. 53 illustrates a flowchart of outline of the procedure of the channel list data generation in the present application example.

First, the communication section 201 transmits the channel list data generation request received from the digital television receiver 120 to the generation rule interpreting/list data generating section 218 over a path not shown (S101G).

Next, the generation rule interpreting/list data generating section 218 acquires the generation rule and the target form from which the channel list data is generated from the generation rule accumulating section 202C and the target form accumulating section 215, respectively, and interprets the generation rule (S102).

Then, the generation rule interpreting/list data generating section 218 obtains the content list data for generating the channel list data from the content server 112 via the pre-conversion list data acquiring/accumulating section 216 and the communication section 201 (S103G).

Next, the generation rule interpreting/list data generating section 218 replaces a title character string of the target form by a title obtained from the content list data. Further, the generation rule interpreting/list data generating section 218 replaces character string of a background image file name of the target form by a background image file name obtained from the configuration data that is accumulated beforehand in the configuration data accumulating section 217 (S105F).

Lastly, the generation rule interpreting/list data generating section 218 outputs the generated channel list data to the list data transmitting section 219. The list data transmitting section 219 transmits the channel list data to the digital television receiver 120 via the communication section 201 (S107E).

<Supplementary Explanation>

The present invention is not limited to the aforementioned embodiments and is susceptible of various changes within the scope of the accompanying claims. Also, an embodiment obtained by suitable combinations of technical means disclosed in the different embodiments is also included within the technical scope of the present invention.

Finally, the blocks of the data generating device of the present invention, especially the generation rule interpreting/UI description generating section 205, the UI description executing section 206, the UI description transmitting section 210, the generation rule interpreting/ target form generating section 213, the target form transmitting section 214 may be constituted by hardware logic or may be realized by software by using a CPU in the following manner.

That is, the data generating device of the present invention includes a CPU (central processing unit) that executes the order of a control program for realizing the aforesaid functions, ROM (read only memory) that stores the control program, RAM (random access memory) that develops the control program in an executable form, and a storage device (storage medium), such as memory, that stores the control program and various types of data therein. With this arrangement, the object of the present invention is realized by a predetermined storage medium. The storage medium stores, in computer-readable manner, program codes (executable code program, intermediate code program, and source program) of the control program of the information processing device of the present invention, which is software for realizing the aforesaid functions. The storage medium is provided to the character recognizing device. With this arrangement, the data generating device (alternatively, CPU or MPU) as a computer reads out and executes program code stored in the storage medium provided.

The storage medium may be tape based, such as a magnetic tape or cassette tape; disc based, such as a magnetic disk including a floppy® disc and hard disk and optical disk including CD-ROM, MO, MD, DVD, and CD-R; card based, such as an IC card (including a memory card) and an optical card; or a semiconductor memory, such as a mask ROM, EPROM, EEPROM, and a flash ROM.

Further, the data generating device of the present invention may be arranged so as to be connectable to a communications network so that the program code is supplied to the data generating device through the communications network. The communications network is not to be particularly limited. Examples of the communications network include the Internet, intranet, extranet, LAN, ISDN, VAN, CATV communications network, virtual private network, telephone network, mobile communications network, and satellite communications network. Further, a transmission medium that constitutes the communications network is not particularly limited. Examples of the transmission medium include (i) wired lines such as IEEE 1394, USB, power-line carrier, cable TV lines, telephone lines, and ADSL lines and (ii) wireless connections such as IrDA and remote control using infrared light, Bluetooth®, 802.11, HDR, mobile phone network, satellite connections, and terrestrial digital network. Note that the present invention can be also realized by the program codes in the form of a computer data signal embedded in a carrier wave which is embodied by electronic transmission.

INDUSTRIAL APPLICABILITY

According to the present invention, the generation rule acquiring/accumulating section 202, the target form acquiring/accumulating section 203, and the list data acquiring/accumulating section 204 acquire a file containing input data, a file containing template data, and a file containing a generation rule, respectively. Then, the generation rule interpreting/UI description generating section 205 reads the contents of these files to interpret the read generation rule, and generates generation data from the read input data and template data according to the interpreted generation rule.

With this arrangement, the generation data is generated from the input data, the template data, and the generation rule. This brings the effect that it is possible to flexibly change generation data to be generated by changing at least one of the input data, the template data, and the generation rule.

The present invention realizes a data generating device that brings about the above effect, and is therefore preferably applicable to a wide variety of systems of digital electrical household appliances, mobile phones, portable electronic devices, and the like.

**Claims**

1. A data generating device that generates generation data by processing template data serving as a template used for generating the generation data, the data generating device comprising:

    data acquisition means to acquire input data, the template data, and a generation rule; and
    template data rewriting means to edit the template data, according to the generation rule with the use of the input data, and generate the generation data from edited template data.

2. The data generating device as set forth in Claim 1, wherein:

    the generation rule includes a generation rule specifying a position to be edited in the template data; and
    the template data rewriting means edits the position to be edited in the template data, according to the generation rule specifying a position to be edited.

3. The data generating device as set forth in Claim 1, wherein:

    the generation rule includes a copy generation rule specifying a position to be copied in the template data; and
    the template data rewriting means edits the template data by copying the position to be copied, according to the copy generation rule.

4. The data generating device as set forth in Claim 3, wherein:

    the copy generation rule further includes a rule for calculating a number of times to copy the position to be copied, from a number of information that is described in the input data and used to replace a part of the template data and a number of the information to be described in each resulting copy of the position to be copied; and
    the template data rewriting means edits the template data by copying the position to be copied in the template for the number of times to copy.

5. The data generating device as set forth in Claim 1, wherein:

    the generation rule includes a replacement generation rule specifying a position to be replaced in the template data and information in the input data which information is to be used in replacement; and
    the template data rewriting means edits the template data by replacing, according to the replacement generation rule, the position to be replaced with the information to be used in replacement.

6. The data generating device as set forth in Claim 1, wherein:

    the generation rule includes an index number embedding generation rule specifying an index number that increases or decreases regularly and differentiates a redundant description in the template data and a position to be replaced with the index number in the template data; and
    the template data rewriting means edits the template data by sequentially replacing the position to be replaced with the index number, according to the index number embedding generation rule.

7. The data generating device as set forth in Claim 4, wherein:

    the template data includes separate positions to be copied as a position to be copied in a first copy, a position to be copied in a last copy, and a position to be copied in a copy other than the first copy and the last copy; and
    the template data rewriting means copies the position to be copied in the first copy when the first copy is carried out, the position to be copied in the last copy when last copy is carried out, and the position to be copied in the copy other than the first copy and the last copy when the copy other than the first copy and the last copy is carried out.

8. The data generating device as set forth in Claim 7, wherein:

each of the positions to be copied is data arranged for each page unit that is an information presentation unit.

9. The data generating device as set forth in Claim 7, wherein:

the template data includes a plurality of files that store the positions to be copied, respectively;
the generation rule includes an identifier of each of the plurality of files to be edited; and
the template data rewriting means edits the template data by copying the plurality of files specified by the identifier based on the number of times to copy, according to the copy generation rule, and generates generation data.

10. The data generating device as set forth in any one of Claim 1 through 9, wherein:

the generation data is user interface data as data in which a user interface is described, the user interface defining an information presentation method or a user operation inputting method in a terminal device with which a user utilizes a function provided to the user.

11. The data generating device as set forth in Claim 10, further comprising:

output means;
input means; and
user interface execution means that interprets the user interface data, presents information to the user via the output means, accepts a user operation input via the input means, and realizes the user interface.

12. The data generating device as set forth in any one of Claims 1 through 11, further comprising:

communication means to carry out data communication via a network,
the data acquisition means acquiring at least one of the template data, the input data, and the generation rules via the communication means.

13. The data generating device as set forth in Claim 10, further comprising:

communication means to carry out data communication via a network; and
user interface data transmitting means that receives a request for generation of the user interface data from a requester and transmits to the requester the user interface data that the template data rewriting means generates, via the communication means.

14. A data generating device that generates template data by processing meta-template data serving as a template used for generating the template data, the data generating device comprising:

data acquisition means to acquire input data, the meta-template data, and a generation rule; and
meta-template data rewriting means to edit the meta-template data with the use of the input data, according to the generation rule, and generate the template data from edited meta-template data.

15. The data generating device as set forth in Claim 14, wherein:

the template data is template data of user interface data as data in which a user interface is described, the user interface defining an information presentation method or a user operation inputting method in a terminal device with which a user utilizes a function provided to the user.

16. The data generating device as set forth in Claim 15, further comprising:

communication means to carry out data communication via a network; and
template data transmitting means that receives a request for generation of the template data from a requester and transmits to the requester the template data that the meta-template data rewriting means generates, via the communication means.

17. A data generating device generating list data by processing template data serving as a template used for generating the list data, the data generating device comprising:

data acquisition means to acquire pre-conversion list data, the template data, and a generation rule; and
template data rewriting means to edit the template data, according to the generation rule with the use of the
pre-conversion list data, and generate the list data from edited template data.

**18.** The data generating device as set forth in Claim 17, wherein:

the list data is data used for generating user interface data as data in which a user interface is described, the
user interface defining an information presentation method or a user operation inputting method in a terminal
device with which a user utilizes a function provided to the user.

**19.** The data generating device as set forth in Claim 18, further comprising:

communication means to carry out data communication via a network; and
list data transmitting means that receives a request for generation of the list data from a requester and transmits
to the requester the list data that the template data rewriting means generates, via the communication means.

**20.** A data generation method of generating generation data from template data serving as a template used for generating
the generation data, input data used for generating the generation data, and a generation rule for generating the
generation data from the template data and the input data, the data generation method comprising steps of:

acquiring the input data; and
rewriting the template data so that the template data is edited according to the generation rule with the use of
the input data acquired by the data acquisition means and the generation data is generated.

**21.** A data generation method of generating template data from meta-template data serving as a template used for
generating the template data, input data used for generating the template data, and a regulation rule for generating
the template data from the meta-template data and the input data, the data generation method comprising steps of:

acquiring the input data; and
rewriting the meat-template data so that the meta-template data is edited according to the generation rule with
the use of the input data acquired by the data acquisition means and the template data is generated.

**22.** A system comprising:

a terminal device including the data generating device as set forth in any one of Claims 1 through 12; and
a server on a network which server provides a content and at least one of the input data, the template data,
and the generation rule, to the data generating device.

**23.** A system comprising:

a terminal device including the data generating device as set forth in any one of Claims 1 through 12;
a server on a network which server includes the data generating device as set forth in Claims 14 or 15 and
provides the template data to the terminal device; and
an information server on a network which information server provides the input data and information to the
terminal device and provides the input data to the server.

**24.** A system comprising:

a terminal device including the data generating device as set forth in any one of Claims 1 through 12;
a server on a network which server includes the data generating device as set forth in Claims 17 or 18 and
provides the list data to the terminal device; and
an information server on a network which information server provides a content to the terminal device and the
pre-conversion data to the server.

**25.** A system comprising:

a server on a network which server includes the data generating device as set forth in any one of Claims 1
through 10, 12, and 13; and

a terminal device including output means, input means, user interface execution means that interprets the user interface data, presents information to a user via the output means, accepts an user operation input via the input means, and realizes the user interface.

# FIG. 1

## FIG. 2

NETWORK

120

COMMUNICATION SECTION — 201

CONTENTS

GENERATION RULE

GENERATION RULE ACQUIRING/ ACCUMULATING SECTION 202

GENERATION RULE

207

CONTENT ACQUIRING SECTION

TARGET FORM

TARGET FORM GENERATING/ ACCUMULATING SECTION 203

TARGET FORM

GENERATION RULE INTERPRETING/UI DESCRIPTION GENERATING SECTION 205

UI DESCRIPTION

CONTENTS

206

UI DESCRIPTION EXECUTING SECTION

LIST DATA

LIST DATA ACQUIRING/ ACCUMULATING SECTION 204

LIST DATA

INPUT DATA

OUTPUT DATA

209

INPUT SECTION

208

OUTPUT SECTION

USER OPERATION

DISPLAY OF STILL IMAGE REPRODUCTION OF MOVING IMAGE AND SOUND

FIG. 3

TARGET FORM

GENERATION RULE

LIST DATA

205

GENERATION RULE INTERPRETING/ UI DESCRIPTION GENERATING SECTION

UI DESCRIPTION

# FIG. 4

EP 1 930 814 A1

COPY GENERATION RULE

401    405    400

```
<copy source="#page_template"   unit = "6"
number="videolist.xml#/videolist/itemcount/text()"/>
```

402

404

```
<svg>
...
403
<g id="page_template">
...
</g>
...
</svg>
```

TARGET FORM

```
<videolist>
<itemcount>18</itemcount>
...
</videolist>
```

LIST DATA FILE(videolist.xml)

## FIG. 5

REPLACEMENT
GENERATION RULE 502 501 500

```
<replace destination="#THUMBNAIL_URL"
source="videolist.xml#/videolist/item/thumbnail/text()"/>
```

```
<svg>
  ...                               503
  <image xlink:href='@@__THUMBNAIL_URL__@@'/>
  ...
  <image xlink:href='@@__THUMBNAIL_URL__@@'/>
  ...                               505
</svg>
```

TARGET FORM

```
<videolist>
  ...
  <item>
    <thumbnail>
    v1.jpg     504
    </thumbnail>
  </item>
  <item>
    <thumbnail>
    v2.jpg     506
    </thumbnail>
    ...
  </item>
  ...
</videolist>
```

LIST DATA FILE(videolist.xml)

FIG. 6

INDEX NUMBER
EMBEDDING RULE                        601                600

```
<replacebyindex destination="#PAGE_INDEX"  from="0"/>
```
                                                              602

```
<svg>
  ...
                                        603
  <g id="@@__PAGE_INDEX__@@">
  </g>
                                        604
  ...
  <g id="@@__PAGE_INDEX__@@">
  </g>
  ...
</svg>
```

TARGET FORM

FIG. 7

START

S1 — ACQUIRE GENERATION RULE, TARGET FORM, AND LIST DATA

S2 — INTERPRET DESCRIPTION OF GENERATION RULE

S3 — WITH RESPECT TO COPY RULE IN GENERATION RULE

S4 — ACQUIRE LIST DATA FOR NUMBER OF TIMES TO COPY

S5 — COPY SPECIFIED PART OF TARGET FORM

WITH RESPECT TO COPY RULE IN GENERATION RULE

S6 — WITH RESPECT TO REPLACEMENT RULE IN GENERATION RULE

S7 — ACQUIRE LIST DATA FOR SOURCE OF REPLACEMENT

S8 — REPLACE SPECIFIED PART OF TARGET FORM

WITH RESPECT TO REPLACEMENT RULE IN GENERATION RULE

WITH RESPECT TO INDEX NUMBER EMBEDDING RULE IN GENERATION RULE — S9

GENERATE INDEX NUMBER — S10

REPLACE SPECIFIED PART OF TARGET FORM — S11

WITH RESPECT TO INDEX NUMBER EMBEDDING RULE IN GENERATION RULE

OUTPUT UI DESCRIPTION — S12

EXECUTE UI DESCRIPTION — S13

END

47

FIG. 8

FIG. 9

## FIG. 10

```
<gig>
    <copy source="page_template" number="videolist.xml#xpointer(/videolist/itemcount/text())" unit="6"/>      [1000]

    <replace type="XML" source="videolist.xml#xpointer(/videolist/item/video/text())"
    destination="VIDEO_URL"/>                                                                                   [1001]

    <replace type="XML" source="videolist.xml#xpointer(/videolist/item/thumbnail/text())"
    destination="THUMBNAIL_URL"/>                                                                               [1002]

    <replacebyindex from="0" destination="PAGE_INDEX"/>                                                          [1003]

    <replacebyindex from="1" destination="PAGE_NUM"/>                                                            [1004]

</gig>
```

EP 1 930 814 A1

FIG. 11

EP 1 930 814 A1

```
<svg>                                                                        1100
...
<g id="page_template" visibility="hidden"/>          1104
 <g id="page@@__PAGE_INDEX__@@">                      1103
  <text>RECORDED-IMAGE LIST(@@__PAGE_NUM__@@)</text>
  <image id="to_prev_page" xlink:href="prev_button_icon.jpg" x="" y="" width="" height=""/>
  <image id="to_next_page" xlink:href="next_button_icon.jpg" x="" y="" width="" height=""/>
                                          1101
  <a xlink:href="@@__VIDEO_URL__@@">          1102
    <image xlink:href="@@__THUMBNAIL_URL__@@" x="60" y="165" width="280" height="180"/>
  </a>                                    1101
  <a xlink:href="@@__VIDEO_URL__@@">          1102
    <image xlink:href="@@__THUMBNAIL_URL__@@" x="360" y="165" width="280" height="180"/>
  </a>

                                          1101
  <a xlink:href="@@__VIDEO_URL__@@">          1102
    <image xlink:href="@@__THUMBNAIL_URL__@@" x="660" y="165" width="280" height="180"/>
  </a>

                                          1101
  <a xlink:href="@@__VIDEO_URL__@@">          1102
    <image xlink:href="@@__THUMBNAIL_URL__@@" x="60" y="345" width="280" height="180"/>
  </a>

                                          1101
  <a xlink:href="@@__VIDEO_URL__@@">          1102
    <image xlink:href="@@__THUMBNAIL_URL__@@" x="360" y="345" width="280" height="180"/>
  </a>

                                          1101
  <a xlink:href="@@__VIDEO_URL__@@">          1102
    <image xlink:href="@@__THUMBNAIL_URL__@@" x="660" y="345" width="280" height="180"/>
  </a>

 </g>
</g>
</svg>
```

FIG. 12

```
                          1203
<videolist>          /\_/
   <itemcount>18</itemcount>
   ┌─────────────────────────────────┐
   ┆ <item>                           ┆  ── 1202
   ┆    <thumbnail>v1.jpg</thumbnail>  ┆
   ┆    <video>v1.mpg</video>   ─ 1201 ┆  ─── 1200
   ┆ </item>                          ┆
   ├─────────────────────────────────┤
   ┆ <item>                           ┆  ── 1202
   ┆    <thumbnail>v2.jpg</thumbnail>  ┆
   ┆    <video>v2.mpg</video>   ─ 1201 ┆  ─── 1200
   ┆ </item>                          ┆
   ├─────────────────────────────────┤
   ┆ <item>                           ┆  ── 1202
   ┆    <thumbnail>v3.jpg</thumbnail>  ┆
   ┆    <video>v3.mpg</video>   ─ 1201 ┆  ─── 1200
   ┆ </item>                          ┆
   └─────────────────────────────────┘
   ...
</videolist>
```

FIG. 13

```
        ┌─────────────┐
        │    START    │
        └─────────────┘
               │
   ┌───────────────────────────┐
   │     SELECT MOVING IMAGE    │───S101
   │  REPRODUCTION APPLICATION  │
   └───────────────────────────┘
               │
   ┌───────────────────────────┐
   │      ACQUIRE/INTERPRET     │
   │ GENERATION RULE AND TARGET │───S102
   │            FORM            │
   └───────────────────────────┘
               │
   ┌───────────────────────────┐
   │ ACQUIRE LIST DATA FROM HARD│───S103
   │        DISK RECORDER       │
   └───────────────────────────┘
               │
   ┌───────────────────────────┐
   │      COPY FOR NUMBER OF    │
   │   NECESSARY WINDOWS FOR    │───S104
   │  MOVING IMAGE LIST DISPLAY │
   └───────────────────────────┘
               │
   ┌───────────────────────────┐
   │  REPLACE WITH THUMBNAIL FILE│
   │ NAME AND MOVING IMAGE FILE │───S105
   │            NAME            │
   └───────────────────────────┘
               │
   ┌───────────────────────────┐
   │      EMBED PAGE NUMBER     │───S106
   └───────────────────────────┘
               │
   ┌───────────────────────────┐
   │     EXECUTE UI DESCRIPTION │───S107
   └───────────────────────────┘
               │
        ┌─────────────┐
        │     END     │
        └─────────────┘
```

FIG. 14 (a)

TARGET FORM

▽ RECORDED-IMAGE LIST(X) △

FIG. 14 (b)

▽ RECORDED-IMAGE LIST(X) △

▽ RECORDED-IMAGE LIST(X) △

▽ RECORDED-IMAGE LIST(X) △

FIG. 14 (c)

▽ RECORDED-IMAGE LIST(X) △

▽ RECORDED-IMAGE LIST(X) △

▽ RECORDED-IMAGE LIST(X) △

FIG. 14 (d)

▽ RECORDED-IMAGE LIST(1) △

▽ RECORDED-IMAGE LIST(2) △

▽ RECORDED-IMAGE LIST(3) △

FIG. 15

112 CONTENT SERVER

111 CHANNEL SERVER

LIST DATA
(CHANNEL LIST)

120

DIGITAL
TELEVISION

UI
DESCRIPTION

GENERATION
RULE

TARGET
FORM

## FIG. 16

FEATURED SITE

WEATHER REPORT  1

CHANNEL SWITCHING OPERATION

FEATURED SITE

NEWS  2

CHANNEL SWITCHING OPERATION

FEATURED SITE

FORTUNE TELLING  3

CHANNEL SWITCHING OPERATION

FEATURED SITE

MAIL TRACKING  4

CHANNEL SWITCHING OPERATION

1601
1602
1600
1603

FIG. 17

```
        ┌─────────────┐
        │    START    │
        └──────┬──────┘
               │
    ┌──────────┴──────────┐
    │  SELECT CHANNEL CALL │──── S101B
    │     APPLICATION      │
    └──────────┬──────────┘
               │
    ┌──────────┴──────────┐
    │  ACQUIRE/INTERPRET   │
    │ GENERATION RULE AND  │──── S102
    │   TARGET FORM        │
    └──────────┬──────────┘
               │
    ┌──────────┴──────────┐
    │ ACQUIRE LIST DATA    │
    │ FROM CHANNEL SERVER  │──── S103B
    └──────────┬──────────┘
               │
    ┌──────────┴──────────┐
    │ COPY DISPLAY WINDOW  │
    │ FOR NUMBER OF        │──── S104B
    │ CHANNELS             │
    └──────────┬──────────┘
               │
    ┌──────────┴──────────┐
    │ REPLACE WITH CHANNEL │
    │ TITLE AND CHANNEL    │──── S105B
    │ ICON                 │
    └──────────┬──────────┘
               │
    ┌──────────┴──────────┐
    │ EMBED CHANNEL NUMBER │──── S106B
    └──────────┬──────────┘
               │
    ┌──────────┴──────────┐
    │ EXECUTE UI DESCRIPTION│──── S107
    └──────────┬──────────┘
               │
        ┌──────┴──────┐
        │     END     │
        └─────────────┘
```

## FIG. 18 (a)

TARGET FORM

| FEATURED SITE |
|---|
| ICON : TITLE (X) |

## FIG. 18 (b)

| FEATURED SITE |
|---|
| ICON : TITLE (X) |

| FEATURED SITE |
|---|
| ICON TITLE (X) |

| FEATURED SITE |
|---|
| ICON TITLE (X) |

| FEATURED SITE |
|---|
| ICON TITLE (X) |

## FIG. 18 (c)

| FEATURED SITE |
|---|
| WEATHER REPORT (X) |

| FEATURED SITE |
|---|
| NEWS (X) |

| FEATURED SITE |
|---|
| FORTUNE TELLING (X) |

| FEATURED SITE |
|---|
| MAIL TRACKING (X) |

## FIG. 18 (d)

| FEATURED SITE |
|---|
| WEATHER REPORT (1) |

| FEATURED SITE |
|---|
| NEWS (2) |

| FEATURED SITE |
|---|
| FORTUNE TELLING (3) |

| FEATURED SITE |
|---|
| MAIL TRACKING (4) |

FIG. 19

PHOTO SERVER ～113

LIST DATA
(PHOTO
LIST)

122

MUSIC PLAYER

MUSIC
INFORMATION

120

DIGITAL TELEVISION

UI
DESCRIPTION

GENERATION
RULE

TARGET
FORM

EP 1 930 814 A1

FIG. 20

## FIG. 21

```
      ( START )
         |
SELECT SLIDE SHOW          ──S101C
   APPLICATION
         |
ACQUIRE/INTERPRET          ──S102
GENERATION RULE AND TARGET
   FORM
         |
ACQUIRE LIST DATA FROM     ──S103C
MUSIC PLAYER AND CHANNEL
   SERVER
         |
COPY PHOTO DISPLAY SCENE FOR  ──S104C
NUMBER [MUSIC REPRODUCTION
   TIME (SECONDS)/20]
         |
REPLACE WITH PHOTO AND     ──S105C
   MUSIC
         |
EXECUTE UI DESCRIPTION     ──S107
         |
       ( END )
```

## FIG. 22 (a)

TARGET FORM

Nth IMAGE

MUSIC

## FIG. 22 (b)

| FIRST IMAGE | SECOND IMAGE | THIRD IMAGE |

MUSIC

## FIG. 22 (c)

♪ ♪

FIG. 23

```
<svg>
  ...
  <g id="page_template">                    ⌐2301
    ...
  </g>

  ...
  <g id="page_template_top">                ⌐2302
    ...
  </g>

  <g id="page_template_middle">             ⌐2303
    ...
  </g>

  <g id="page_template_bottom">             ⌐2304
    ...
  </g>

</svg>
```

TARGET FORM

# FIG. 24

TARGET FORM  GENERATION RULE

101

UI DESCRIPTION GENERATION SERVER

LIST DATA

110

INFORMATION SERVER

UI DESCRIPTION

INTERNET

CONTENTS

HOME NETWORK

120

DIGITAL TELEVISION

121

HARD DISK RECORDER

122

MUSIC PLAYER

MOBILE PHONE NETWORK

123

MOBILE PHONE

FIG. 25

EP 1 930 814 A1

## FIG. 26

START

S0 — READ REQUEST FOR GENERATION OF UI DESCRIPTION

S1 — ACQUIRE GENERATION RULE, TARGET FORM, AND LIST DATA

S2 — INTERPRET DESCRIPTION OF GENERATION RULE

S3 — WITH RESPECT TO COPY RULE IN GENERATION RULE

S4 — ACQUIRE LIST DATA FOR NUMBER OF TIMES TO COPY

S5 — COPY SPECIFIED PART OF TARGET FORM

WITH RESPECT TO COPY RULE IN GENERATION RULE

WITH RESPECT TO REPLACEMENT RULE IN GENERATION RULE — S6

ACQUIRE LIST DATA FOR SOURCE OF REPLACEMENT — S7

REPLACE SPECIFIED PART OF TARGET FORM — S8

WITH RESPECT TO REPLACEMENT RULE IN GENERATION RULE

WITH RESPECT TO INDEX NUMBER EMBEDDING RULE IN GENERATION RULE — S9

GENERATE INDEX NUMBER — S10

REPLACE SPECIFIED PART OF TARGET FORM — S11

WITH RESPECT TO INDEX NUMBER EMBEDDING RULE IN GENERATION RULE

S12B — OUTPUT UI DESCRIPTION

S13B — TRANSMIT UI DESCRIPTION

END

## FIG. 27

GENERATION RULE

TARGET FORM

114

VIDEO DISTRIBUTION SERVER

UI DESCRIPTION GENERATION SERVER

101

LIST DATA (MOVING IMAGE LIST)

UI DESCRIPTION

120

VIDEO SERVICE MENU    |◀◀ ▶▶| SELECT PAGE

MOVIE STREET CORNER    1
MOVIE CHRISTMAS    2
MOVIE STATION    3

VIDEO NEW HOUSE    4
VIDEO FLOWER    5
VIDEO SUMMER VACATION    6

GOURMET FEATURED DINNER    7
GOURMET REPORT    8
GOURMET HOMMAGE    9

TRAVEL HAWAII - 1    10
TRAVEL HAWAII - 2    11
TRAVEL HAWAII - 3    12

FIG. 28

START

RECEIVE REQUEST FOR GENERATION OF MOVING IMAGE REPRODUCTION UI DESCRIPTION — S101D

ACQUIRE/INTERPRET GENERATION RULE AND TARGET FORM — S102

ACQUIRE LIST DATA FROM VIDEO DISTRIBUTION SERVER — S103D

COPY FOR NUMBER OF NECESSARY WINDOWS FOR MOVING IMAGE LIST DISPLAY — S104

REPLACE WITH THUMBNAIL URL AND MOVING IMAGE URL — S105

EMBED PAGE NUMBER — S106

TRANSMIT UI DESCRIPTION — S107B

END

FIG. 29

TARGET FORM   GENERATION RULE

101

UI DESCRIPTION
GENERATION
SERVER

LIST DATA

110

UI DESCRIPTION

INFORMATION
SERVER

INTERNET

CONTENTS   UI DESCRIPTION

HOME
NETWORK

120

DIGITAL
TELEVISION

MOBILE
PHONE
NETWORK

123

121

HARD DISK RECORDER

MOBILE
PHONE

122

MUSIC PLAYER

EP 1 930 814 A1

FIG. 30

TARGET FORM

GENERATION RULE

LIST DATA

205

GENERATION RULE INTERPRETING/ UI DESCRIPTION GENERATING SECTION

UI DESCRIPTION

# FIG. 31

COPY GENERATION RULE

3101  3105  3103  3100

```
<copy source="taste.txhtml"  unit = "1"
number="updatelist.xml#/musiclist/itemcount/text()"/>
```

LIST DATA(updatelist.xml)

3104

```
<musiclist>
<itemcount>2</itemcount>
...
</musiclist>
```

start.txhtml    taste.txhtml    end.txhtml

3102

buy.txhtml

TARGET FORM SET

EP 1 930 814 A1

## FIG. 32

REPLACEMENT
GENERATION RULE 3204 3200

```
<copy destination="taste.txhtml#TITLE"
source="updatelist.xml#/musiclist/item/title/text()"/>
```
3201

start.xhtml

taste0.
xhtml

taste1.
xhtml

end.xhtml

buy0.
xhtml

buy1.
xhtml

TARGET FORM
SET

```
<xhtml>
...              3205
@@__TITLE__@@
...
</xhtml>
```

```
<xhtml>
...              3206
@@__TITLE__@@
...
</xhtml>
```

```
<musiclist>
...
<item>
    <title>        3202
    YASUKIBUSHI
    </titlel>
...
</item>
<item>
    <title>        3203
    KURODABUSHI
    </titlel>
...
</item>
...
</musiclist>
```

LIST DATA(updatelist.xml)

## FIG. 33

INDEX NUMBER EMBEDDING RULE

3300

<replacebyindex
destination="taste.txhtml#PAGE_INDEX"  from="0"/>

3301    3304

start.xhtml

taste0.
xhtml

taste1.
xhtml

end.xhtml

buy0.
xhtml

buy1.
xhtml

TARGET
FORM SET

<xhtml>

...

<a xlink:href="buy@@_PAGE_INDEX_@@.xhtml">
    PURCHASE
</a>

...

</xhtml>

3302

<xhtml>

...

<a xlink:href="buy@@_PAGE_INDEX_@@.xhtml">
    PURCHASE
</a>

...

</xhtml>

3303

FIG. 34

TARGET FORM SET

| start.txhtml | taste.txhtml | taste_top .txhtml | taste_middle .txhtml | taste_bottom .txhtml | end.txhtml |

FOR NO COPY     FOR TOP PAGE COPY     FOR INTERMEDIATE COPY     FOR LAST COPY

NUMBER OF TIMES TO COPY=0

| start.xhtml | taste.xhtml | end.xhtml |

NUMBER OF TIMES TO COPY=1

| start.xhtml | taste0.xhtml | taste1.xhtml | end.xhtml |

NUMBER OF TIMES TO COPY=2

| start.xhtml | taste0.xhtml | taste1.xhtml | taste2.xhtml | end.xhtml |

NUMBER OF TIMES TO COPY=3

| start.xhtml | taste0.xhtml | taste1.xhtml | taste2.xhtml | taste3.xhtml | end.xhtml |

EP 1 930 814 A1

# FIG. 35

PURCHASE INCOMING CALL
SIGNALING SONG

123

UI
DESCRIPTION

INCOMING CALL
SIGNALING SONG
SELLER'S SERVER

115

UI
DESCRIPTION

REQUEST FOR GENERATION
OF UI DESCRIPTION

LIST DATA
(LIST OF NEW
ARRIVALS)

UI DESCRIPTION
GENERATION
SERVER

101

EP 1 930 814 A1

# FIG. 36

**3600**

### UI CONTENTS LIST
- PROFESSIONAL BASEBALL C-G GAME
- VOLLEYBALL OLYMPIC QUALIFYING TOURNAMENT
- PREVIEW AND PURCHASE INCOMING CALL SIGNALING SONG
- TRAVEL TO ENJOY SETOUCHI-REGION GOURMET
- OSAKA-TRADITIONAL KAMIGATA-MANZAI COMIC BACKCHAT FESTIVAL
- SONG CONTEST
- CLAY WALL IN WORLD

BACK          OPEN

**3601**

PREVIEW/PURCHASE INCOMING CALL SIGNALING SONG

YOU CAN PREVIEW INCOMING CALL SIGNALING SONG FOR 5 SECONDS IN THIS UI CONTENT. IF YOU LIKE IT, YOU CAN BUY IT!

BACK     PREVIEW SONG

YOU'VE GOT UI CONTENT FOR PREVIEW/ PURCHASE OF INCOMING CALL SIGNALING SONG

BACK          OPEN LIST

**3602**

YASUKIBUSHI FOLK SONG

SAMPLE INCOMING CALL SIGNALING SONG ON REPLAY ♪

BACK  PURCHASE  NEXT

**3604**

KURODABUSHI FOLK SONG

SAMPLE INCOMING CALL SIGNALING SONG ON REPLAY ♪

BACK  PURCHASE  NEXT

**3606**

PREVIEW/PURCHASE INCOMING CALL SIGNALING SONG

HOW DID YOU LIKE INCOMING CALL SIGNALING SONGS THIS TIME? SEE YOU NEXT TIME!

BACK               END

**3603**

PURCHASE: YASUKIBUSHI FOLK SONG

PURCHASE INCOMING CALL SIGNALING SONG "YASUKIBUSHI FOLK SONG". PRESS "PURCHASE" BUTTON TO DOWNLOAD THE SONG. WHEN DOWNLOAD IS COMPLETED, WINDOW RETURNS TO PREVIOUS ONE.

BACK          PURCHASE

**3605**

PURCHASE: KURODABUSHI FOLK SONG

PURCHASE INCOMING CALL SIGNALING SONG "KURODABUSHI FOLK SONG". PRESS "PURCHASE" BUTTON TO DOWNLOAD THE SONG. WHEN DOWNLOAD IS COMPLETED, WINDOW RETURNS TO PREVIOUS ONE.

BACK          PURCHASE

# FIG. 37

EP 1 930 814 A1

**3700**

## PREVIEW/PURCHASE INCOMING CALL SIGNALING SONG

YOU CAN PREVIEW INCOMING CALL SIGNALING SONG FOR 5 SECONDS IN THIS UI CONTENT. IF YOU LIKE IT, YOU CAN BUY IT!

BACK    PREVIEW SONG

---

**FILE TO BE COPIED 3701**

Nth SONG TITLE

SAMPLE INCOMING CALL SIGNALING SONG ON REPLAY ♪

Nth SONG IMAGE

Nth SONG

BACK  PURCHASE  NEXT

**3702**

## PURCHASE: Nth SONG TITLE

PURCHASE INCOMING CALL SIGNALING SONG Nth SONG TITLE PRESS "PURCHASE" BUTTON TO DOWNLOAD THE SONG. WHEN DOWNLOAD IS COMPLETED, WINDOW RETURNS TO PREVIOUS ONE.

Nth SONG SELLER INFORMATION

BACK        PURCHASE

---

**3703**

## PREVIEW/PURCHASE INCOMING CALL SIGNALING SONG

HOW DID YOU LIKE INCOMING CALL SIGNALING SONGS THIS TIME? SEE YOU NEXT TIME!

BACK            END

# FIG. 38 (a)

```
┌─────────────────────────┐
│   ┌─────────────┐       │
│   │Nth SONG TITLE│       │
│   └─────────────┘       │
│  ─────────────────────  │
│   SAMPLE INCOMING CALL   │
│ SIGNALING SONG ON REPLAY ♪│
│   ┌─────────────────┐   │
│   │                 │   │
│   │  Nth SONG IMAGE │   │
│   │         ┌───────┴─┐ │
│   └─────────┤ Nth SONG │ │
│             └─────────┘ │
│  ─────────────────────  │
├─────────────────────────┤
│  BACK  PURCHASE  NEXT   │
└─────────────────────────┘
```

TO PREVIEW          TO END WINDOW
START
WINDOW

# FIG. 38 (b)

```
┌─────────────────────────┐
│   ┌─────────────┐       │
│   │Nth SONG TITLE│       │
│   └─────────────┘       │
│  ─────────────────────  │
│   SAMPLE INCOMING CALL   │
│ SIGNALING SONG ON REPLAY ♪│
│   ┌─────────────────┐   │
│   │                 │   │
│   │  Nth SONG IMAGE │   │
│   │         ┌───────┴─┐ │
│   └─────────┤ Nth SONG │ │
│             └─────────┘ │
│  ─────────────────────  │
├─────────────────────────┤
│  BACK  PURCHASE  NEXT   │
└─────────────────────────┘
```

TO PREVIEW          TO SECOND
START               SONG PAGE
WINDOW

# FIG. 38 (c)

```
┌─────────────────────────┐
│   ┌─────────────┐       │
│   │Nth SONG TITLE│       │
│   └─────────────┘       │
│  ─────────────────────  │
│   SAMPLE INCOMING CALL   │
│ SIGNALING SONG ON REPLAY ♪│
│   ┌─────────────────┐   │
│   │                 │   │
│   │  Nth SONG IMAGE │   │
│   │         ┌───────┴─┐ │
│   └─────────┤ Nth SONG │ │
│             └─────────┘ │
│  ─────────────────────  │
├─────────────────────────┤
│  BACK  PURCHASE  NEXT   │
└─────────────────────────┘
```

TO (N-1)th          TO (N+1)th
SONG PAGE           SONG PAGE

# FIG. 38 (d)

```
┌─────────────────────────┐
│   ┌─────────────┐       │
│   │Nth SONG TITLE│       │
│   └─────────────┘       │
│  ─────────────────────  │
│   SAMPLE INCOMING CALL   │
│ SIGNALING SONG ON REPLAY ♪│
│   ┌─────────────────┐   │
│   │                 │   │
│   │  Nth SONG IMAGE │   │
│   │         ┌───────┴─┐ │
│   └─────────┤ Nth SONG │ │
│             └─────────┘ │
│  ─────────────────────  │
├─────────────────────────┤
│  BACK  PURCHASE  NEXT   │
└─────────────────────────┘
```

TO (N-1)th          TO END WINDOW
SONG PAGE

FIG. 39

START

RECEIVE REQUEST FOR GENERATION OF UI DESCRIPTION FOR PURCHASE OF INCOMING CALL SIGNALING SONG — S101E

ACQUIRE/INTERPRET GENERATION RULE AND TARGET FORM SET — S102B

ACQUIRE LIST DATA FROM INCOMING CALL SIGNALING SONG SELLER'S SERVER — S103E

COPY SONG PREVIEW WINDOW AND SONG PURCHASE WINDOW FOR NUMBER OF SONGS — S104D

REPLACE SONG PREVIEW WINDOW, SONG PURCHASE WINDOW, TITLE, SONG IMAGE, SOUND FOR PREVIEW, SELLER'S INFORMATION WITH CONTENTS IN LIST DATA OF NEWLY-ARRIVED SONG — S105D

EMBED INDEX NUMBER AND SET LINKING END OF BUTTONS IN EACH WINDOW — S106C

TRANSMIT UI DESCRIPTION SET — S107C

END

## FIG. 40 (a)

TITLE

Nth SONG
IMAGE
SONG

TITLE

TITLE

SELLER'S
INFORMATION

## FIG. 40 (b)

TITLE

Nth SONG
IMAGE
SONG

TITLE

Nth SONG
IMAGE
SONG

TITLE

TITLE

SELLER'S
INFORMATION

TITLE

TITLE

SELLER'S
INFORMATION

## FIG. 40 (c)

YASUKIBUSHI

KURODABUSHI

YASUKIBUSHI

YASUKIBUSHI

KURODABUSHI

KURODABUSHI

FIG. 41

# FIG. 42

NETWORK

EP 1 930 814 A1

COMMUNICATION SECTION  ~201

TARGET FORM

202B

GENERATION RULE ACCUMULATING SECTION

GENERATION RULE

211

META TARGET FORM ACCUMULATING SECTION

META TARGET FORM

213

GENERATION RULE INTERPRETING/ TARGET FORM GENERATING SECTION

TARGET FORM

214

TARGET FORM TRANSMITTING SECTION

CONFIGURATION DATA

212

CONFIGURATION DATA ACQUIRING/ ACCUMULATING SECTION

CONFIGURATION DATA

102

FIG. 43

META
TARGET
FORM

GENERATION
RULE

213

GENERATION RULE
INTERPRETING/
TARGET FORM
GENERATING SECTION

TARGET
FORM

CONFIGURATION
DATA

## FIG. 44

START

S0B — RECEIVE REQUEST FOR GENERATION OF TARGET FORM

S1B — ACQUIRE GENERATION RULE, AND META TARGET FORM

S2 — INTERPRET DESCRIPTION OF GENERATION RULE

S3 — WITH RESPECT TO COPY RULE IN GENERATION RULE

S4 — ACQUIRE LIST DATA FOR NUMBER OF TIMES TO COPY

S5B — COPY SPECIFIED PART OF META TARGET FORM

WITH RESPECT TO COPY RULE IN GENERATION RULE

S6 — WITH RESPECT TO REPLACEMENT RULE IN GENERATION RULE

S7 — ACQUIRE CONFIGURATION DATA FOR SOURCE OF REPLACEMENT

S8B — REPLACE SPECIFIED PART OF META TARGET FORM

WITH RESPECT TO REPLACEMENT RULE IN GENERATION RULE

S9 — WITH RESPECT TO INDEX NUMBER EMBEDDING RULE IN GENERATION RULE

S10 — GENERATE INDEX NUMBER

S11B — REPLACE SPECIFIED PART OF META TARGET FORM

WITH RESPECT TO INDEX NUMBER EMBEDDING RULE IN GENERATION RULE

S12C — OUTPUT TARGET FORM

S13C — TRANSMIT TARGET FORM

END

## FIG. 45

CONFIGURATION
DATA

META
TARGET
FORM

102

TARGET FORM
GENERATION SERVER

GENERATION
RULE

TARGET
FORM

120

DIGITAL TELEVISION

GENERATION
RULE

114

VIDEO DISTRIBUTION
SERVER

LIST DATA

UI
DESCRIPTION

FIG. 46

```
                    ┌─────────────┐
                    │    START    │
                    └─────────────┘
                           │
      ┌────────────────────────────────────┐
      │ RECEIVE REQUEST FOR GENERATION      │
      │ OF TARGET FORM FOR MOVING IMAGE     ├─── S101F
      │ REPRODUCTION                        │
      └────────────────────────────────────┘
                           │
      ┌────────────────────────────────────┐
      │ ACQUIRE/INTERPRET                   │
      │ GENERATION RULE AND META            ├─── S102C
      │ TARGET FORM                         │
      └────────────────────────────────────┘
                           │
      ┌────────────────────────────────────┐
      │ ACQUIRE CONFIGURATION DATA          │
      │ FROM VIDEO DISTRIBUTION             ├─── S103F
      │ SERVER                              │
      └────────────────────────────────────┘
                           │
      ┌────────────────────────────────────┐
      │ REPLACE WITH TITLE OF               │
      │ CONFIGURATION DATA AND              ├─── S105E
      │ BACKGROUND IMAGE FILE NAME          │
      └────────────────────────────────────┘
                           │
      ┌────────────────────────────────────┐
      │ TRANSMIT TARGET FORM                ├─── S107D
      └────────────────────────────────────┘
                           │
                    ┌─────────────┐
                    │     END     │
                    └─────────────┘
```

FIG. 47 (a)

META TARGET FORM

TITLE(X)

FIG. 47 (b)

TARGET FORM

MOVING IMAGE LIST(X)

# FIG. 48

FIG. 49

NETWORK

103

COMMUNICATION SECTION — 201

LIST DATA

GENERATION RULE ACCUMULATING SECTION — 202C

GENERATION RULE

TARGET FORM ACCUMULATING SECTION — 215

TARGET FORM

GENERATION RULE INTERPRETING/ LIST DATA GENERATING SECTION — 218

LIST DATA

LIST DATA TRANSMITTING SECTION — 219

PRE-CONVERSION LIST DATA

PRE-CONVERSION LIST DATA ACQUIRING/ ACCUMULATING SECTION — 216

PRE-CONVERSION LIST DATA

CONFIGURATION DATA ACCUMULATING SECTION — 217

CONFIGURATION DATA

EP 1 930 814 A1

FIG. 50

TARGET
FORM

GENERATION
RULE

218
GENERATION RULE
INTERPRETING/
LIST DATA
GENERATING
SECTION

LIST DATA

PRE-
CONVERSION
LIST DATA

CONFIGURATION
DATA

EP 1 930 814 A1

FIG. 51

```
         ( START )
            │
S0C ─┤ RECEIVE REQUEST FOR
       GENERATION OF LIST
            DATA │
            │
S1C ─┤ ACQUIRE GENERATION
       RULE, AND TARGET FORM
            │
S2 ─┤ INTERPRET DESCRIPTION
       OF GENERATION RULE
            │
S3 ─┤ WITH RESPECT TO COPY
       RULE IN GENERATION RULE
            │
S4B ─┤ ACQUIRE PRE-CONVERSION
       LIST DATA FOR NUMBER OF
         TIMES TO COPY
            │
S5 ─┤ COPY SPECIFIED PART
       OF TARGET FORM
            │
       WITH RESPECT TO COPY
       RULE IN GENERATION RULE
```

S6 — WITH RESPECT TO REPLACEMENT RULE IN GENERATION RULE

S7B — ACQUIRE PRE-CONVERSION LIST DATA FOR SOURCE OF REPLACEMENT

S8 — REPLACE SPECIFIED PART OF TARGET FORM

WITH RESPECT TO REPLACEMENT RULE IN GENERATION RULE

S9 — WITH RESPECT TO INDEX EMBEDDING RULE IN GENERATION RULE

S10 — GENERATE INDEX

S11 — REPLACE SPECIFIED PART OF TARGET FORM

WITH RESPECT TO INDEX EMBEDDING RULE IN GENERATION RULE

S12D — OUTPUT LIST DATA

S13D — TRANSMIT LIST DATA

( END )

## FIG. 52

CONFIGURATION DATA

TARGET FORM

103

LIST DATA CONVERSION SERVER

GENERATION RULE

LIST DATA (CHANNEL LIST)

PRE-CONVERSION LIST DATA (CONTENT LIST)

112

CONTENT SERVER

120

DIGITAL TELEVISION

TARGET FORM

UI DESCRIPTION

GENERATION RULE

FIG. 53

```
                    ┌──────────┐
                    │  START   │
                    └──────────┘
                          │
        ┌─────────────────────────────────┐
        │ RECEIVE CHANNEL LIST DATA        │──── S101G
        │ GENERATION REQUEST               │
        └─────────────────────────────────┘
                          │
        ┌─────────────────────────────────┐
        │ ACQUIRE/INTERPRET                │
        │ GENERATION RULE AND TARGET       │──── S102
        │ FORM                             │
        └─────────────────────────────────┘
                          │
        ┌─────────────────────────────────┐
        │ ACQUIRE CONTENT LIST FROM        │──── S103G
        │ CONTENT SERVER                   │
        └─────────────────────────────────┘
                          │
        ┌─────────────────────────────────┐
        │ REPLACE WITH TITLE NAME IN       │
        │ CONTENT LIST AND BACKGROUND      │──── S105F
        │ IMAGE FILE NAME IN CONFIGURATION │
        │ DATA                             │
        └─────────────────────────────────┘
                          │
        ┌─────────────────────────────────┐
        │ TRANSMIT CHANNEL LIST DATA       │──── S107E
        └─────────────────────────────────┘
                          │
                    ┌──────────┐
                    │   END    │
                    └──────────┘
```

<table>
<tr><td colspan="2" align="center">**INTERNATIONAL SEARCH REPORT**</td><td>International application No.<br>PCT/JP2006/317270</td></tr>
</table>

A.  CLASSIFICATION OF SUBJECT MATTER
*G06F17/21(2006.01)i, H04N1/387(2006.01)i*

According to International Patent Classification (IPC) or to both national classification and IPC

B.  FIELDS SEARCHED

Minimum documentation searched (classification system followed by classification symbols)
G06F17/21, H04N1/387

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2005-018639 A (Seiko Epson Corp.), 20 January, 2005 (20.01.05), | 1-3,5,12,14, 17,20-24 |
| Y | Par. Nos. [0019] to [0022] (Family: none) | 4,6,10-11, 13,15-16, 18-19,25 |
| A | | 7-9 |
| Y | JP 2001-209641 A (Fuji Xerox Co., Ltd.), | 4 |
| A | 03 August, 2001 (03.08.01), Par. No. [0026] & US 2001/0018697 A1 | 7-9 |
| Y | JP 2001-022736 A (Justsystem Corp.), 26 January, 2001 (26.01.01), Par. Nos. [0010] to [0011] (Family: none) | 6 |

| ☒  Further documents are listed in the continuation of Box C. | ☐  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>04 December, 2006 (04.12.06) | Date of mailing of the international search report<br>12 December, 2006 (12.12.06) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/317270

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2004-112636 A  (Fuji Xerox Co., Ltd.), 08 April, 2004 (08.04.04), Par. Nos. [0049], [0159] & US 2004-0057076 A1    & CN 001484171 A | 10-11,13, 15-16,18-19, 25 |

Form PCT/ISA/210 (continuation of second sheet) (April 2005)

## INTERNATIONAL SEARCH REPORT

International application No.

PCT/JP2006/317270

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:
    Because of the reasons given below, this international application includes
three groups of inventions which do not satisfy the requirement of unity
of invention.
    First group of inventions: claims 1-3, 5, 10-25
    Second group of inventions: claims 4, 7-9
    Third group of inventions: claim 6

    (Continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**

the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

| INTERNATIONAL SEARCH REPORT | International application No. |
|---|---|
| | PCT/JP2006/317270 |

Continuation of Box No.III of continuation of first sheet(2)

Search was made on the inventions of claims 1, 2, 10-12, 22 as "the inventions disclosed firstly (first group of inventions)". As a result, the technical feature of claims 1, 2, 12, 22 is not novel since it is disclosed as a prior art in document JP 2005-018639 A (Seiko Epson Corp.), 20 January, 2005 (20.01.05), Par. Nos. [0019]-[0022].
(The aforementioned document discloses an output content generation system for receiving a template document, insert/replacement data, and script document and rewriting the template document by using the insert/replacement data according to an instruction of a processing element contained in the script document.)
Accordingly, the technical feature of claim 1 cannot be "a special technical feature" within the meaning of PCT Rule 13.2, second sentence.
When claims 10, 11 are compared to the aforementioned prior art, "the special technical feature" of the first group of inventions relates to that "the generated data is user interface data".

On the other hand, when claims 4, 7-9 (second group of inventions) are compared to the aforementioned prior art, "the (temporary) special technical feature" of the second group of inventions relates to that "a portion of template data to be copied is copied by the number of times for copying".
Moreover, when claim 6 (third group of invention) is compared to the aforementioned prior art, "the (temporary) special technical feature" of the third group of invention relates to "replacement by an index number".

There is no technical relationship between the first group, the second group, and the third group of inventions involving one or more of the same or corresponding special technical features.

It should be noted that claim 3 is identical to claim 2 excluding that "edition" of claim 2 is replaced by "copy" and it is classified into the same group as claim 1.
Claim 5 is not novel because of the aforementioned prior art and classified into the same group as claim 1.
Claim 13 is associated with "the user interface data" of claim 10 and is classified into the same group as claim 1.
Claim 14 is identical to claim 1 excluding that "template data" and "generated data" of claim 1 are replaced by "meta template data" and "template data".
Claims 15 and 16 are dependent claims of claim 14 and are classified into the same group as claim 1.
Claim 17 is identical to claim 1 excluding that "input data" and "generated data" of claim 1 are replaced by "list data before conversion" and "list data" and is classified into the same group as claim 1.
Claims 18 and 19 are dependent claims of claim 17 and are classified into the same group as claim 1.
Claim 20 relates to a method of claim 1 and is classified into the same group as claim 1.
Claim 21 relates to a method of claim 14 and is classified into the same group as claim 1.
Claims 23-24 relate to a mere combination of two content generation systems and are classified into the same group as claim 1.
Claim 25 is associated with "user interface data" of the invention of claim 10 and accordingly, is classified into the same group as claim 1.

Form PCT/ISA/210 (extra sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005176216 A
- JP 2006024137 A